# EUROPEAN PATENT APPLICATION

(11) **EP 4 699 485 A1**
(43) Date of publication of application: **25.02.2026**
(21) Application number: 25196836.8
(22) Date of filing: 19.08.2025
(51) Int. Cl.: A43B 23/02, B33Y 80/00

(54) **FOOTWEAR**

(30) Priority: 20.08.2024 US 202463685141 P; 20.08.2024 US 202463685175 P; 31.07.2025 US 202519286945; 31.07.2025 US 202519286996
(71) Applicant: Amer Sports Canada Inc., North Vancouver, British Columbia V7H 1A8 (CA)
(72) Inventor: Herr, Joshua, Portland, 97211 (US); Lee, Karen, Portland, 97202 (US); Beamer, Bryce, Albion, 14411 (US)
(74) Representative: Lapierre, Stéphane

(57) **Abstract**

A footwear comprising a sole, an upper coupled to the sole; and a patterned filament overlay supported by the upper. The patterned filament overlay has at least one varying attribute amongst different zones of the upper.

## Description

### BACKGROUND

Footwear are offered in a variety of different forms and are formed from a variety of materials. Footwear may be utilized for hiking, climbing, running or various other activities. Footwear protects the person's feet, provides cushioning for the person's feet and may provide traction with respect to the underlying terrain. During their use, footwear may be subject to abrasion or wear over time.

Textiles play an important role in the functionality of footwear and other textile-based products, particularly in applications involving motion and movement. The type of yarns and materials, as well as the textile structures used in creating these textiles, can be manipulated to optimize performance for specific applications. However, for environments requiring extreme durability, cushioning, or tailored mechanical behavior, these inherent textile properties are often insufficient. Accordingly, there is a need for improved textiles for use with footwear as well as other performance-based textile environments.

### BRIEF DESCRIPTION OF THE DRAWINGS

Figure 1 is a diagram schematically illustrating portions of an example fused filament fabrication system.
Figure 2A is a diagram illustrating an example path of a nozzle through and within a textile along the Z-axis for Z-dip mechanical locking, wherein the path indicates deposition of the liquid polymer flow.
Figure 2B is a bottom perspective view illustrating an example textile penetrated by polymer using the system of Figure 1 with the nozzle path in Figure 2A.
Figure 2C is a top perspective view of the polymer penetrated textile of Figure 2B.
Figure 3A is a top perspective view of an example cushion structure formed by pattern of polymer deposited on an example textile by the example system of Figure 1.
Figure 3B is a top perspective view of an example cushion structure formed by pattern of polymer deposited on an example textile by the example system of Figure 1.
Figure 3C is a top perspective view of an example cushion structure formed by pattern of polymer deposited on an example textile by the example system of Figure 1.
Figure 4A the top perspective view of a varied pattern of a polymer deposited on an example textile by the example system of Figure 1.
Figure 4B is a perspective view illustrating an example structure having a three-dimensional grid or pattern of polymer deposited by the system of Figure 1 and sandwiched between a pair of textile layers.
Figure 5 is a perspective view of an example structure having a patterned filament overlay deposited on an example textile with a less perforate or imperforate protective layer deposited on top of the patterned filament overlay.
Figure 6A is a perspective view illustrating portions of a stack of different printed layouts or patterns of three-dimensional lattices of a polymer ejected by the system of Figure 1 on an example textile.
Figure 6B is a perspective view illustrating portions of a stack of different printed layouts or patterns of three-dimensional lattices of a polymer ejected by the system of Figure 1 on an example textile.
Figure 6C is a perspective view illustrating portions of a stack of different printed layouts or patterns of three-dimensional lattices of a polymer ejected by the system of Figure 1 on an example textile.
Figure 6D is a perspective view illustrating portions of a stack of different printed layouts or patterns of three-dimensional lattices of a polymer ejected by the system of Figure 1 on an example textile.
Figure 6E is a perspective view illustrating portions of a stack of different printed layouts or patterns of three-dimensional lattices of a polymer ejected by the system of Figure 1 on an example textile.
Figure 7A is a perspective view illustrating ejection and penetration of a polymer onto an example textile to provide the example textile with an example texture.
Figure 7B is a perspective view illustrating ejection and penetration of a polymer onto an example textile to provide the example textile with an example texture.
Figure 7C is a perspective view illustrating ejection and penetration of a polymer onto an example textile to provide the example textile with an example texture.
Figure 7D is a perspective view illustrating ejection and penetration of a polymer onto an example textile to provide the example textile with an example texture.
Figure 8A is a diagram illustrating an example embossment of an example texture onto a polymer deposited on an example textile by the system of Figure 1.
Figure 8B is a diagram illustrating an example embossment of an example pattern on a polymer deposited on an example textile by the system of Figure 1.
Figure 8C is a diagram illustrating an example embossment of an example logo on a polymer deposited on an example textile by the system of Figure 1.
Figure 9 is a perspective view of an example wavy pattern of polymer deposited on an example textile by the system of Figure 1.
Figure 10 is a perspective view illustrating an example structure formed by deposition of crisscrossing lines of different polymers onto an example textile by the system of Figure 1.
Figure 11 is a perspective view illustrating an example structure where two distinct textiles are joined by a polymer ejected onto and penetrating into both of the two distinct textiles.
Figure 12A is a perspective view of an example drop-in component secured to an example textile by a polymer ejected onto the component and penetrating the textile.
Figure 12B is a perspective view of an example drop-in component secured to an example textile by a polymer ejected onto the component and penetrating the textile.
Figure 12C is a perspective view of an example drop-in component secured to an example textile by a polymer ejected onto the component and penetrating the textile.
Figure 12D is a perspective view of an example drop-in component secured to an example textile by a polymer ejected onto the component and penetrating the textile.
Figure 12E is a perspective view of an example lacing guide for a piece of footwear.
Figure 12F is a perspective view of the lacing guide of Figure 12E incorporated into a panel for an upper for a piece of footwear.
Figure 12G is a top view of an example panel for a footwear upper having an incorporated example lacing guide.
Figures 13A, 13B and 13C are diagrams illustrating formation of an example lacing guide for an example footwear.
Figure 14A is a perspective view of an example footwear having example eyelets having lacing tunnels provided by drop-in components as inserts secured to underlying textile by ejected polymer that penetrates the underlying textile.
Figure 14B is a perspective view of an example footwear having example eyelets having lacing tunnels provided by drop-in components as inserts secured to underlying textile by ejected polymer that penetrates the underlying textile.
Figures 15A and 15B are perspective views illustrating portions of example footwear having a lacing guide provided by polymer deposited upon a textile with an eyelet extending through the polymer and guiding or receiving an example lace.
Figure 16 is a perspective view illustrating various example drop-in components, such as eyelets for being secured to a textile with an overlying polymer that is to extend over the example eyelets and penetrate the underlying textile.
Figure 17 is a perspective of an example footwear having schematically illustrated left and right lacing guides.
Figure 18A, 18B and 18C are perspective views illustrating an example method for forming an example lacing guide for the example footwear of Figure 17.
Figures 19A, 19B and 19C are perspective views illustrating a lacing guide or pair of lacing guides for the example footwear of Figure 17.
Figures 20A, 20B and 20C are perspective view illustrating portions of example left and right lacing guides for the example footwear of Figure 17.
Figures 21A and 21B are perspective views illustrating an example lacing guide for the example footwear of Figure 17.
Figure 22 is a perspective view illustrating portions of example left and right lacing guides for the example footwear of Figure 1.
Figure 23 is a perspective view illustrating portions of an example lacing guide for the example footwear of Figure 17.
Figure 24 is a perspective view illustrating portions of an example lacing guide for the example footwear of Figure 17.
Figure 25 is a sectional view schematically illustrating portions of an example lace guide which may be used as part of the footwear of Figure 17.
Figures 26A and 26B are perspective views illustrating portions of an example lace guide that may be used as part of the footwear of Figure 17.
Figure 27 is a perspective view illustrating portions of an example lace guide that may be used as part of the footwear of Figure 17.
Figure 28 is a perspective view illustrating an example lace retainer.
Figure 29 is a perspective view illustrating portions of an example spacer/cushion construction.
Figure 30 is a perspective view illustrating portions of an example spacer/cushion construction.
Figure 31 is a sectional view illustrating portions of an example spacer/cushion construction.
Figure 32 is a sectional view illustrating portions of an example spacer/cushion construction.
Figures 33A, 33B and 33C are perspective views illustrating portions of an example spacers/cushion construction.
Figures 34A, 34B and 34C are perspective views illustrating portions of an example spacer/cushion construction.
Figures 35A, 35B and 35C are perspective views illustrating portions of an example spacer/cushion construction.
Figures 36A, 36B and 36C are perspective views illustrating portions of an example spacer/cushion construction.
Figures 37A, 37B and 37C are perspective views illustrating portions of an example spacer/cushion construction.
Figures 38A, 38B and 38C are perspective views of an example spacer/cushion construction.
Figures 39A, 39B and 39C are perspective views of an example spacer/cushion construction.
Figures 40A, 40B and 40C are perspective views of an example spacer/cushion construction.
Figures 41A and 41B are sectional views of an example construction having polymer deposited on an underlying textile to provide different zones with different degrees of flexor or stiffness.
Figure 42A is a sectional view of an example flex zone architecture formed by a deposited polymer.
Figure 42B is a sectional view of an example flex zone architecture formed by a deposited polymer.
Figure 43A is a sectional view of an example flex zone architecture formed by deposited polymer.
Figure 43B is a sectional view of an example flex zone architecture formed by deposited polymer.
Figure 44A is a perspective view of an example forefoot panel for example footwear.
Figure 44B is a perspective view of an example forefoot panel for example footwear.
Figures 45A and 45B are perspective views illustrating portions of an example forefoot panel for example footwear.
Figures 46A and 46B are perspective views illustrating portions of an example forefoot panel for example footwear.
Figures 47A, 47B and 47C are perspective views illustrating portions of an example forefoot panel for example footwear.
Figure 48 is a side perspective view of an example footwear.
Figure 49A is a magnified and enlarged view of a portion of the footwear of Figure 48 along a heel zone.
Figure 49B is a magnified and enlarged view of a portion of the footwear of Figure 48 along a quarter zone.
Figure 49C is a magnified and enlarged view of a portion of the footwear of Figure 48 along a toe zone.
Figure 50A is a sectional view of the footwear of Figure 49A taken along line 50A-50A.
Figure 50B is a sectional view of the footwear of Figure 49A taken along line 50B-50B.
Figure 50C is a sectional view of the footwear of Figure 49C taken along line 50C-50C.
Figure 51A is a sectional view illustrating portions of an example extruded polymer line that forms a portion of the patterned filament overlay of the footwear of Figure 48.
Figure 51B is a sectional view illustrating portions of an example extruded polymer line that forms a portion of the patterned filament overlay of the footwear of Figure 48.
Figure 51C is a sectional view illustrating portions of an example extruded polymer line that forms a portion of the patterned filament overlay of the footwear of Figure 48.
Figure 51D is a sectional view illustrating portions of an example extruded polymer line that forms a portion of the patterned filament overlay of the footwear of Figure 48.
Figure 51E is a sectional view illustrating portions of an example extruded polymer line that forms a portion of the patterned filament overlay of the footwear of Figure 48.
Figure 51F is a sectional view illustrating portions of an example extruded polymer line that forms a portion of the patterned filament overlay of the footwear of Figure 48.
Figure 51G is a sectional view illustrating portions of an example extruded polymer line that forms a portion of the patterned filament overlay of the footwear of Figure 48.
Figure 52 is a side perspective view of an example footwear.
Figure 53 is a sectional view of the footwear of Figure 52 taken along line 53-53.
Figure 54A is a sectional view of portions of an example footwear taken along line 53-53 of Figure 52.
Figure 54B is a sectional view of portions of an example footwear taken along line 53-53 of Figure 52.
Figure 54C is a sectional view of portions of an example footwear taken along line 53-53 of Figure 52.
Figure 55 is a side perspective view of an example footwear or footwear.
Figure 56A is a sectional view of the footwear of Figure 55 taken along line 56A-56A.
Figure 56B is a sectional view of portions of an example footwear taken along line 56B-56B of Figure 52.
Figure 57A is a sectional view of portions of an example footwear taken along line 56A-56A of Figure 55.
Figure 57B is a sectional view of portions of an example footwear taken along line 56B-56B of Figure 55.
Figure 58 is a side perspective view of an example footwear.
Figure 59 is a fragmentary view of a patterned filament overlay printed upon an underlying panel prior to being cut and shaped to form an upper for the footwear of Figure 58.
Figure 60 is an enlarged fragmentary view of a portion of the patterned filament overlay printed upon the underlying panel of Figure 59.
Figure 61 is an enlarged fragmentary view of a portion of the patterned filament overlay printed upon the underlying panel of Figure 59.
Figure 62 is an enlarged fragmentary view of a portion of the patterned filament overlay printed upon the underlying panel prior to being cut and shaped to form the upper for the footwear of Figure 58.
Figure 63 is an enlarged view schematically illustrating portions of the patterned filament overlay of Figure 62.
Figure 64 is a sectional view of the patterned filament overlay and underlying panel of Figure 62.
Figure 65 is a sectional view of the patterned filament overlay and underlying panel of Figure 62.
Figure 66A is a sectional view of the footwear of Figure 58 taken along line 66A-66A.
Figure 66B is a sectional view of the footwear of Figure 58 taken along line 66B-66B.
Figure 66C is a sectional view of the footwear of Figure 58 taken along line 66C-66C.
Figure 67 is a top view of an example panel for an upper for a piece of footwear having example patterned filament overlays.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION OF EXAMPLES

Aspects of the present technology is directed to textiles and related method and processes manufacturing textiles for use in, for example, footwear, apparel, outdoor products, and other suitable textile categories that benefit from improved performance. The present technology overcomes drawbacks experienced in the prior art and provides other benefits.

Embodiments of the present technology provides, inter alia, methods and processes for depositing thermoplastic materials directly onto textile surfaces to achieve zonal, gradiated, or monolithic performance enhancements. The textiles and associated materials have improved mechanical performance, bonding quality, and manufacturability, enabling the assembly of enhanced textile components with applications in footwear, advanced gear, technical apparel, etc. Deposition may occur on planar films or non-textile substrates, including substrates that may later be thermally bonded onto textiles or structural components in post-processing.

Aspects of the present technology provides a method and system for enhancing textile substrates through the computer-controlled deposition of polymeric materials, preferably thermoplastic polymers, using Fused Filament Fabrication (FFF) or similar extrusion-based additive manufacturing techniques. This technology enables programmable and spatially controlled modification of textile surfaces to impart improved mechanical, thermal, and aesthetic performance of the resulting textile. In at least one embodiment, the present technology provides a method for thermally processing a polymeric filament or pellet through a heated extrusion nozzle, which is moved in multiple degrees of freedom relative to a textile substrate. The nozzle deposits the polymer along a predetermined tool path, which is typically continuous to avoid stringing artifacts that occur due to polymer viscosity and flow behavior. The nozzle may be translated in the X and Y axes to define a path across the textile surface, while the Z-axis position can be varied to control engagement depth with the fabric. For example, the nozzle may be lowered toward or to the textile substrate during deposition to press molten polymer into the voids of the textile substrate. This process also increases the surface area for bonding and enables mechanical interlocking with the textile structure. The process may be applied to stationary or moving textiles and may occur on planar or contoured surfaces. This base process forms the foundation for the advanced enhancements and techniques detailed below.

In some embodiments, the technology provides a controlled method of depositing one or more polymers onto textiles to enhance performance of the resulting textile assembly regarding, for example abrasion resistance, durability, flexibility, moisture management, tensile strength, elasticity, thermal regulation, etc. The process ensures precise polymer application in three-dimensions, enabling customizable and efficient modifications ideal for footwear, apparel, mountaineering gear, robotics, harnesses, bags, luggage, and other specialized uses.

In some embodiments, as an example, the present technology provides a textile assembly, such as footwear comprises a sole assembly having a midsole coupled to an outsole. The midsole has a first exterior surface facing away from a longitudinal axis of the midsole and a first interior surface facing toward the longitudinal axis. An upper is coupled to the midsole. The upper comprises a woven substrate coupled to the interior surface of the midsole and extends upwardly away from the midsole. The upper defines a void configured to removably receive a foot of a wearer. The woven substrate has a second exterior surface facing outwardly away from the void, a second interior surface faces inwardly toward the void, and a thickness extending between the second interior and exterior surfaces. The upper has a continuous deposition of polymer material to form an abrasion resistant polymer layer, wherein a first portion of the continuous deposition of polymer material positioned at least partially across the thickness of the woven substrate and has an outer surface substantially coplanar with the second exterior surface of the woven substrate. A second portion of the continuous deposition of polymer material extends from the first portion and fixedly engages at least the second exterior surface of the woven substrate. The second portion of the continuous deposition of polymer material is raised and extends outwardly away from the woven substrate's second exterior surface.

In some embodiments, the thickness of the woven substrate can be a first thickness, and the second portion of the continuous deposition of polymer material is integrally connected first and second segments, wherein the first segment has a second thickness of the polymer material and the second segment has a third thickness different than the second thickness. The third thickness can be greater than the second thickness. The second portion of the continuous deposition of polymer material can have a varying thickness along a length of the second portion. The thickness of the woven substrate can be a first thickness, and at least a segment of the first portion of the continuous deposition of polymer material has a second thickness substantially equal to the first thickness of the woven substrate.

In some embodiments, the woven substrate can have a lower perimeter portion affixed to the interior surface of the midsole, and the first portion of the continuous deposition of polymer material can be positioned at least along an area of the perimeter portion, and the second portion of the continuous deposition of polymer material can be positioned away from the perimeter portion. The first portion of the continuous deposition of polymer material may be covered by the interior surface of the midsole, and the second portion of the continuous deposition of polymer material is positioned away from the upper and is exposed. The second portion of the continuous deposition of polymer material can be positioned on the woven substrate along the medial and/or lateral side portions of the upper. In some embodiments, the second portion of the continuous deposition of polymer material defines a deposition path that does not intersect itself, and in other embodiments, the second portion of the continuous deposition of polymer material defines a deposition path that intersects itself multiple times. Other embodiments provide other configurations. Deposition may be performed on flat textiles that can be later thermoformed into 3D shapes. This allows pre-printed functional features to conform to shaped or molded textile components.

Disclosed are example footwear having uppers provided with a robust patterned filament overlay to provide enhanced structural and/or performance characteristics, such as improved abrasion resistance without adding significant weight. For purposes of this disclosure, the term footwear refers to items worn on the feet and includes various styles such as athletic shoes, casual shoes, high top shoes, boots, slides, mules, or any other style of footwear. The term "upper" refers to any portion of a footwear above the outsole or midsole (when provided), wherein the upper generally extends around and over the sides and top of one's foot.

In some implementations, the patterned filament overlay may have at least one varying attribute amongst different zones of the upper. The attributes of the patterned filament overlay may be varied amongst different zones so as to accommodate different performance requirements of different zones as well as different stress and abrasion levels associated with different zones. For example, the attributes of the patterned filament overlay may vary amongst particular zones that rise upwards from the outsole or midsole about a periphery of the footwear. Examples of such zones include a heel zone which extends upward from the outsole or midsole at a rear of the footwear, a quarter zone which extends upward from the outsole or midsole along sides of the footwear towards a lacing region of the footwear (sometimes laced by a hook and loop fastener instead of laces), and a toe zone which rises from the outsole or midsole forwardly from the quarter zone to the toe tip.

The at least one varying attribute may comprise one or more attributes selected from a group of attributes consisting of layout, thickness, density, penetration and layering. Layout refers to the discontinuity pattern of the polymer layer. For example, a first layout may have intersecting polymer lines that cross or intersect one another in a first manner while a second layout may have intersecting polymer lines that intersect or cross one another in a second different manner. A third layout may have non-intersecting polymer lines (lines that do not cross one another) or polymer lines that connect to one another without crossing one another. Different polymer lines of different layouts may have different line widths or different path shapes (zigzag paths, wavy or curved paths, or polygon paths).

Thickness refers to the thickness of the patterned filament overlay. The thickness may also be referred to as the height of the patterned filament overlay relative to a surface of the underlying upper panel of the footwear. In contrast to "penetration", the height or thickness is independent of the degree of penetration, including those portions that extend below the outer surface of the underlying upper panel as well as those portions that rise above the outer surface of the underlying upper panel. A first zone may have a patterned filament overlay having a first thickness while a second different zone may have a second thickness different than the first thickness. In some implementations, the extent of penetration of a portion of the patterned filament overlay may be uniform while the thickness changes to provide enhanced abrasion resistance in particular regions and greater flexibility in other particular regions.

Density refers to the degree to which the patterned filament overlay covers the outer surface of the underlying panel of the upper. The larger the number of openings and/or the greater number of openings in the patterned filament overlay, the lower the density of the patterned filament overlay. Density may be in terms of a percentage of a surface area of a zone or portion of a zone of the upper covered by the polymer material of the patterned filament overlay (not including the openings in the patterned filament overlay where the polymer layer does not cover the underlying panel).

Penetration refers to the degree to which the polymer layer penetrates an underlying panel or panels of the upper. For example, the upper may be formed from a grid, textile or fabric having openings or voids into which the polymer material of the polymer layer may soak or penetrate prior to hardening (solidification or curing). The degree to which the polymer layer penetrates the underlying panel and extends below the outer surface of the underlying panel may be varied from one zone to another. In some implementations, at least portions of the polymer layer may penetrate the underlying panel without rising above the outer surface of the underlying panel; the outer surfaces of the portions of the polymer layer being flush or level with the outer surface of the underlying panel, or being below the outer surface of the underlying panel. In some implementations, the patterned filament overlay is formed by extruding or ejecting a fluid polymer material onto the underlying panel using one or more nozzles, wherein the spacing between the nozzles and the underlying panel (in some implementations, the z-axis height of the nozzle tip of nozzle 28 of extruder 26 (described above) above the underlying panel, the base textile 38), the viscosity of the polymer material, the absorptivity characteristics of the underlying panel and/or the pressure at which the polymer material is extruded/ejected may be controllably varied to control the degree of penetration of the patterned filament overlay with respect to the underlying panel or panels of the upper.

In some implementations, the penetration depth of the patterned filament overlay may gradually and uniformly change. In some implementations, the penetration depth of the patterned filament overlay, formed by the polymer material, may change in a stepwise manner. In some implementations, the penetration depth of the patterned filament overlay may be characterized by spaced apart dives, where the point at which the layers dive deeper into the underlying panel of the upper establish a series of spaced panel penetrating anchors to secure the patterned filament overlay along the surface of the upper. At the end of a deposition path, the nozzle can be gradually lowered to taper the printed feature. This reduces stress concentrations, improves adhesion, and enhances durability in flexing and abrasion-prone areas. Depositing material along cut edges can fuse fibers and create sealed boundaries. This may be performed before or after cutting the textile, resulting in clean, fray-resistant edges.

In some implementations, the patterned filament overlay penetrates the outer surface of the underlying upper panel by a depth that gradually decreases as the patterned filament overlay extends away from the sole or midsole. In some implementations, portions of the outsole or midsole overlap portions of the underlying panel of the upper, where the patterned filament overlay extends between those portions of the outsole or midsole that overlap portions of the underlying panel of the upper. In some implementations, those portions of the patterned filament overlay extending between the underlying panel of the upper and the overlapping portions of the outsole or midsole penetrate the underlying panel of the upper and/or project into detents or otherwise penetrate into the overlapping portions of the outsole or midsole to form a mechanical lock with respect to the underlying panel of the upper and/or the overlapping portions of the outsole or midsole.

In some implementations, the patterned filament overlay captured between the underlying panel of the upper and the overlapping portion of the outsole or midsole may penetrate (or at least partially impregnate) the underlying panel of the upper (such as when the underlying panel as a textile or fabric) such that the patterned filament overlay is at or below the surface of the underlying panel closest to the overlapping portions of the outsole or midsole. In such implementations, this results in a smooth or flush surface juncture between the adjacent and mutually contacting faces of the overlapping portion of the outsole or midsole and the underlying panel of the upper (impregnated with the patterned filament overlay) for a more robust bonding or securement of the overlapping portion of the outsole or midsole with respect to the underlying surfaces of the underlying upper panel.

In some implementations, the underlying upper panel may be solid, woven, knit or perforated. For example, the underlying upper panel may be a solid fabric or a perforated fabric. The underlying upper panel may be a non-textile panel that is solid or perforated. In some implementations, the underlying upper panel and the patterned filament overlay may both be formed from the same polymeric base material. To improve adhesion between the deposited polymer and the base textile, material compatibility may be engineered at the yarn, fiber, or surface level. For example, coextruded or coated yarns comprising thermoplastic polyurethane (TPU) and nylon can be used to promote bonding with deposited TPU. The use of similar or chemically compatible polymer types facilitates thermal and mechanical interlock at the interface between layers. In open-weave or perforated textiles, polymer may be deposited to pass through and encapsulate the textile from both sides. Fixtures may be used to enable deposition from multiple orientations.

Layering refers to the number or way in which polymer lines are extruded or deposited on top of one another to form the patterned filament overlay. For example, the first set of individual polymer lines (filaments) may be extruded onto an underlying panel of an upper and a second set of polymer lines may then be extruded onto or on top of the provide the patterned filament overlay with a greater height. This additional height may be achieved by depositing polymer lines directly on top of one another or by crisscrossing the polymer lines with the second polymer lines bridging over the portions of the first polymer lines. Such layering may be a function of the layout and may impact the density of the patterned filament overlay.

In some implementations, the overlying second polymer lines may be deposited or ejected while the polymer material is added at a temperature sufficiently high to melt the underlying polymer material (when the underlying polymer lines are thermoplastic), causing the first polymer lines and the second polymer lines to fuse. In some implementations, the first and second lines and/or the overlying second polymer lines may be deposited, or ejected onto, the first underlying polymer lines while the first underlying polymer lines have not yet solidified or cured, permitting the first second polymer lines to fuse or blend. In some implementations, the first and second polymer lines may be formed from the same polymer or have the same base polymer. In some implementations, the first and second polymer lines may be formed from different polymers. The first and second polymer lines may have different line widths and/or different heights.

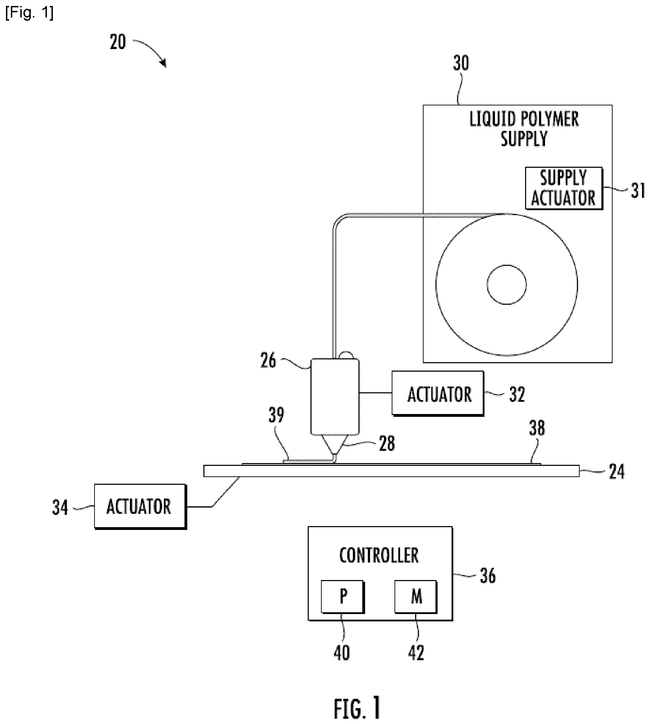

Figure 1 is a diagram schematically illustrating portions of an example fused filament fabrication system 20 comprising a print bed 24, a thermoplastic material applicator in the form of an extruder 26 having nozzle 28, a polymer supply 30, an extruder position actuator 32, print bed actuator 34 and controller 36. Print bed 24 supports a base textile 38 upon which a fluid or liquid (i.e., flowable) polymer material 39 is deposited. Extruder 26 controllably ejects and deposits the polymer through the nozzle 28 onto the base textile 38. In the example illustrated, extruder 26 provides dynamic flow of the polymer to dynamically control or vary line widths or path widths. In some implementations, the nozzle 28 has a controllably adjustable opening size such that the line width may be dynamically varied as the polymer 39 is being deposited. The nozzle 28 in other embodiments can be of various cross-sectional shapes e.g., round, oval, cross, or other specific nozzle geometries configured to tailor deposition profiles of the liquid polymer. Specific nozzle geometries may also facilitate direct bonding of textile to molded components, such as footwear midsoles.

As used herein, "textile" and "film" may be used interchangeably to refer to substrate material or superstrate that functions as a flexible plane. Examples of these materials are knits, wovens, non-wovens, extruded films, blown films, which can be formed from various types of yarns, including natural and high-performance yarns. The materials may have traditional textile structures, such as jersey knits or plain weaves, or more complex structures including but not limited to 3D spacer meshes, warp knits, or leno weaves. These materials may also go through secondary processing such as die cutting, texturing, foaming, flocking, laser cutting, die cutting or burnouts to change performance, appearance, or to provide variability in texture, or 3D volume.

As used herein, "polymer" may be used to refer to any thermoset, or thermoplastic polymer or other material that can be modified to become liquid or have a viscosity change through heating, chemical reaction, or dissolved in solution. In the example illustrated, system 20 comprises a fused filament fabrication (FFF) system wherein polymer supply 30 comprises a filament spool about which is wrapped a solid filament of thermoplastic material, such as a thermoplastic polyurethane (TPU). The solid filament is supplied (under the control of a supply actuator 31) to the extruder 26 which heats the solid filament to a temperature above its melting point and adjustably ejects the fluid thermoplastic material, as a fluid filament or fluid filament onto the base textile. The rate at which the fluid is ejected through the nozzle or the rate at which the solid filament is supplied to the extruder 26 is controllably adjustable. In some implementations, the filament may simply be pulled from a freely rotating spool, wherein the supply actuator may be omitted. In other implementations, the polymer supply 30 may comprise a container containing a liquid polymer which flows to the extruder/applicator 26 for deposition on the base textile. In other implementations, the polymer may comprise other forms or types of thermoplastic polymers or may comprise a thermoset polymer.

In some implementations, the textile 38 and the polymer 39 are compatible or have similar compositions to enhance bonding of the polymer 39, when in a fluid state, to the textile 38. For example, in some implementations, such as where the polymer 39 comprises a TPU, the textile 38 may comprise a TPU fabric, fabric having TPU extruded yarns that are woven or knit into the fabric. In some implementations, the textile 38 may comprise multi core yarns having TPU, facilitating use of nylon or other aramid fibers to provide desired tenacity. The TPU assists with abrasion resistance and bonding. Because compatibility or similar chemical composition/chemistry as between textile 38 and the polymer 39, recycling or circularity is facilitated.

The polymer 39 (supplied to extruder 26 as a liquid or supplied as a filament that is then heated otherwise changed to a liquid state) may have a variety of different hardnesses and properties. In some implementations, polymer feedstock may be formulated with additives to influence mechanical or aesthetic properties. Foaming agents may be included to expand the polymer during extrusion to create, for example, low-density, high-cushion features. In some implementations, the extent or degree of foaming of the polymer may be dependent upon a foaming agent and upon the temperature at which the polymer is ejected or extruded. As result, the temperature at which the polymer, while fluid, is extruded by extruder 26 may be varied or controlled to dynamically control the extent of foaming so as to dynamically control the dimensions or thickness of the polymer 39 on or within textile 38 and/or control the hardness of the deposited polymer 39. One example of such a foaming polymer is a foaming thermoplastic polymer. One example of such a foaming polymer is a foaming polymer in the form of a filament that is to be to the liquid or fluid state prior to extrusion or deposition. One example of such a foaming thermoplastic filament is FILAFLEX FOAMY ^{™} commercially available from RECREUS ^{™}. In some embodiments, the system may alternate between different polymer feedstocks (of varying hardness or composition) using multi-nozzle heads, material changes, or platform transfers. This allows hybridization for zoned protection, comfort, or visual effect.

Various methods may be utilized to bond the polymer 39 to the textile 38. As discussed above, some implementations, such bonding may be facilitated through surface bonding, where the polymer 39 and at least portions of the textile 38 have similar chemistry to facilitate chemical bonding or fusing. In yet other implementations, such bonding may be further facilitated or alternatively facilitated through the use of mechanical bonding. Examples of mechanical bonding include fiber entanglement and mesh flocking. Fiber entanglement involves fraying of the textile to isolate, separate or expose individual yarns from the remaining textile, wherein the isolated yarns are then encapsulated by the polymer 39. Mesh locking involves printing the polymer through the textile 38 such as using a Z-dip where the nozzle 28 is lowered into or through the textile 38 or where the textile 38 is raised to position the nozzle 28 through or into the textile 38.

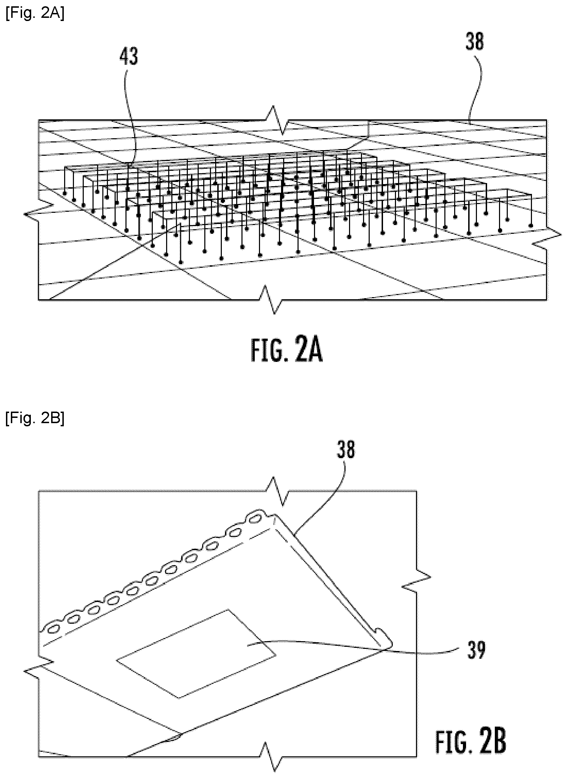

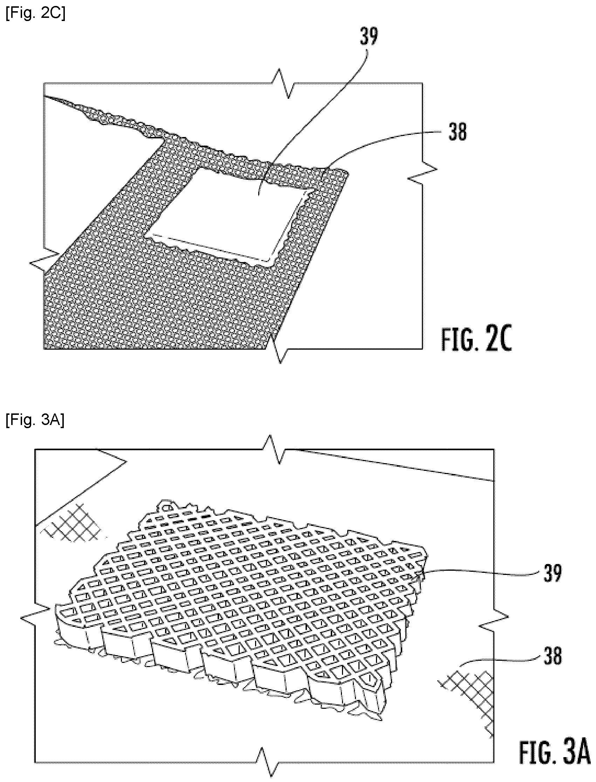

The polymer deposition can be configured to join multiple textile layers. For example, Figures 2A-2C illustrate examples of mechanical locking. Figure 2A illustrates the path 43 of nozzle 28 through and within the textile 38 along the Z-axis for such Z-dip mechanical locking. In some implementations, polymer may be deposited between two layers of the textile 38. In yet other implementations, primers or bonding agents may be applied to the textile for enhanced bonding between the polymer 39 and the textile 38.

Extrusion position actuator 32 comprises one or more steppers, stepper motors or other actuation devices for moving extruder 28 in the X axis and Y axes directions (horizontal directions in the figure), and in some implementations, in the axis direction (towards and away from the print bed 24. Print bed position actuator 34 comprises one or more stepper motors, hydraulics, pneumatics or other devices configured to move the print bed (and carried base textile 38) in the X axis and Y axes directions (horizontal directions in the figure), and in some implementations, in the Z axis direction (towards and away from the extruder/applicator 26). In some implementations, one of the extrusion position actuator 32 and the print bed position actuator 34 may be omitted wherein either the print bed 24 or the extruder 26 is stationary while the other of the print bed or the extruder 26 is movable in three dimensions.

Controller 36 comprises a processing unit 40 and non-transitory computer-readable medium 42 containing instructions for directing the processing unit to output control signals controlling one or more of the supply of thermoplastic material to extruder 26, the positioning of extruder 26 by extrusion position actuator 32 and the positioning of the print bed 24 by the print bed position actuator 34. In some implementations, controller 36 may follow one or stored programs for controlling the supply of the base textile to the print bed, for controlling what particular thermoplastic materials or other polymers being supplied to extruder 26, and for controlling the rate at which materials deposited upon the base textile and the locations on the base textile or within (encapsulating) the base textile to which the thermoplastic material is applied or deposited. The polymer 39 subsequently cools to a solidified state on or within the base textile 38. In implementations where the polymer comprises a thermoset polymer material, the thermoset polymer material cross-links or cures while on or within the textile 38.

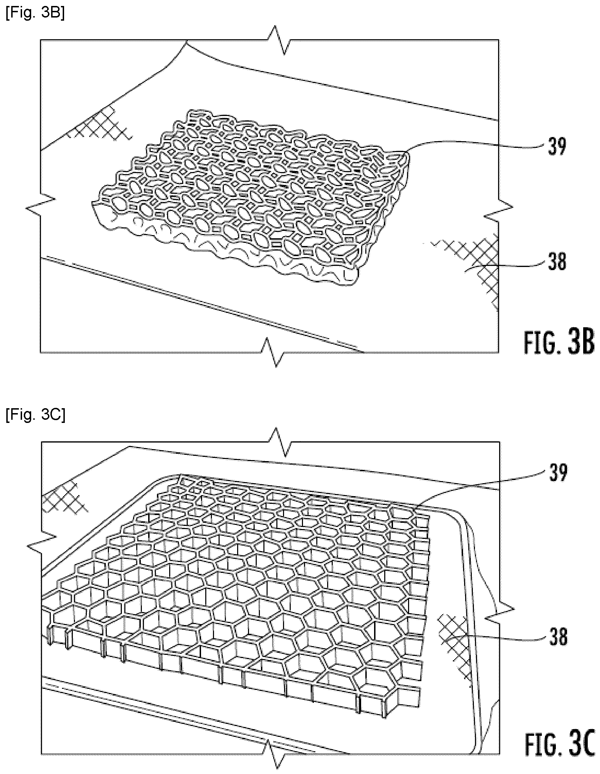

In some implementations, the instructions contained in medium 42 may direct processor 40 to output control signals causing actuators 32 and/or 34 to deposit the polymer 39 on textile 38 in a three-dimensional pattern so as to form a cushion. Particular applications the cushion may be utilized in the upper of a piece of footwear or in some implementations, the sole of the footwear. Figure 3A-3C illustrate examples of different cushion structures formed by different printed patterns of polymer 39 on a textile 38. Each of the various architectures, layouts or patterns of polymer deposited upon an underlying fabric or textile as described hereafter may be utilized as part of a piece of footwear.

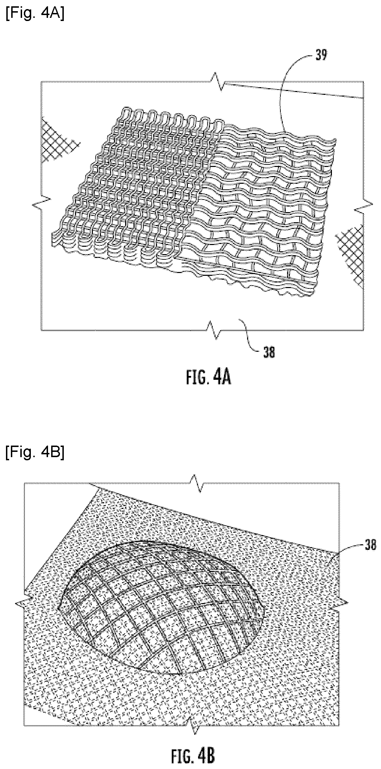

One or more deposition paths can be layered in aligned, offset, or intersecting patterns to form tunable cushioning zones with defined hardness, elasticity, and shear resistance. As shown by Figure 4A, the pattern of polymer 39 across the textile 38 may be varied to provide varying cushioning qualities/performance in a single integral unitary body of polymeric material 39. As shown by Figure 4B, the three-dimensional grid or pattern polymer 39 may be sandwiched between a pair of textile layers 38. In some implementations, the bonding between the two layers of textile 38 may be through chemical bonding or fusing, wherein the polymer is deposited upon a first layer and wherein the overlying second layer is positioned on the printed layer before the polymer 39 has solidified. In some implementations, the second overlying layer of textile 38 may be positioned over the printed layer of polymer 39 after such solidification, but where a second layer of polymer 39 is deposited/printed over the second overlying layer of textile 38 such that the second layer of polymer fuses to the previously printed layer of polymer and encapsulates the second overlying layer of textile 38.

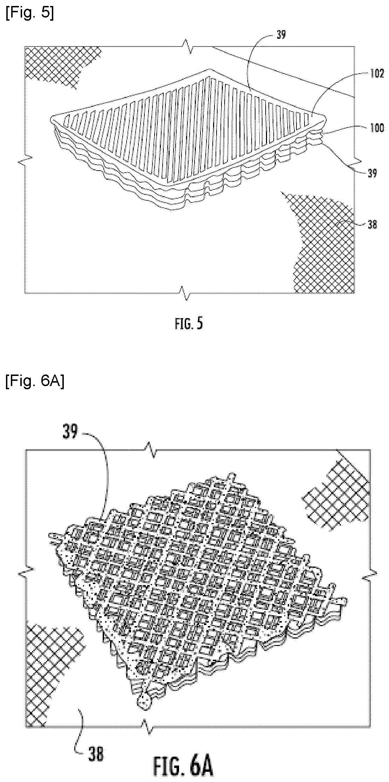

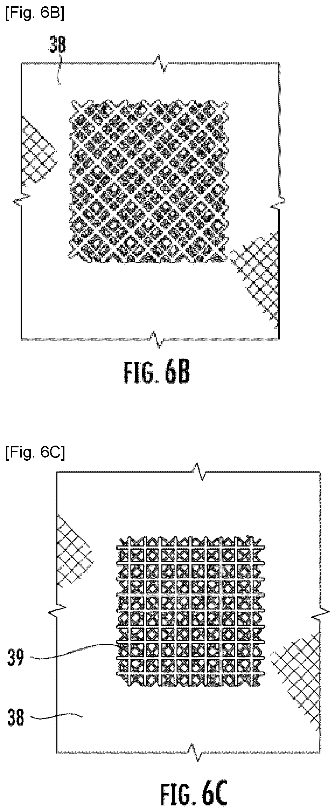

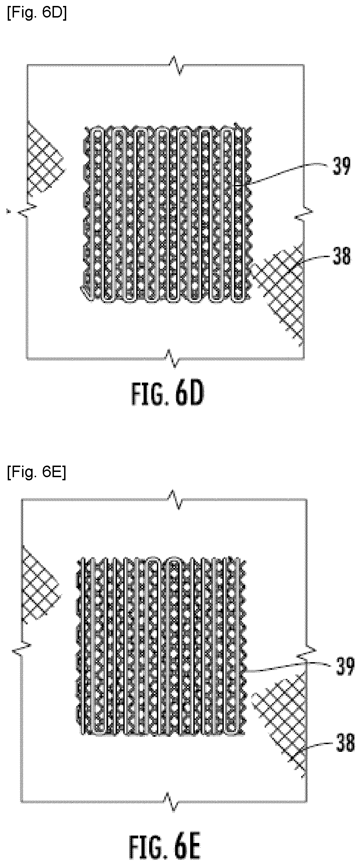

Printed geometries may be tailored to modify stretch, flex, or shear properties of the underlying textile. Lockout zones, anisotropic stiffness, or dynamic response profiles can also be created. As shown by Figure 5, the polymer 39 may be deposited in a pattern wherein an open-celled three-dimensional structure 100 is formed on textile 38 and wherein a less perforate or imperforate protective layer 102 of the polymer 39 is printed or formed over 100. Such a configuration provides a protective surface over the soft cushioning. This configuration may be formed as a single integral unitary body of the polymer 39 in a single deposition flow process. In other implementations, the structure 100 may first be formed followed by the formation of the protective layer 102 which is applied at a temperature so as to fused to the underlying structure 100. As shown by Figures 6A-6E, controller 36 causes applicator 26 to form different patterns or three-dimensional lattices of polymer 39 on textile 38, wherein the different patterns may offer different characteristics such as different flexibility or stretching characteristics for polymer layer as well as the underlying textile 38. Particular layers or patterns may protect the underlying layers or patterns.

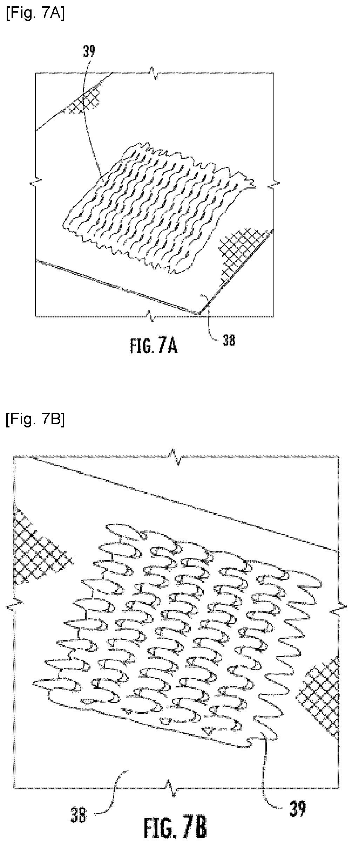

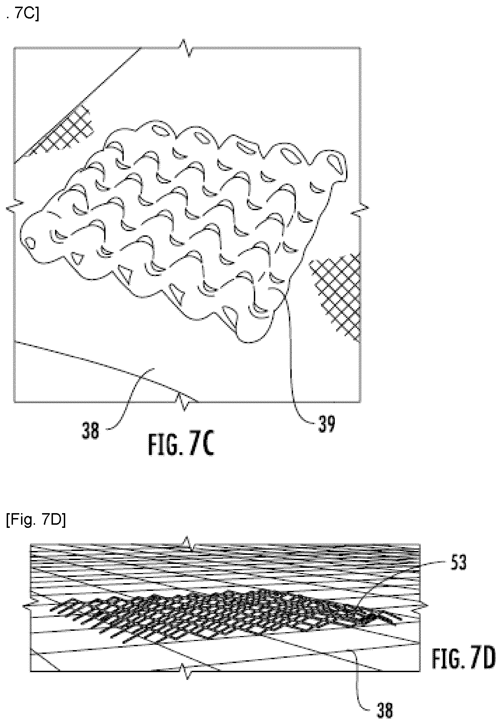

Intentional Z-axis movement during deposition can produce textured surfaces, which can provide for example, improved grip, flexibility, or aesthetic effect not achievable via planar printing. Post-deposition surface shaping may be achieved using heated texture plates that remelt the polymer surface to impart 3D textures, patterns, or branding elements. In some implementations, controller 36 may output control signals causing applicator 26 to form various textures on textile 38 with the polymer 39. Figure 7A illustrates an example tool path 53 for the nozzle controlled by the actuators of system 20 to form such textures. Figures 7A-7C illustrate examples of textures formed by polymer 39 on textile 38. Such textures are formed by controlling not only the X-Y direction of nozzle 28 (and/or print bed 24), but the Z-axis positioning of nozzle 28 (and/or print bed 24). Flow may also be controlled by controller 36 to provided such surface textures.

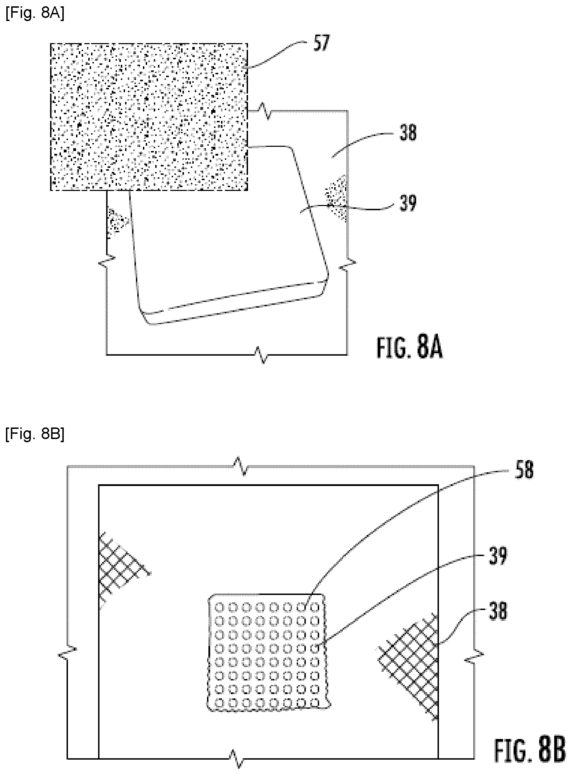

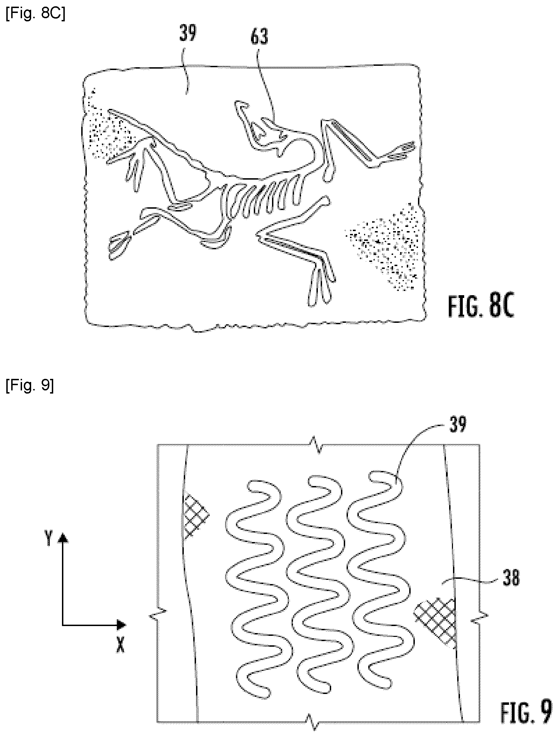

As shown by Figure 8A, in some implementations, while the polymer 39 is in a flowable or fluid state or impressionable state, an overlying plate 57 may be pressed against the printed polymer 39 (second polymer between the textile 38 and the embossing plate, to form a texture which may be a surface texture (a roughened or dimpled surface, matching that of plate 57) or a design, graphic or logo. In some implementations, the polymer 39 may be injected through and across the textile 38 and into contact with the underlying texture/embossing plate which provides the texture, design, graphic or logo. Examples of such textures, patterns or logos are shown in Figure 8A-8C. Figure 8B illustrates an embossed pattern 58 in the ejection polymer 39 on textile 38. Figure 8C illustrates embossment of a logo or other graphic image 63 onto the polymer (prior to solidification or curing of the polymer) deposited upon the textile 38.

As shown by Figure 9, controller 36 may be configured to output control signals causing applicator 26 to apply polymer 39 in a wavy like pattern upon textile 38. The polymer 39 may have an elastic property to adjust the elastic properties of the underlying textile 38. As result, the set of wavy lines of polymer 39 provide for stretching or elasticity in selected directions. For example, the wavy lines can be positioned to flex toward straightening out during such stretch of fabric 38 in the Y-axis direction, but resist stretching in the X-axis direction.

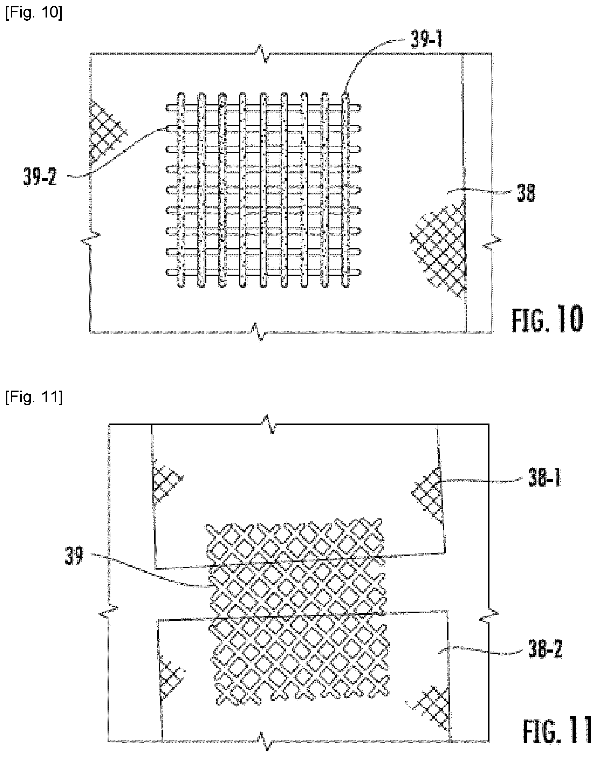

Figure 10 illustrates an example of the first polymer 39-1 deposited in the Y-axis direction and a second different polymer 39-2 deposited in the X-axis direction. The different polymers 39-1 and 39-2 may have different physical properties to modify the overall properties of the textile 38 in the X and Y axis directions.

In some embodiments, polymer deposition can be configured to join multiple textile layers by depositing polymer between them or around embedded structures, forming a composite material or 3D bonded textile assembly. For example, Figure 11 illustrates an example where base textiles 38-1 and 38-2 are joined by a continuous integral unitary body of deposited polymer 39. Thus, polymer 39 serves as a bridge for connecting the different textiles 38-1 and 38-2. As should be appreciated, in some implementations, textiles 38-1 and 38-2 may abut one another edge-to-edge with the overlapping layer of polymer 39. In some implementations, the panels of different textiles 38-1 and 38-2 may themselves overlap with one another with the bridging or connecting layer of polymer 39 (which solidifies or cures once deposited) extending across the overlapping edges. In some implementations, a first layer of bridging and connecting the polymer 39 may be formed on a first side of a first textile to be connected and a second layer of bridging and connecting polymer 39 may be deposited on a second textile 38 to be connected, wherein the different textiles 38-1 and 38-2 are sandwiched between the two deposited layers of polymer 39. In such implementations, the two different layers of polymer 39 may pass through the textile 38-1 and 38-2 so as to fuse and/or bond to one another, encapsulating the textile 38-1 and 38-2 there between.

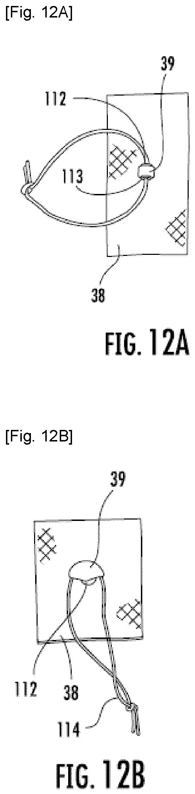

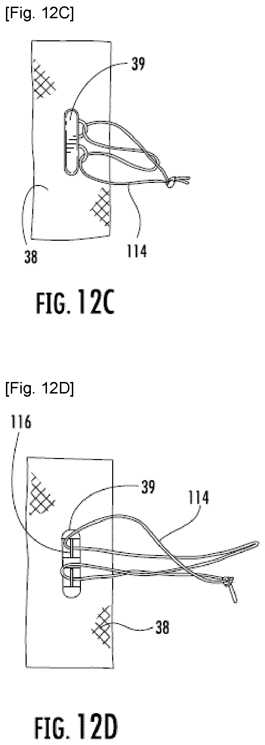

Hardware such as loops, stays, or fasteners may be embedded in the textile and encapsulated by deposited polymer, forming integrated assemblies without secondary stitching or adhesives. For example, Figures 12A-12D various examples of integrated drop-in components, wherein the component is positioned upon the textile 38 and the polymer 39 is deposited or printed over top of the component and onto portions of the textile 38 to secure the component to the textile 38. Figure 12A and 12B illustrate examples where a low friction ceramic eyelet 112 having an opening 113 is secured to textile 38 by the deposited polymer 39. As shown by Figure 12A, a flexible line 114, such as a string or shoelace, may pass through the passage in the eyelet 112. Figure 12B illustrates an example where the flexible line 114, such as a braided cord, is itself at least partially encapsulated by the polymer 39 and secured to the underlying textile 38. Figure 12D illustrates an example where rod 116 formed from a metal, carbon or other is partially encapsulated and secured to textile 38 by polymer 39, wherein portions of the rod are exposed on all sides and other portions are completely encapsulated or locked. As further shown by Figure 12D, the flexible line 114 may loosely extend and wrap about exposed portions of the rod 116. Such examples may be incorporated as lacing components in a piece of footwear (i.e., shoe or boot).

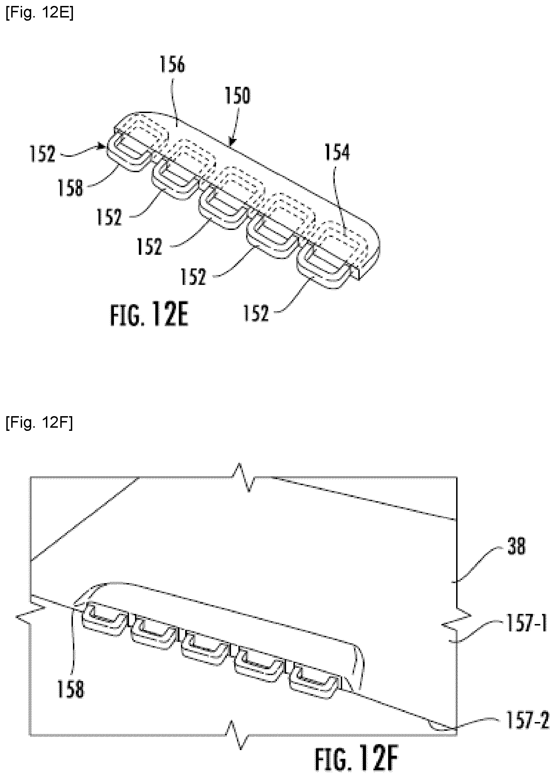

Figures 12E and 12F illustrate an example footwear lacing guide 150 that may be used for the left and/are right lacing guides of a piece of footwear. Figure 12E illustrates an example lacing guide 150 prior to incorporation as part of a piece of footwear, while Figure 12F illustrates lacing guide 150 incorporated into a panel 38 that is to form at least a portion of an upper of a piece of footwear. As shown by Figure 12E, lacing guide 150 comprises a series of continuous loops or rings 152 having portions 154 encapsulated by a block or mass of material 156, wherein other portions 158 project beyond the block or mass of material 156 to form eyelets for receiving laces. The block or mass of material 156 may be formed by ejecting a polymer from a nozzle as a mass over and about the rings 152. In some implementations, the rings 152 and the block or mass of material may be injection molded about the rings 152.

As shown by Figure 12F, once a block or mass of material 156 has been solidified, it is sandwiched between a pair of sheets 157-1, 157-2 (collectively referred to as sheets 157) that form panel 38 of the upper. In some implementations, the blocker mass of material 156 is located such that the exposed portions 158 of the rings 152 project beyond the substantially aligned edges 158 of the sheets 157. In some implementations, the block or mass of material 156 is fused to one or both of sheets 157. In other implementations, the block or mass of material 156 with the encapsulated rings 152) is adhesively bonded or otherwise secured between sheets 157.

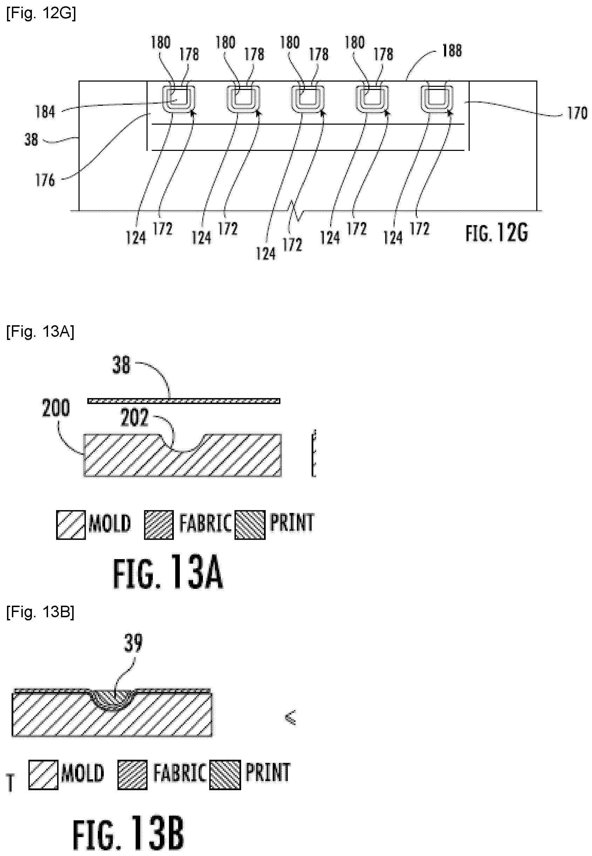

Figure 12G illustrates an example footwear lacing guide 170 incorporated in a panel 38 for forming the upper of a piece of footwear. Lacing guide 170 comprises a series of continuous loops or rings 172 having portions 174 encapsulated by a block or mass of material 156, wherein other portions 158 project beyond the block or mass of material 156 to form eyelets for receiving laces. The block or mass of material 176 may be formed by ejecting a polymer from a nozzle as a mass over and about the rings 172. In some implementations, the rings 172 and the block or mass of material may be injection molded about the rings 172. In some implementations, the block or mass of material 156 is fused to one or both of sheets 157. In other implementations, the block or mass of material 156 (with the encapsulated rings 152) is adhesively bonded or otherwise secured between sheets 157.

As further shown by Figure 12B, the block or mass of material 176 comprises edge notches 180 that projects from the edge of the blocker mass material 176 inwards across the exposed portions 178 of rings 172 such that the exposed portions 178 of rings 72 are located within the notches 180 while also forming a completely surrounded lace receiving openings 184 between the exposed portions 178 and internal edges of the notches 180. This configuration recesses or insets the lace receiving openings 184 as well as the exposed portions 180 of rings 172 within the or mass of material 176 so as to provide a less conspicuous and flatter edge to lace guide 170. On the exterior, the exposed portions 178 of rings 170 to form what appears to be a continuous bar (similar to the configuration shown in Figure 12D ) but where each portion of the visibly apparent bar is formed by a portion of an individual ring, such that the exposed portions 180 are more rigid and stronger (being shorter an overall length) as compared to a single elongate bar extending along the edge 188 . In some implementations, each of rings 172 may project beyond the edge 188 of the block or mass of material 176 (similar to rings 152), wherein the completely surrounded lace receiving openings 184 are partially inset within the block or mass of material 176 and partially extend beyond the edge 188 of the blocker mass of material 176.

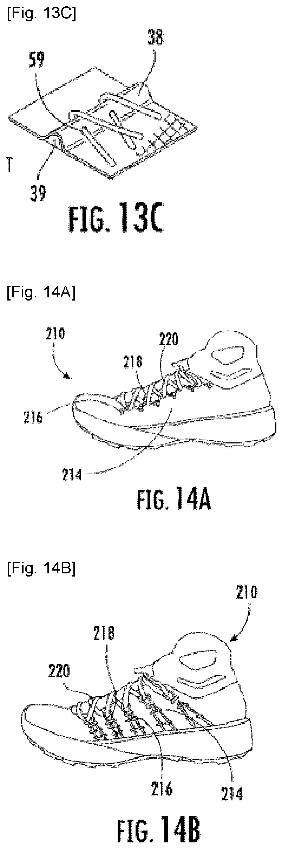

Figures 13A-27 illustrate various examples for forming opposing or left and right lacing guides for footwear, garments or the like. Figure 13A illustrates an example mold 200 having a recess 202 over which textile 38 is to be overlaid. Figure 13B illustrates the textile 38 positioned across and into the recess 202 of the mold 200 and the deposition of polymer 39 on top of the textile 38 and into the groove 202. Figure 13C illustrates the textile 38 and deposited polymer 39 (following solidification) removed from mold 200 with lace openings 59 drilled, cut or otherwise formed. The example shown in Figure 13C may be part of left and right footwear quarters for a piece of footwear, such as a shoe or boot. In such implementations, the polymer 39 may include openings 59 aligned with openings in textile 38 for providing eyelets. In some implementations, the polymer may be deposited so as to encapsulate or otherwise retain "drop-in hardware" which provides the eyelets or passages for the lacings.

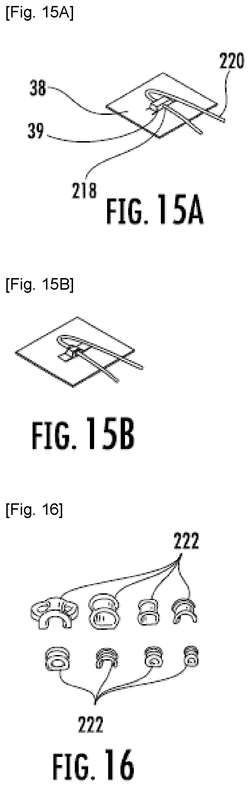

Figures 14A and 14B illustrate the left side of example footwear 210 having quarters 214 provided with lace guides 216 having eyelets 218 for guiding laces 220. Figures 15A and 15B illustrate a portion of an example lacing guide having a polymer 39 deposited upon a textile 38 and having eyelet 218 extending through the polymer 39 and guiding or receiving an example lace 220. Figure 16 illustrates various example pieces of drop-in hardware 222 that may be partially surrounded or embedded by polymer 39 to provide individual eyelets 218, or other forms of passageways or supports, for a lace guide of a quarter 214 of a piece of footwear, such as the example footwear 210 illustrated in Figure 14A and 14B.

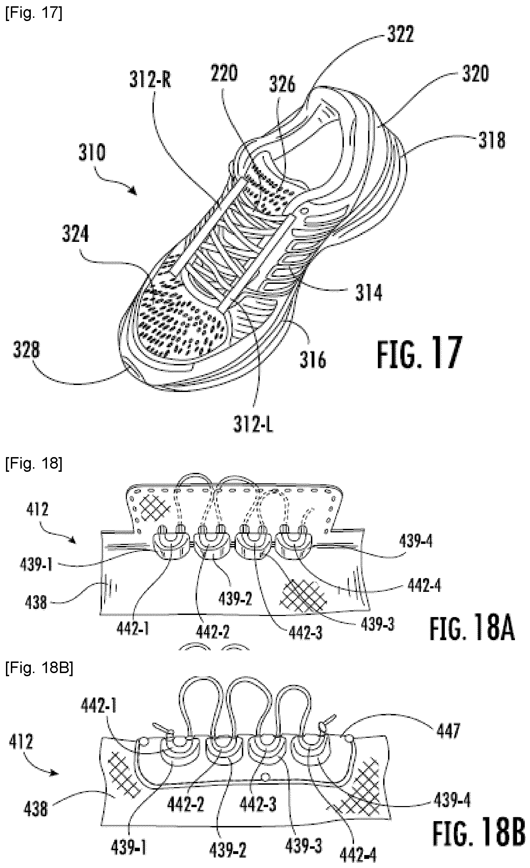

Figure 17 illustrates an example piece of footwear 310 having left and right lace guides 312-L, 312-R (collectively referred to as lace guides 312) for guiding the example lace 220. In addition to lace guides 312 and lace 220, footwear 310 comprises quarter 314, sole assembly 316 (e.g. an outsole and midsole), heel 318, heel cap or counter 320, collar 322, vamp 324, tongue 326 and toe or tip 328.

Lace guides 312, schematically illustrated, extend on opposite sides of tongue 326 and lace 220. Lace guide 312 comprises structures through which or about which lace 220 may be wrapped so as to repeatedly extend back and forth across and over tongue 326. Pulling and tying of lace 220 draws quarters 314 towards one another across tongue 326 to snugly fit sides of footwear 310 about the foot received by footwear 310. In some implementations, lace guides 312 may extend further towards heel 320. In some implementations, lace guides 312 may extend up the leg of the person wearing it, such as with a boot. In some implementations, lace guides 312 comprise openings or eyelets through which lace 220 extends. In other implementations, lace guides 312 comprise hooks about which lace 220 extends or wraps. In each of such implementations, each of lace guides 312 comprises a polymer 39 deposited on, across and/or within a textile 38. In some implementations, the eyelets or hooks through which or about which lace 220 extends are at least partially defined or formed from the polymer 39. In some implementations, the eyelets or hooks through which or about which lace 220 extends or wraps are formed by inserts or drop-in hardware encapsulated and secured to the textile by the polymer (subsequently solidified to drying or curing). For example, the insert or drop-in hardware may comprise hooks, tubular sleeves or other structures having passages for lace 220 to form eyelets or otherwise receive and retain lace 220. The tubular sleeves or other structures may be partially encapsulated by the polymer, such that the polymer secures the sleeves, structure hooks, etc. to the textile. In such implementations, the inserts, structures or hooks may be formed from a more rigid or stronger material as compared to the polymer in the textile. For example, the inserts, structures or hooks may be formed from a rigid polymer or a ceramic material. The material may be chosen so as to have a lower coefficient of friction with respect to lace 220 as compared to polymer (once solidified).

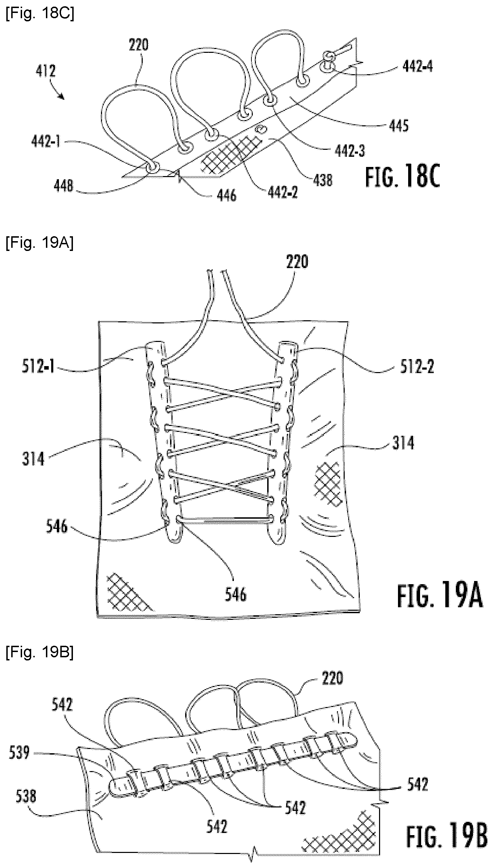

Figures 18A-18C illustrate example lace guides 412 which may be used for lace guides 312 of footwear 310 or lace guides 216 of footwear 210. Lace guide 412 comprises textile 438, polymer deposits 439-1, 439-2, 439-3 and 439-4 (collectively referred to as deposits 439), and inserts 442-1, 442-2, 442-3 and 442-4 (collectively referred to as inserts 442). As shown by Figure 18A, deposits 439 are made on textile 438 and partially in inserts 442. Each of inserts 442 is in the shape of a curved tubular sleeves ("macaroni"). The openings of the inserts 442 are encapsulated so as to face in a direction towards a fold line of textile 438. As shown by Figure 18B, textile 438 is folded along the fold line 447 over the deposits 439 and over inserts 442 such that folded inserts 442 may form a portion of an upper perimeter of one of quarters 314 of the footwear 310, with the folded edge 445 extending along tongue 326. Textile 438 may be secured to itself following such folding by stitching, fusing, adhesives or the like. In some implementations, textile 438 has a polymer film or coating (such as TPU) that may be heated or otherwise made sticky to facilitate securement of textile 438 in the illustrated folded state. As discussed above, in some implementations, deposits 439 may be formed from a polymer similar to the material of textile 438 to provide enhanced bonding of deposits 439 to textile 438. In some implementations, deposits 439 are formed from a TPU while textile 438 has a TPU coating or film. Folding of textile 438 about deposits 439 provide the edge of lace support 412 with a smooth textile edge that may or may not conceal deposits 439 (depending upon the opacity or translucency of textile 438). As shown by Figure 18C, the edge 445 of the folded textile 438 is perforated or includes openings 446 aligned with tips 448 of the "macaroni" inserts 442. Lace 220 is threaded through such openings 446, across and over tongue 326 (shown in Figure 17) and through a similar mirroring lace guide 412 on the other side of tongue 326.

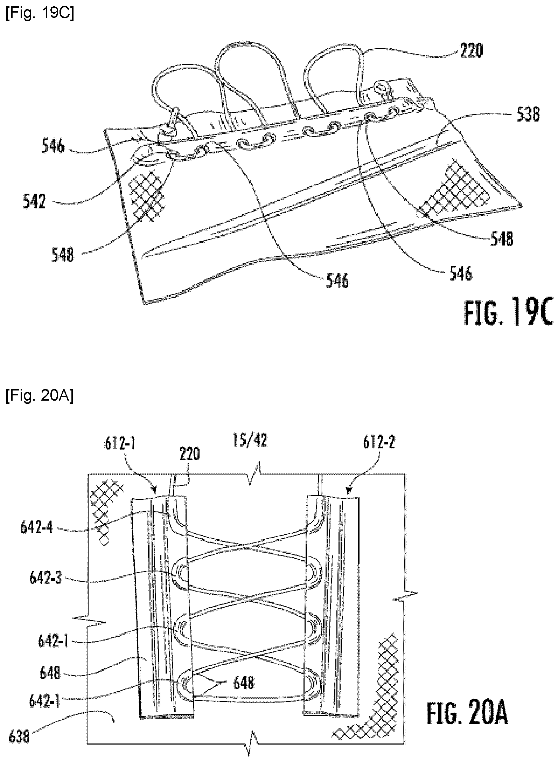

Figures 19A-19C illustrate another example lace guide 512-1 or pair of lace guides 512-1, 512-2 (collectively referred to as lace guides 512), as part of a footwear, such as footwear 310. Figure 19 illustrates the pair of lace guides 512, while Figures 19B and 19C illustrate one lace guide 512-1. As shown by Figure 19B, each of lace guides 512-1 comprises textile 538 and a single elongate continuous rod or bar 539 formed from a polymer and inserts 542. In some implementations, textile 538 may be deposited into a mold similar to mold 200 and the polymer 539 may be deposited on top of the textile 538 within the depression a recess 202 of the mold 200 to form the continuous bar 539.

Inserts 542, comprising tubular sleeves, are positioned at spaced locations along and within the recess 202 on top of the textile 538 prior to deposition of the polymer 539. The polymer partially encapsulates and captures the insert 542 of securing the insert 542 to textile 538. In some implementations inserts 542 may comprise "macaroni" inserts in the form of curved tubes which are encapsulated by the polymer 539, wherein the backsides are rounded ends of the "macaroni" tubes that are subsequently severed or otherwise removed, leaving two spaced apart tubular sleeves. In some implementations, inserts 542 may be omitted where passages are otherwise molded or drilled through and across the polymer bar 539. In some implementations, polymer bar 539 may alternatively be separately molded or otherwise formed and subsequently bonded to textile 538.

As shown by Figure 19A and 19C, the textile 538 is perforated, punctured or otherwise provided with openings 546 on both sides of bar 539, wherein the openings coincide with the openings 548 of the inserts 542. In some implementations, the openings 546 are formed by cutting, severing, puncturing or the like. In yet other implementations, textile 438 may be an engineered textile fabricated so as to provide or include openings 546 without the need to sever textile 438 which might otherwise form severed textile ends. By avoiding such cutting or severing of textile 438 form openings 546, the strength of textile 438 and the resulting lace guide can be higher and/or more uniform. One example of such an engineered textile is to form textile 538 using Leno weaving.

Lace 220 is threaded through and across such inserts 542. Because lace 220 freely extends between the spaced sleeves on the backside as shown in Figure 19C, lace 220 may be more easily laced and may encounter less frictional resistance during drawing/pulling of lace 220. In some implementations, the material of textile 538 and the material of bar 539 may be formed from compatible or similar polymer materials to facilitate fusing or chemical bonding. In some implementations, bar 539 may be formed from a TPU while textile 538 is formed or has a TPU coating or film, wherein application of seat may be used to fuse or chemically join and secure bar 539 to textile 538.

As shown in Figure 19A, lace 220 is laced across and between a pair of lace guides 512-1, 512-2. In the example shown in Figure 19A, the upper of the footwear may omit a tongue, wherein opposite quarters of the footwear (such as footwear 310) are to be drawn together through the pulling of lace 220. In other implementations, lace guides 512 may be separated by an intervening opening and a tongue 326, wherein the bars 539 of lace guides 512 may be drawn together by the pulling of lace 220 to snugly fit quarters 314 of the footwear along and against the received foot. As noted above, although each of the illustrated and disclosed lace guides are described in the context of being used in footwear, such lace guides may be used in any article, clothing, bags or otherwise, that employs laces to draw two structures towards one another.

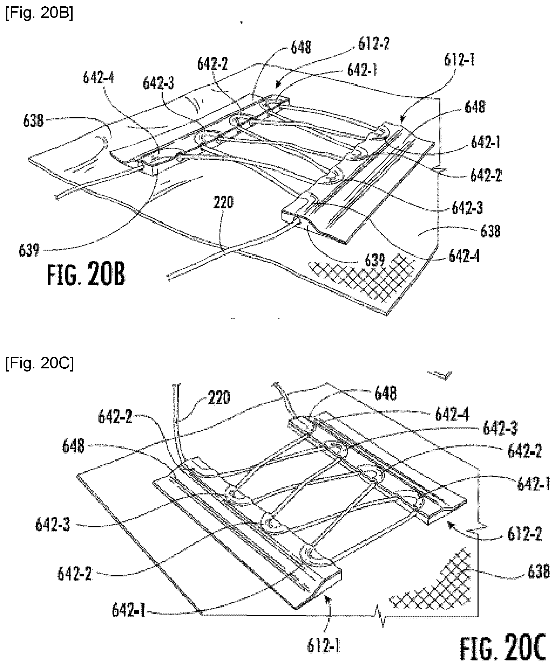

Figures 20A-20C illustrate example lace guides 612-1, 612-2 (collectively referred to as lace guide 612) for use as part of footwear 310 or other lace employing structure. Each of the lace guides 612 comprise textile 638, polymer bar 639, inserts 642-1, 642-2, 642-3, 642-4 (collectively referred to as insert 642) and cover textile 648. Polymer bar 639 comprises a continuous bar of polymer (following solidification) deposited upon textile 638 (such as with system 20 described above). The polymer bar 639 as shown partially encapsulates the spaced inserts 642. In the example illustrated, each of the inserts 642 is a "macaroni" insert having two end openings which receive lace 220. Bar 639, applied while in a liquid or fluid state, encapsulates the insert 642 and secures inserts to textile 638. Each of the bars 639 of guides 612 projects above the underlying textile 638 and faces the other polymer bar 639 of the footwear's lacing system.

Cover textile 648 secured to textile 638 and extends over and across bar 639 and insert 642. In some implementations, cover textile 638 is adhesively joined to textile 638 and bar 639. In some implementations, cover textile 638 is chemically bonded or fused to the underlying textile 638 and bar 639. For example, in some implementations, cover textile 638 may have a film or coating that is compatible with the polymer forming bar 639 and that is also compatible with a film or coating covering textile 638. In some implementations, bar 639 is formed from a thermoplastic material while textile 638 and textile 648 are bothed formed from a thermoplastic material, wherein the application of heat may be used to fuse such components. In some implementations, an additional layer of polymer may be deposited on top of cover textile 648, the additional layer polymer extending through cover textile 648 and being fused to textile 638 and/or bar 639.

As shown in Figures 20A-20C, lace 220 is laced across and between a pair of lace guides 612-1, 612-2. In the example illustrated, the upper of the footwear may omit a tongue, wherein opposite quarters of the footwear (such as footwear 310) are to be drawn together through the pulling of lace 220. In other implementations, lace guides 612 may be separated by an intervening opening and a tongue 326, wherein the bars 639 of lace guides 612 may be drawn together by the pulling of lace 220 to snugly fit quarters 314 of the footwear along and against the received foot. As noted above, although each of the illustrated and disclosed lace guides are described in the context of being used in footwear, such lace guides may be used in any article, clothing, bags or otherwise, that employs laces to draw two structures towards one another.

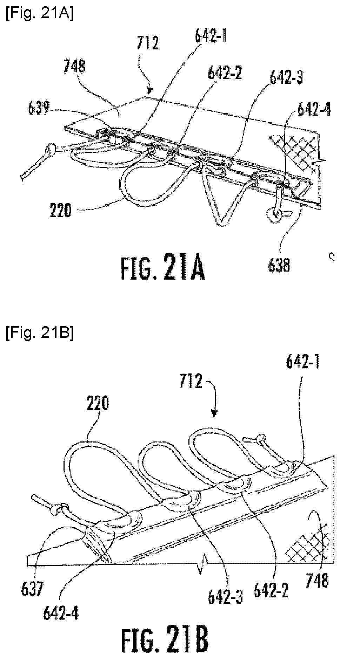

Figures 21A and 21B illustrate portions of an individual lace guide 712 which may be used as part of a footwear, such as footwear 310 or other lace employing structures or systems. Lace guide 712 is similar to lace guides 612 except that lace guide 712 comprises textile cover 748 in place of textile cover 648. Textile cover 748 is fused, bonded otherwise secured to the underlying textile 638 and overlaps bar 639 with its partially encapsulated inserts 642. Those remaining components of lace guide 712 which correspond to components of lace guides 612 are numbered similarly.

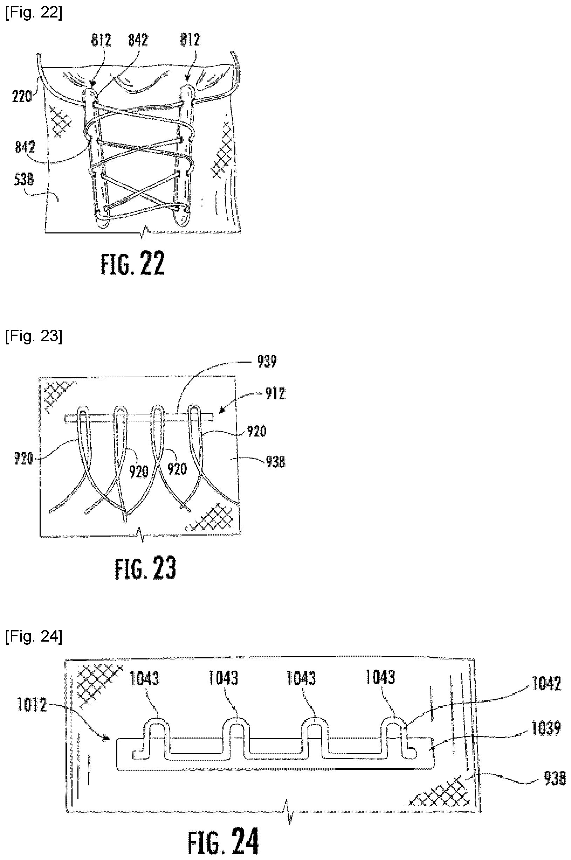

Figure 22 illustrates a pair of opposing or corresponding lace guides 812 which may be used in a footwear, such as footwear 310, or other lace employing articles. Lace guides 812 are similar to lace guides 512 except that lace guides 812 each include a series spaced lace passages formed by inserts 842. The illustrated inserts 842 are in the form of individual tubular tools or sleeves embedded are partially encapsulated by the polymer bar 539 which is deposited upon textile 538 (using the above-described mold 200). As shown by Figure 22, the inserts 842 are spaced such that the lace 220 passes through an insert (from one side of bar 539 to an opposing bar 539 of the lace system) before extending over top of the bar 539 towards the other of the lace guides 812. Said another way, lace 220 does not extend through a lace passage from one side of a bar 539 to the other side of the bar 539 and then once again pass through another passage through the same bar 539 before extending towards the other lace guide 812.

Figure 23 illustrates an example lace guide 912 which may be employed as part of a footwear, such as footwear 310, or other lace employing articles. Figure 23 illustrate lace guide 912 from a bottom or backside of lace guide 912 with a partially translucent textile for purposes of illustration. Lace guide 912 comprises textile 938, and polymer bar 939. Textile 938 is similar to textile 538 or the other textiles described above. Polymer bar 939 is formed by deposition of a polymer on textile 938, wherein the polymer surrounds and encapsulates individual lace pieces 920 which have a loop on one side of the bar 939. Polymer bar 939 is subsequently solidified or cured so as to retain lace pieces 920 in place.

Figure 24 illustrates an example lace guide 1012 which may be employed as part of a footwear, such as footwear 310, or other lace employing articles. Lace guide 1012 comprises textile 938, polymer bar 1039 and insert 1042. Polymer bar 1039 is formed from the deposition of a polymer on textile 938, wherein the polymer surrounds and encapsulates insert 1042. Polymer bar 1039 is subsequently solidified or cured so as to retain insert 1042 in place. Insert 1042 comprises a flexible line or a rigid piece partially captured between bar 1039 and textile 938 and/or partially encapsulated by bar 1039. Insert 1042 comprises multiple spaced U-shaped extensions 1043 projecting from bar 1039; the extensions 1043 serving as eyelets for lace 220 (not shown).

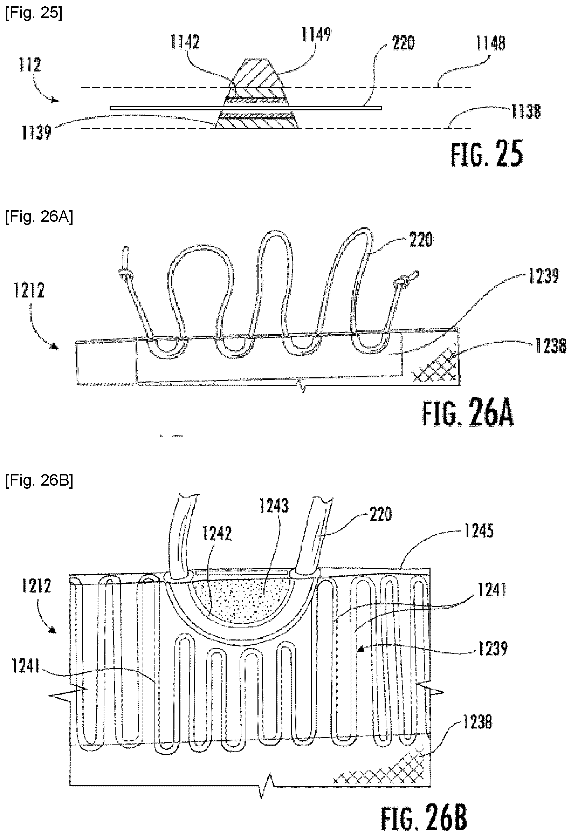

Figure 25 a sectional view schematically illustrating portions of an example lace guide 1112 which may be used as part of footwear, such as footwear 310 or other lace employing articles. Lace guide 1112 comprises textile 1138, polymer 1139, insert 1142, cover textile 1148, and cover polymer 1149. Textile 1138 may be similar to textile 938 or any of the above describe textiles. In some implementations, textile 1138 may be formed from a polymer or have a polymer film or coating compatible with polymer 1139 for enhanced bonding or fusion of polymer 1139 to textile 1138.

Polymer 1139 may be in the form of an individual deposit, similar to deposits 442, or an elongate or rod, similar to bars 539, 639 and 839 described above. In some implementations, polymer 1139 may comprise a thermoplastic material. In some implementations, polymer 1139 may comprise a thermoset polymer. In some implementations, polymer 1139 may comprise a TPU material, wherein textile 1138 has a TPU film or coating which chemically bonds to or fuses to the TPU material of polymer 1139. Polymer 1139 is deposited while in a liquid state onto textile 1138 so as to at least partially encapsulate insert 1142, securing insert 1142 to textile 1138.

Insert 1142 may comprise a single individual tube or may comprise a "macaroni" insert in the form of a curved loop having two ends on the same side, wherein the backside of the "macaroni" (the curved portion) is severed or removed. In some implementations, insert 1142 may comprise the "macaroni" insert without having its rounded middle portions removed, similar to insert 642. As shown by Figure 25, lacing 220 is threaded or passed through insert 1142. In some implementations, insert 1142 may be omitted, wherein lacing 220 is captured by polymer 1139 similar to the configuration described above with respect to guide 912 or guide 1012.

Cover textile 1148 extends over polymer 1139. In some implementations, textile 1148 is further directly bonded to textile 1138. In some implementations, foam or padding material may be formed between textile 1138 and cover textile 1148 at locations other than the locations where polymer 1139 is deposited. In some implementations, the foam or padding may be formed by deposition of a polymer on textile 1138 or through cover textile 1148 into the volume or space between textiles 1138 and 1148. Cover textile 1148 is applied on top of polymer 1139. In some implementations, cover textile 1148 is deposited over polymer 1139 prior to solidification or curing of polymer 1139, wherein the polymer 1139 fuses to cover textile 1148. In yet other implementations, adhesives or other bonding techniques are employed. In some implementations, cover textile 1148 comprises a coating or film of a polymer compatible with the polymer of polymer 1139, wherein application of heat causes such fusing.

Polymer 1149 is deposited on cover textile 1148 in alignment with polymer 1139. Polymer 1149 is deposited so as to extend through cover textile 1148 and make physical direct contact with polymer 1139. In some implementations, polymer 1149 may be of a polymer compatible with polymer 1139 to provide chemical bonding or fusing. Polymer 1149 further assist in securing cover textile 1148 to polymer 1139 and textile 1138. In some implementations, polymer 1139 may not extend above insert 1142, but wherein polymer 1149 is deposited on cover textile 1148 and through cover textile 1148 so as to partially encapsulate a top of insert 1142. In some implementations, polymer 1139 may not extend over a top of textile 1148 (as seen in Figure 25), wherein cover textile 1148 contacts the top of insert 1142 with polymer 1149 deposited on top of cover textile 1148 in alignment with the underlying insert 1142. In some implementations, lace guide 1112 may omit insert 1142 while having any of the above-described configurations, wherein lace 220 is captured within and retained by polymer 1139, or by polymer 1139 and 1149, or wherein other passages can be cut or drilled through polymer 1139 to provide a passage through which lace 220 may extend and slide.

Figure 26A and 26B illustrate portions of an example lace guide 1212 which may be used as part of a footwear, such as footwear 310 or other lacing employing articles. Lace guide 1212 comprises textile 1238, polymer 1239 (seen through textile 1238 with a first color) (Figure 26B) and insert 1242. Textile 1238 may be similar to any above-described textiles such as textile 1138, 938 or the like. In the example illustrated, textile 1238 is folded over polymer 1239 and around the open ends of insert 1242 (similar to guide 412 described above). In other implementations, textile 1238 may simply underlie polymer 1239, with or without an additional cover textile as described above.

Polymer 1239 comprises a polymer deposited upon textile 1238 while in a liquid form, wherein polymer 1239 is subsequently solidified or cured (depending upon whether the polymer is a thermoset or thermoplastic material). As best seen in Figure 26B, polymer 1239 is deposited to form a continuous series of spaced columns 1241 which may have varying lengths to accommodate the curvature of insert 1242. The individual spaced columns capture and secure insert 1242 in place and secure the overlapping portions of textile 1238 to one another. The spaced columns further facilitate bending or flexing of guide 1212 about axes that are generally parallel to the columns 1241. In the example illustrated, polymer 1239 is deposited along a serpentine path to form columns 1241. As a result, continuous uninterrupted deposition of the polymer is facilitated to form all the columns 1241 without deposition tails or strings. In other implementations, each of columns 1241 may be disconnected from one another informed by separate deposition paths.

As should be appreciated, the number of columns 1241 and the non-nonzero spacing between such columns 1241 may be different than that schematically shown in Figure 26B. In some implementations, columns 1241 may have different spacings and different densities in directions along the edge 1245 to vary or control what locations along edged 1245 are bendable or the degree to which such portions are bendable. In some implementations, polymer 1239 may alternatively extend horizontally (as seen in Figure 26A and 26B) so as to form a series of spaced (connected/serpentine or unconnected) rows along and parallel to edge 1245, wherein the length of such rows may vary to accommodate the curvature of insert 1242. Such alternative columns would provide bending or flexibility along axes parallel to edge 1245 (rather than perpendicular to edge 1245 as provided by columns 1241).

Insert 1242 comprises a "macaroni" insert similar to the "macaroni" insert described above. Insert 1242 slidably receives lace 220. In some implementations, insert 1242 comprises a plastic or polymer insert. In other implementations, insert 1242 comprises a ceramic insert or insert form from other low friction materials. In some implementations, the curved central portion of insert 1242 may be cut off and removed to provide a pair of backside openings, similar to that shown in Figure 19. In such implementations, some of columns 1241 opposite to the backside openings of the insert 1242 may be omitted. In the example shown in Figure 26B, an additional polymer deposition 1243 (represented by stippling) is deposited upon textile 1238 on the inside curvature of insert one to further assist in securing and retaining insert 1242 in place.

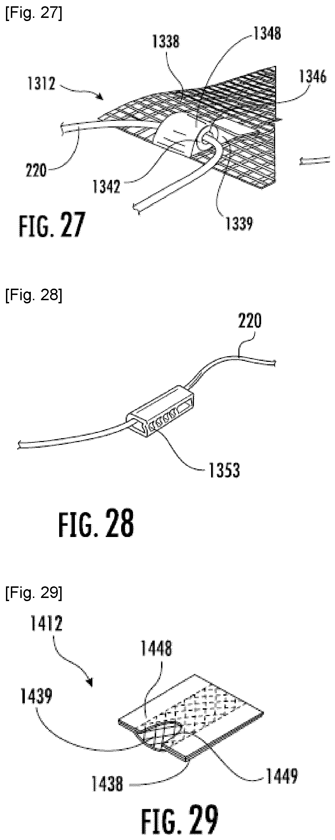

Figure 27 illustrates an example portion of an example lace guide 1312 for use between and below the end of a pair of parallel lace guides (the base or toe end of the footwear). Lace guide 1312 comprises textile 1338, polymer 1339, insert 1142 and cover textile 1348. Similar to the above-described lace guides, lace guide 1312 is formed by depositing a polymer 1339 (while in a liquid state) upon textile 1338 so as to at least partially encapsulate insert 1342. Insert 1342 is in the form of a cylindrical substantially linear tube having opposite end openings 1346 through which lace 220 is threaded. Cover textile 1348 is positioned overtop of polymer 1339, covering insert 1342 while being secured to textile 1338.

Figure 28 illustrates an example lace retainer 1353 through which the loose ends of lace 220 may be threaded and pulled through. Retainer 1353 may be used to secure or mechanically lock the ends of the lace 220 in a particular drawn state without tying the loose ends of lace 220.

Figures 29-43 varies examples of printed or deposited cushions or spacers formed by the deposition of a polymer onto a textile. Textiles may be cut to form windows or vents. Polymer deposition across or around these zones can reinforce the edges, bridge openings, or integrate breathable structural features. For example, Figure 29 illustrates an example spacer/cushion construction 1412 where a polymer lattice 1439 formed by an extruded patterned filament overlay is deposited upon a base textile 1438. Thereafter, a cover textile 1448 having a window 1449 is positioned on textile 1438 with the window 1449 at least partially over the polymer lattice 1439 to facilitate viewing of the polymer lattice 1439 In some implementations, the window 1449 is an opening. In other implementations, the window 1449 is a translucent or transparent portion of textile 1448.

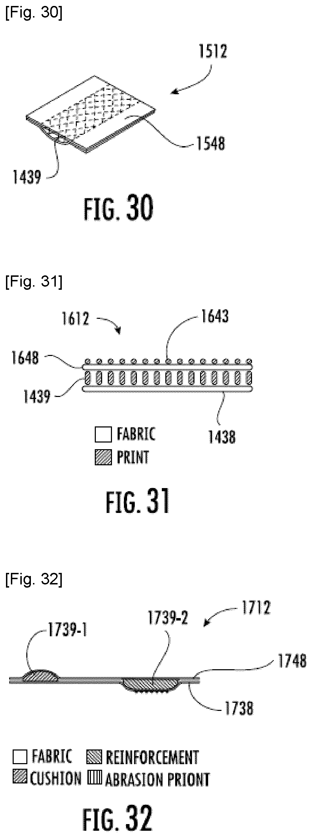

Figure 30 illustrates portions of an example spacer/cushion construction 1512 which is similar to construction 1412 except that textile 1448 is replaced with a textile 1548 in the form of a sheer or transparent fabric having a density and size or formed from material to facilitate viewing of the polymer lattice1439 through the textile 1538. In some implementations, textile 1448 may be an x-ray fabric.

Figure 31 illustrates portions of an example spacer/cushion construction 1612 in which the polymer lattice 1439 is deposited upon a textile 1438 and in which a cover textile 1448 is deposited on the polymer lattice1439 and covered with a second polymer print (a series of lines, grid or lattice) 1643. The second polymer print 1643 may be injected are printed through the textile 1648 for bonding with the polymer lattice 1439 to assist in securing the textile 1648 to the polymer lattice 1439.

Figure 32 is a sectional view illustrating portions of an example spacer/cushion construction 1712. Construction 1712 comprises a textile 1738 upon which is printed polymer lattices 1739-1 and 1739-2, and overlaying cover textile 1748. Lattice 1739-1 serves as a cushion, rising above textile 1738 and forming a bulge in textile 1748. Lattice 1739-2 is deposited upon textile 1738 while textile 1738 is in a mold (such as mold 200 described above) such that lattice 1739-2 downwardly bulges from textile 1738 to form a reinforcement or cushion. The lattice extends in opposite directions from a plane along which textiles 1738 and 1748 extend parallel to one another.

In some implementations, the lattices 1739-1, 1739-2 may be formed from different polymer materials having different characteristics such as different degrees of thickness or the like. In some implementations, one or both of textile 1738 and 1748 can include a polymer, such as a polymer coating that is compatible with the polymer material of lattices 1739 for bonding, fusing or otherwise securing connecting to the polymer material forming lattices 1739-1 and/or 1739-2. As a result, bonding between such lattices 1739-1, 1739-2 and textiles 1738 and 1748 may be enhanced. In some implementations, such lattices 1739 are printed through the overlying textile 1738, 1748. In one example implementation, textiles 1738 and 1748 comprise textiles having a TPU film or coating which is in contact with lattices 1739-1 and 1739-2 which are also both formed from TPU. Each of the example spacer/cushion may provide part of a piece of footwear, such as footwear 310 illustrated in the Figures. For example, in some implementations, each of such spacer/cushions may provide facing cushioning with enhanced embossed lateral support with an abrasion topper.

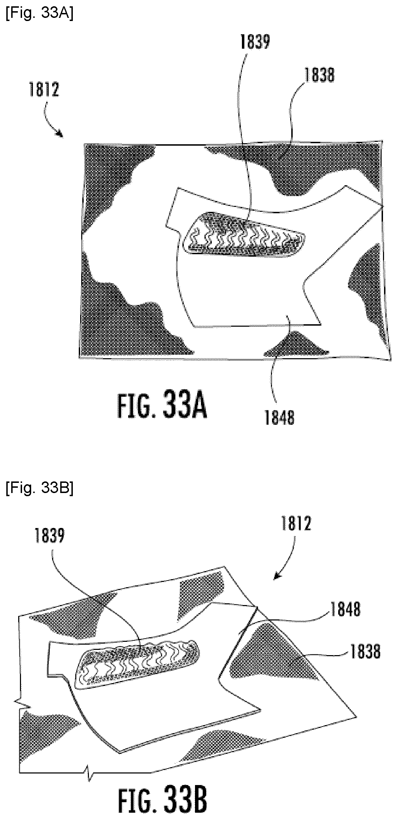

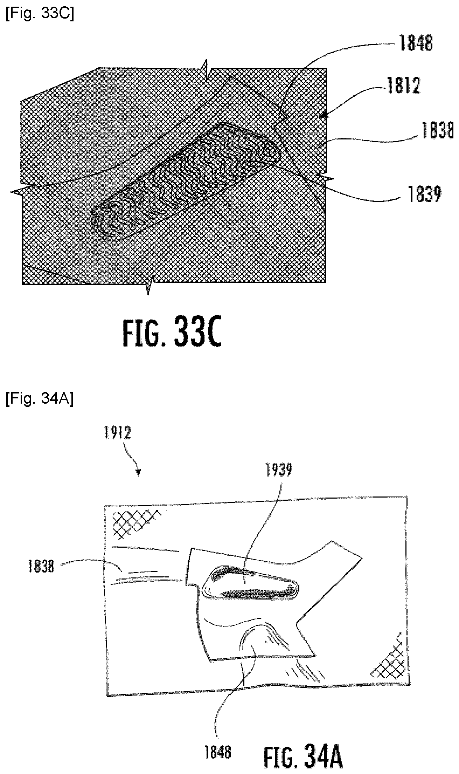

Figures 33A-33C illustrate portions of an example spacer/cushion construction 1812 comprising an underlying base textile 1838, a lattice 1839 formed from a polymer which has been allowed to cure or solidify, and an overlying cover textile 1848. As shown by such figures, the polymer is deposited in a lattice construction and may be formed from a polymer that is resiliently flexible so as to form a cushion. Such a cushion may be provided on the medial or lateral side of the heel of a shoe or boot. The lattice 1839 is encapsulated by soft foot-facing textiles 1838, 1848. The foot facing textile may be different (greater density, smoother, softer or the like) than the outwardly facing textile to provide a more comfortable feel. For example, in some implementations, the outer textile 1838 may be a TPU while the cover textile 1848 may be a polyester mesh with a TPU coating.

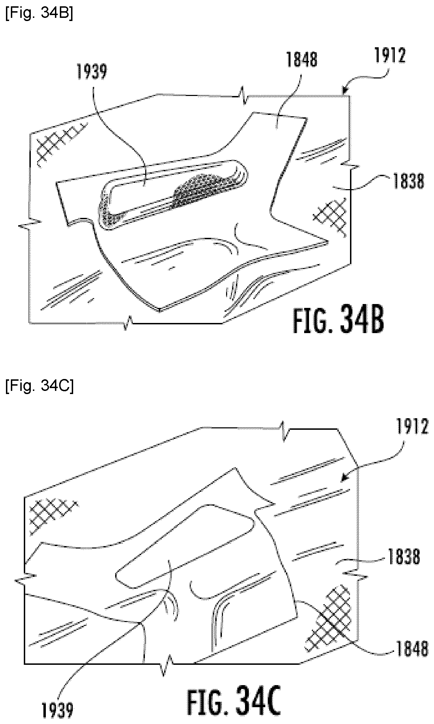

Figures 34A-34C illustrate portions of an example spacer/cushion construction 1912. Construction 1912 is similar to construction 1812 except that construction 1912 comprises a completely surrounded lattice 1939 formed by an extruded patterned filament overlay in place of lattice 1839. Lattice 1939 is formed from a foaming polymer, polymer that foams or expands. As discussed above, the polymer foam expands based upon its composition or the temperature of the polymer at the time at which the polymer is ejected are deposited. In some implementations, the foaming polymer may be a foaming TPU. As a result, the component is softer or more compressible. Although other implementations of spacer/cushions may be described as being formed from a polymer, such as a TPU, it should be appreciated that each of such disclosed lattices (above and below) may be alternatively formed from a foaming polymer, such as a foaming TPU.

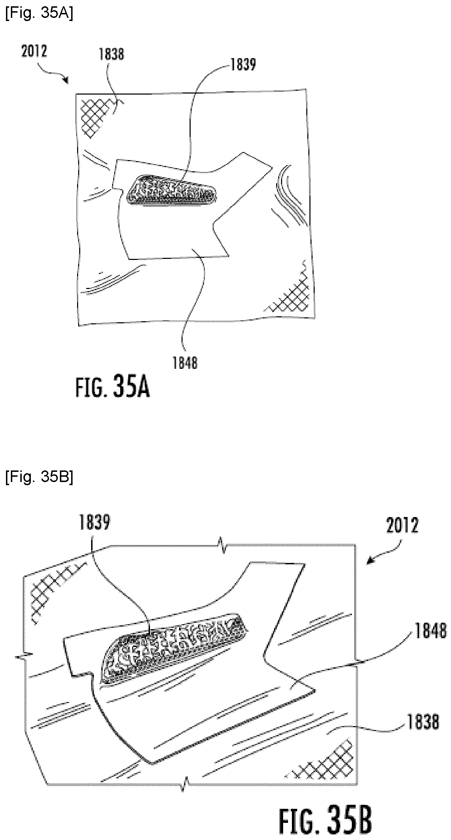

Figures 35A-35C illustrate portions of an example spacer/cushion construction 2012. Construction 2012 is similar to 1812 described above except that at least one of textiles 1838, 1848 comprises a window opening overlying or opposite to lattice 1839. In the example illustrated, textile 1838 comprises a window 2047 (an opening) which is aligned with at least portions of lattice 1839 to exposed portions of lattice 1839. As a result, enhanced airflow may be provided to the lattice 1839.

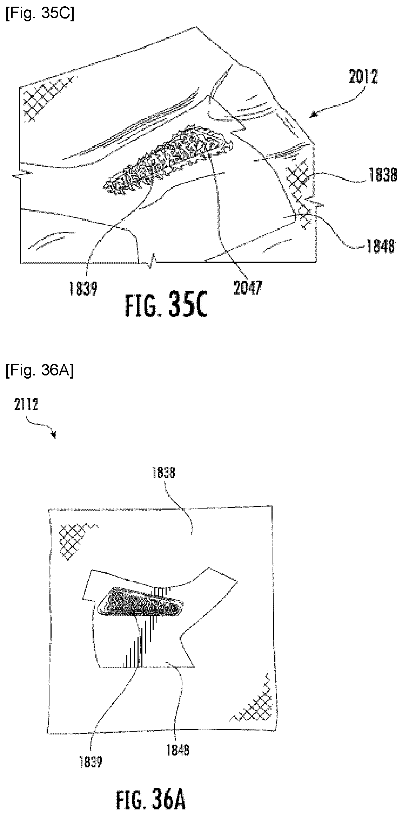

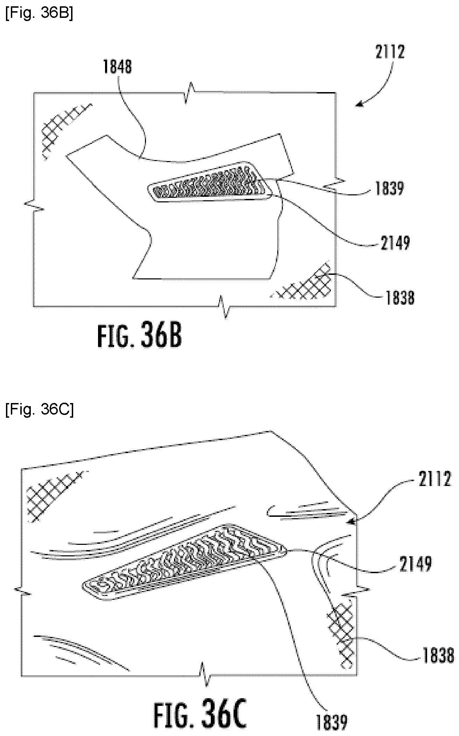

Figures 36A-36C illustrate portions of an example spacer/cushion construction 2112. Construction is similar to construction 2012 except that construction 2112 additionally comprises polymer frame 2149. Polymer frame 2149 comprises a line of deposited a polymer deposited as a liquid on textile 1838 along the perimeter of window 2047 (shown in Figure 35C). In the example illustrated, lattice 1839 is formed by depositing the polymer on a first side of textile 1838, wherein frame 2149 is formed by depositing a polymer on a second opposite face or side of textile 1838. In some implementations, frame 2149 penetrates textile 1838 and is bonded or fused to the polymer of lattice 1839. In other implementations, lattice 1839 is fused or bonded to a first face of textile 1838 while frame 2149 is fuser bonded to a second opposite side of textile 1838 without passing through textile 1838. In some implementations, frame 2149 extends inwardly from the edges of textile 1838 along window 2047 and overlaps portions of lattice 1839 diffuse directly to lattice 1839. In some implementations, frame 2149 and lattice 1839 are formed from the same polymer or from compatible polymers. In some implementations, textile 1838 comprises a polymer coating or film on at least one side and preferably on both sides, or in the polymer film is compatible or the same as the polymer forming frame 2149 and lattice 1839. In some implementations, frame 2149 and lattice 1839 are formed from a TPU, wherein textile 1838 has a TPU coating or film opposite to infuse to the TPU materials of frame 2149 and lattice 1839.

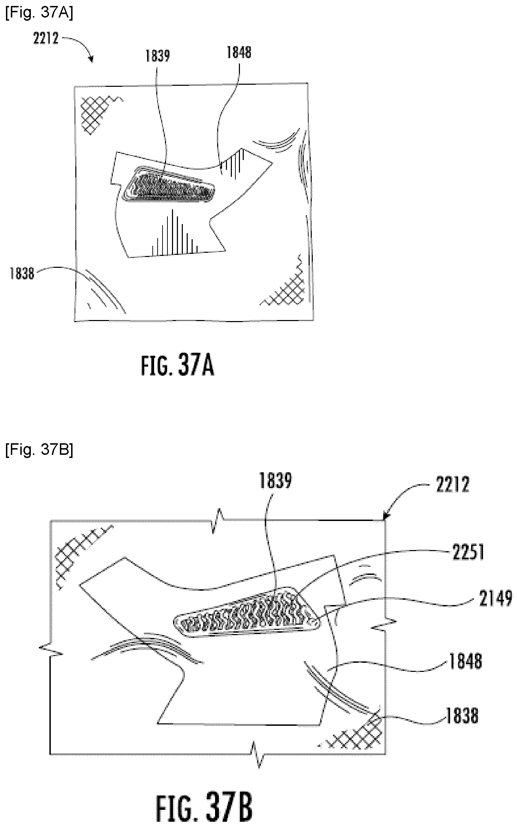

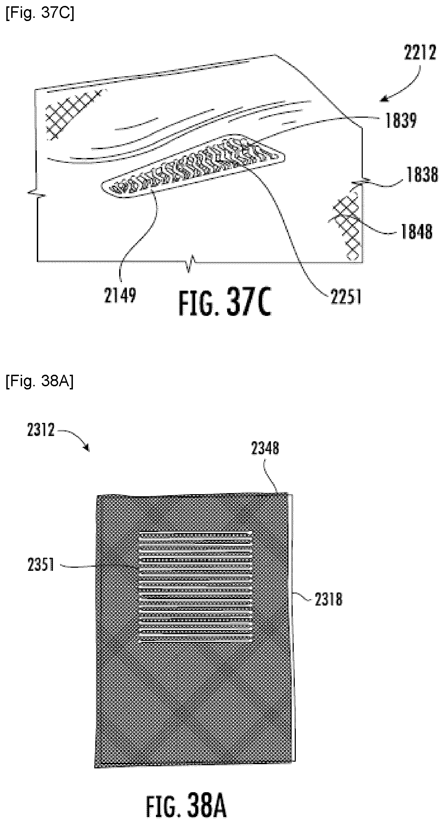

Figures 37A-37C illustrate portions of an example spacer/cushion construction 2212. Construction 2212 is similar to construction 2112 except that construction 2212 comprises window fill portions 2251. Window fill portions 2251 comprise polymer extending from frame 2149, across window 2047 to other portions of frame 2149. In the example illustrated, window fill portion 2251 comprises a two-dimensional lattice or a three-dimensional lattice spanning the opening defined by frame 2149. In other implementations window fill portion 2251 may be solid without perforations are openings. Window fill portions 2251 may be formed from the same or from a different polymer as that of the polymer forming lattice 1839. In the example illustrated, window fill portions 2251 are formed during the deposition of frame 2149 as a single continuous uninterrupted deposition line of polymer. In other implementations, window fill portions 2251 may be formed separately from frame 2149 may be formed from a different polymer as that of frame 2149. In such implementations, the material of window fill portion 2251 may be a polymer that is compatible with the polymer of lattice 1839 or the same as that of lattice 1839 to facilitate bonding to lattice 1839 through fusing or chemical bonding. For example, window fill portion 2251 may be formed from a TPU while lattice 1839 is also formed from a TPU.

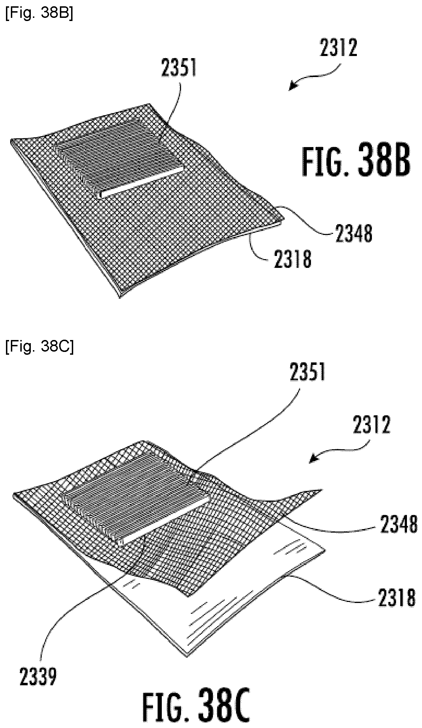

Figures 38A-38C illustrate portions of an example spacer/cushion construction 2312. Construction 2312 comprises textile 2318, three-dimensional polymer lattice 2339, cover textile 2348 and cover polymer 2351. Textile 2318 may be similar to textile 1838 or any of the above base textiles described above. Lattice 2339 may be similar to lattice 1839 or any of the above lattices described above. Lattice 2339 can be formed by depositing a polymer on textile 2318. The polymer may be a thermoset polymer or a thermoplastic polymer. In one implementation, the polymer comprises a TPU polymer. The polymer may comprise a foaming polymer, a stiff polymer, or an elastic or flexible polymer.

Cover textile 2348 comprises a textile positioned over and extending outwardly beyond lattice 2339. In some implementations, cover textile 2348 may be deposited upon lattice 2339 while the lattice 2339 is in a partially liquid state securely and permanently affix the cover textile 2348 to the lattice. In other implementations, the cover textile 2348 may be deposited upon lattice 2339 while in a heated state while being heated to fuse to the lattice 2339. For example, in some implementations, cover textile 2348 may have a polymer film or coating compatible with the polymer material of lattice 2339 for bonding or otherwise joining with the polymer of lattice 2339. For example, in some implementations, cover textile 2348 may be provided with a TPU coating or film, wherein lattice 2339 is also formed from a TPU polymer. Textile 2318 may likewise include a polymer film, such as a TPU film compatible with the polymer of lattice 2339.

Cover polymer 2351 comprises a pattern or layout of a polymer deposited upon textile 2348 while in a liquid state opposite to lattice 2339 so as to overlap at least portions of lattice 2339. Cover polymer 2351 may be injected through textile 2348 into direct contact with lattice 2339, wherein the polymer fuses with the polymer of lattice 2339, formed with the chemical lock and a mechanical lock. In other implementations, cover polymer 2351 may chemically fuse or bond to the compatible or same polymer coating or film on textile 2348. In addition to providing enhanced securement of textile 2348 to lattice 2339, cover polymer 2351 may provide an outer abrasion surface or outer texture for textile 2348. In some implementations, cover polymer 2351 may be different than that of lattice 2339, may be softer in some implementations or harder in other implementations.

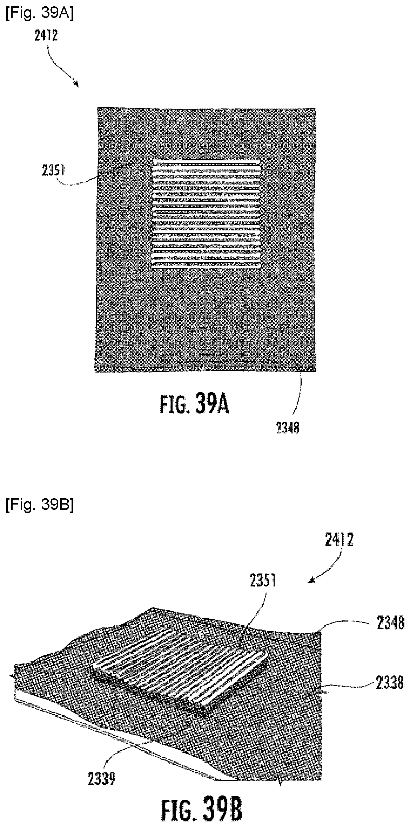

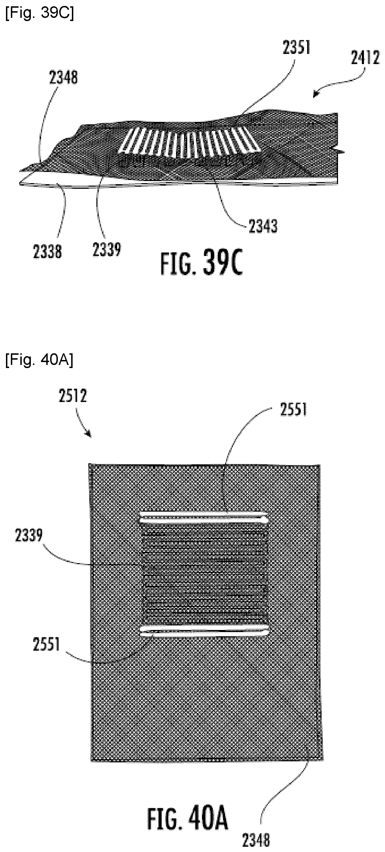

Figures 39A-39C illustrate portions of an example spacer/cushion construction 2412. Construction 2412 is similar to construction 2312 except that, as shown in Figures 39B and 39C, lattice 2339 has a varying height across at least one length and/or width dimension. In the example illustrated, lattice 2339 has a lower height and a central portion 2343 providing lattice 2339 with an upwardly concave profile. This is provided by controlling and adjusting the height of the nozzle relative to the textile (i.e., in the Z-direction) during the deposition process with the system 20 discussed above. In the example illustrated, cover polymer 2351 has a uniform thickness or height such as the outer profile of construction 2412 has a corresponding concave profile or curvature. In some implementations, polymer 2351 may have a nonuniform height or thickness in at least one dimension to amplify an outer profile curvature or to render the outer profile as being substantially flat or planar.

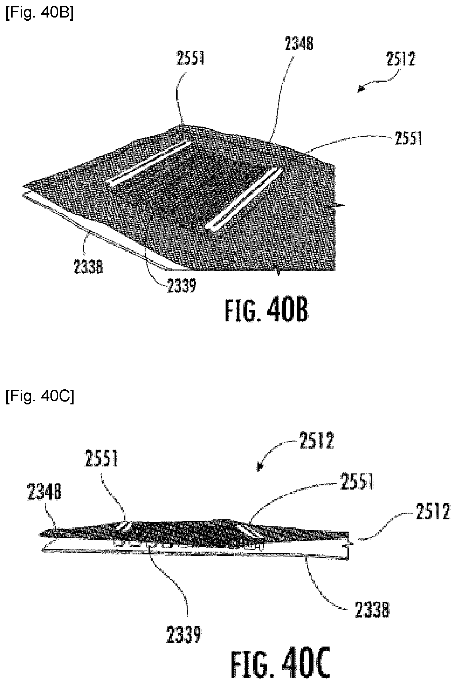

Figures 40A-40C illustrates portions of an example spacer/cushion construction 2512 utilizing the polymer deposition system 20 discussed above. Construction 2512 is similar to construction 2412 except that construction 2512 comprises cover polymer 2551 in place of cover polymer 2351. Cover polymer 2551 comprises a polymer, deposited while in a liquid form and subsequently solidified or cured. Cover polymer 2551 is deposited on cover textile 2348 at two spaced locations over lattice 2339, penetrating textile 2348 and bonding or fusing to the underlying portions of lattice 2339 at the spaced locations. In the example illustrated, cover polymer 2551 comprises a pair of polymer lines or bars deposited on and connected to opposite ends of lattice 2339. As shown by Figure 40C, cover polymer 2551 anchors two spaced portions of cover textile 2348 so as to stretch cover textile 2348 over and above (and out of contact with) the underlying concave top surface of lattice 2339. As result, the construction 2512 offers a surface texture defined largely by textile 2348 while providing airflow between textile 2348 and the underlying top surface of lattice 2339. Cover polymer 2551 may form from a polymer that is compatible with or the same as the polymer forming lattice 2339 or at least those portions of lattice 2339 underlying and making contact with cover polymer 2551. In some implementations, cover polymer 2551 and lattice 2339 are formed from a TPU polymer. In some implementations, one or both of surfaces of textile 2348 have a compatible polymer coating or film, such as a TPU coating or film to further enhance bonding. In the example illustrated, cover polymer 2551 penetrates and extends through textile 2348 and is joined to lattice 2339 to form a mechanical lock with respect to textile 2348. In other implementations, cover polymer 2551 may not penetrate textile 2348, wherein lattice 2339 is secured to portions of textile 2338 and wherein the upper face of textile 2340 secured to cover polymer 2551. In such implementations, cover polymer 2551 may serve as a stiffener. In the example illustrated, lattice 2339 is formed by a series of parallel lines (as seen in Figure 40A), permitting the construction to bend or flex about axes that are parallel to such lines. As should be appreciated, lattice 2339 may have a variety of other patterns, shapes or geometries. As noted above, textiles 2338 and 2348 may comprise different textiles having different performance characteristics. In some implementations, textile 2338 and 2348 may be the same type of textile having the same characteristics.

Each of the above-described spacers/cushions may be used in a variety of applications. For example, each of the above-described spaces/cushions may be employed as part of footwear, such as footwear 310. Such spacer/cushion may be employed in heal portions of footwear 310, the quarters a footwear 310 or other portions of footwear 310. In yet other implementations, each of such spacer/cushions may be employed in other articles of clothing, garments, bags or other structures.

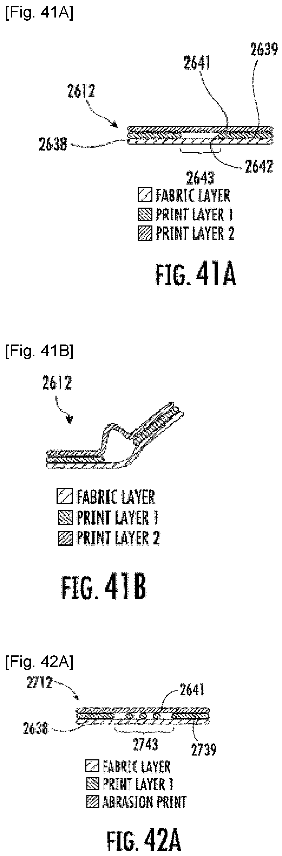

Figures 41-43 illustrate examples of how a polymer may be deposited to form architectures that provide different zones with different degrees of flex or stiffness. One example implementation of such zone controlled flexibility is footwear. For example, the flexibility of different zones of forefoot portions of a shoe or boot may be controlled.

Figure 41A illustrates an example architecture 2612 which may be employed as part of a piece of footwear, such as the forefoot portion of a piece of footwear (such as a shoe or boot). As should be appreciated, architecture 2612 may be employed in other structures where varying flexibility or stiffness is desired. Architecture 2612 comprises fabric or textile 2638, polymer deposition 2639 and polymer deposition 2641. Textile 2630 may comprise any fabric or other textile such as the above-described textiles.

Polymer deposition 2639 comprises a polymer deposited as a liquid or flowable form on textile 2638. The polymer of polymer deposition 2639 comprises a polymer that upon solidification is flexible, and in some implementations, elastic. In the example illustrated, polymer deposition 2639 comprises a layer having a gap to form a flex zone 2643. Polymer deposition 2641 comprises a layer of a polymer deposited as a liquid over polymer deposition 2639 and spanning gap 2642 (a "bridge print"). In some implementations, a temporary insert having outer low friction surfaces, such as surfaces formed from polytetrafluoroethylene, is inserted within the gap 2642 during printing of deposition 2639, wherein the temporary insert is subsequently removed.

The polymer of polymer deposition 2641 comprise a polymer that upon solidification or curing is flexible, and in some implementations, elastic. In some implementations polymer deposition 2641 comprises the same polymer as that of polymer deposition 2639. In some implementations, depositions 2639 and 2641 comprise different polymers. In some implementations, polymer depositions 2639 2641 are formed from a single continuous extrusion deposition of a polymer, wherein the polymers fuse or chemically bonded to one another. For example, in some implementations, depositions 2639 and 2641 may both be formed from a TPU. As described above with respect to other examples, polymer deposition 2639 may comprise a polymer that is compatible with or the same as a polymer coating or film on the top side of textile 2638.

In some implementations, polymer deposition 2641 may alternatively comprise a cover textile, such as any of the above-described cover textiles, such as cover textile 2348. In some implementations, the cover textile may be a flexible textile or an elastic textile. In such implementations, cover textile may be formed from a polymer or may have a polymer coating that is compatible with or the same as the polymer of polymer deposition 2639. For example, the cover textile may comprise a TPU film or coding which may be chemically bonded or fused to polymer deposition 2639 which comprises TPU.

As shown by Figure 41B, architecture 2612 facilitates flexing or bending in flex zone 2643, largely defined by the extent of gap 2642 between line segments of a continuously deposited polymer. As should be appreciated, in some implementations, additional layers of other materials may be employed in architecture 2612. Such additional layers may be formed by deposition of a polymer which is subsequently solidified or cured or may comprise additional textile or fabric layers. In some implementations, one or both of deposition 2639 and 2641 may be in the form of a deposition that forms a two-dimensional or three-dimensional lattice or other pattern(s). In some implementations, deposition 2639 and/or 2641 may be formed from a foaming polymer.

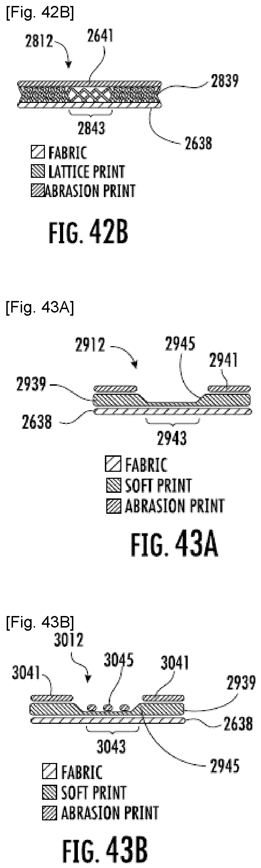

Figures 42A and 42B illustrate examples of how a density of polymer deposition 2639 may be varied to provide a flex zone. Figure 42A illustrates portions of example flex zone architecture 2712 which is similar to architecture 2612 except that polymer deposition 2739 is a less dense deposited layer in its flex zone 2743. Figure 42B illustrates portions of an example flex zone architecture 2812 similar to architecture 2612 except that polymer deposition 2839 has a less dense three-dimensional lattice structure in its flex zone 2843.

Figure 43A and 43B illustrate examples of how the thickness of various polymer depositions may be varied to provide controlled flex zones. Figure 43A illustrates an example flex zone architecture 2912 comprising textile 2638, polymer deposition 2939 and polymer deposition 2941 (in the form of an "abrasion print"). Polymer deposition 2939 comprises a polymeric layer deposited as a liquid which is subsequently solidified or cured. The polymer deposition 2939 may be similar to the polymer deposition 2639 and 2739 described above. As shown by Figure 43A, the thickness of polymer deposition 2939 is reduced to form a crater, detent or depression 2945 in regions of a flex zone 2943.

Polymer deposition 2941 may be similar to polymer deposition 2641 except that in the example illustrated, polymer deposition 2941 does not span the depression formed in polymer deposition 2939. As result, architecture 2912 may flex in regions about flex zone 2943. In some implementations, polymer deposition 2949 may be in the form of a bridge print that spans the depression in the layer of polymer deposition 2939. In some implementations, the spanning portion of polymer deposition 2941 may be a solid layer or may be a perforate or lattice. As described above with respect to polymer deposition 2641, in some implementations, polymer deposition 2941 may alternatively comprise a cover textile similar to cover textile 2348 described above. Such a cover textile may span the depression or may have openings overlying or aligned with the depression in polymer deposition 2939.

Figure 43B illustrates portions of an example architecture 3012. Architecture 3012 is similar to architecture 2912 except that architecture 3012 comprises a polymer deposition 3041 which at least partially resides within the depression 2945, across or overlying the flex zone 3043. In the example illustrated, polymer deposition 3041 comprises an open, noncontinuous or perforate portion 3045 on the floor of depression 2945. Perforate portion may comprise spaced lines, a grid or an open celled or closed celled lattice on those portions overlying floor of depression 2945. In yet other implementations, those portions of polymer deposition 3041 overlying the floor of depression 2945 may be part of a solid layer extending from those portions of polymer deposition 3041 outside of depression 2945.

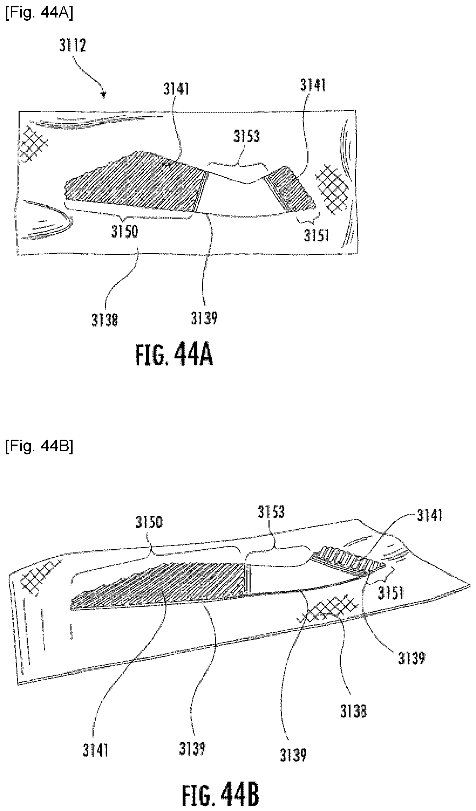

Figures 44-47 illustrate an example of a forefoot panel for a piece of footwear, such as footwear 310, wherein such forefoot panels provide controlled zones of varying flex. Figures 44A and 44B illustrate an example forefoot panel 3112 comprising base textile 3138, polymer deposition 3139 and polymer deposition 3141. Base textile 3138 may be similar to any of the above based textiles.

Polymer deposition 3139 comprises a polymer deposited as a liquid on base textile 3138. Polymer deposition 3139 is deposited in a pattern by system, such as system 20, so as to form a two or three-dimensional lattice or other selected pattern(s) on base textile 3138. In the example illustrated, polymer deposition 3139 is deposited according to a first pattern in region 3150, a second pattern in region 3151 and a third pattern in region 3153. The patterns in regions 3150 and 3151 may form a provide greater rigidity or inflexibility of the pattern deposited in region 3153 provides greater degree of flexibility, facilitating bending or pivoting of the region 3153 about axes generally parallel to the angles of the deposition lines shown in region 3153 (angled upwardly to the left as seen in Figure 44A).

Polymer deposition 3141 comprises a polymer deposited as a liquid on polymer deposition 3139 in region 3150 and 3151 while not being deposited upon polymer deposition 3139 in region 3153. Polymer deposition 3141 has a material composition and/or is deposited according to a pattern so as to provide greater stiffness or less bending or flexibility in region 3150 and 3151. In the example illustrated, polymer deposition 3141 is a material composition that is stiffer or less flexible as compared to the polymer of polymer deposition 3139. In addition, the pattern of polymer deposition 3149 provides greater stiffness. In the example illustrated, polymer deposition 3141 and one is angled opposite to that of polymer deposition 3139 in region 3153 (angled upwardly to the right as seen in Figure 44A). Although polymer deposition 3141 is a deposited in a similar fashion in both regions 3150 and 3151, in other implementations, region 3151 may have a different polymer composition and/or a different polymer pattern as compared to that of region 3150. In yet other implementations, polymer depositions 3141 and 3151 can be formed via a single continuous line of polymer material with a connecting portion extending across region 3153 and interconnecting polymer depositions 3141 and 3151. This continuous deposition process avoids ejection tails or other challenges with starting and stopping a polymer deposition sequence. Depending upon the particular configuration of the footwear, the size and shape of the different regions may vary as well as the size and shape of the different polymer depositions.

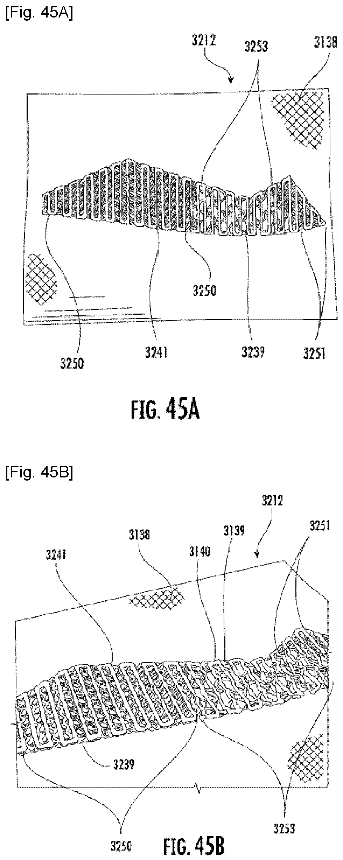

Figure 45A and 45B illustrate an example of a forefoot panel for a piece of footwear, such as footwear 310, wherein such forefoot panels provide controlled zones of varying flex. Figures 45A and 45B illustrate an example forefoot panel 3212 comprising base textile 3138, polymer deposition 3239 and polymer deposition 3241. Base textile 3138 may be similar to any of the above based textiles.

Polymer deposition 3239 comprises a polymer deposited as a liquid on base textile 3138. Polymer deposition 3239 is deposited in a pattern by system, such as system 20, so as to form a two or three-dimensional lattice or other selected pattern(s) on base textile 3138. In the example illustrated, polymer deposition 3239 is deposited according to a first pattern in region 3250, a second pattern in region 3251 and a third pattern in region 3253. The patterns in regions 3250 and 3251 have a first density of cells or cell walls formed by the polymer to provide a first degree of bendability while the pattern in region 3153 has a second lesser density of cells or cell walls (larger sized cells) to provide greater degree of bendability or flexibility in region 3253.

Polymer deposition 3241 comprises a polymer deposited as a liquid on polymer deposition 3239 across the entirety of polymer deposition 3239. Polymer deposition 3241 has a material composition and/or is deposited according to a pattern so as to provide greater stiffness or less bending or flexibility in region 3150 and 3151. In the example illustrated, polymer deposition 3241 is a material composition that is stiffer or less flexible as compared to the polymer of polymer deposition 3239. The pattern of polymer deposition 3249 can provide greater stiffness as compared to the pattern of polymer deposition 3239. In the example illustrated, polymer deposition 3241 comprises a continuous serpentine polymer deposition line or path, wherein the parallel portions of the lines are more closely spaced in regions 3250 and 3251 as compared to region 3253. In other implementations, polymer deposition 3241 may be uniform in its pattern across polymer deposition 3239, wherein the varying stiffness is defined by polymer deposition 3239. Depending upon the particular configuration of the footwear, the size and shape of the different regions may vary as well as the size and shape of the different polymer depositions.

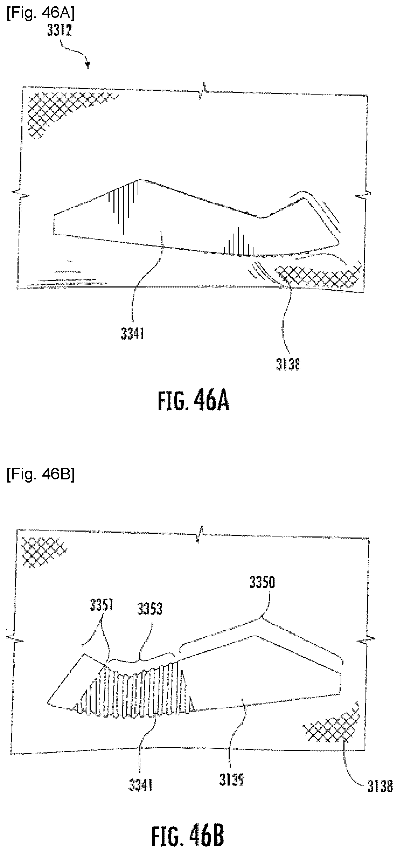

Figure 46A and 46B illustrate an example of a forefoot panel for a piece of footwear, such as footwear 310, wherein such forefoot panels provide controlled zones of varying flex.

Figures 46A and 46B illustrate an example forefoot panel 3312 comprising base textile 3138, polymer deposition 3339 and polymer deposition 3341. Base textile 3138 may be similar to any of the above based textiles.

Polymer deposition 3339 (shown in Figure 46B through the semi-transparent textile 3138) comprises a polymer deposited as a liquid on base textile 3138. Polymer deposition 3339 is deposited in a pattern by system, such as system 20, so as to form a two or three-dimensional lattice on base textile 3138. In the example illustrated, polymer deposition 3339 is deposited according to a first pattern in region 3350, a second pattern in region 3351 and a third pattern in region 3353. The patterns in regions 3350 and 3351 may form a provide greater rigidity or inflexibility as compared to the pattern deposited in region 3353 which provides greater degree of flexibility, facilitating bending or pivoting of the region 3353 about axes generally parallel to the columns or axes of the deposition lines shown in region 3153.

Polymer deposition 3341 comprises a polymer deposited as a liquid on polymer deposition 3339 in regions 3350 and 3351 across the entirety of polymer deposition 3139. Polymer deposition 3341 has a material composition to provide greater stiffness or less bending or flexibility in region 3350 and 3151. In the example illustrated, polymer deposition 3141 has a material composition that is stiffer or less flexible as compared to the polymer of polymer deposition 3139. In addition, polymer deposition 3349 is deposited as a single monolithic layer of a polymer material (a solid uninterrupted or un-perforated layer) to provide greater stiffness.

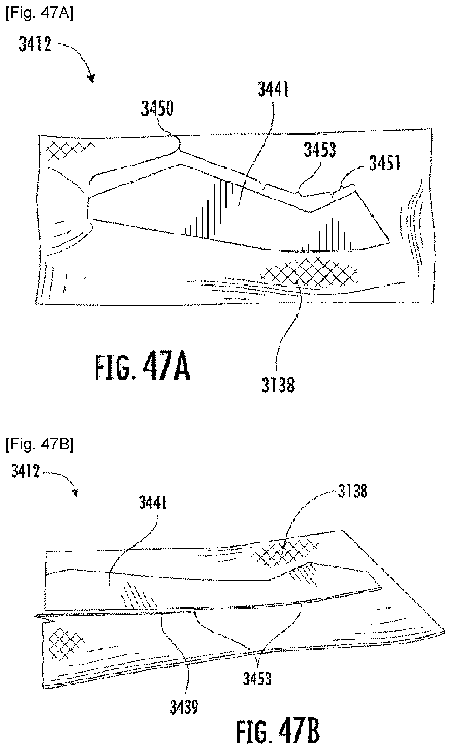

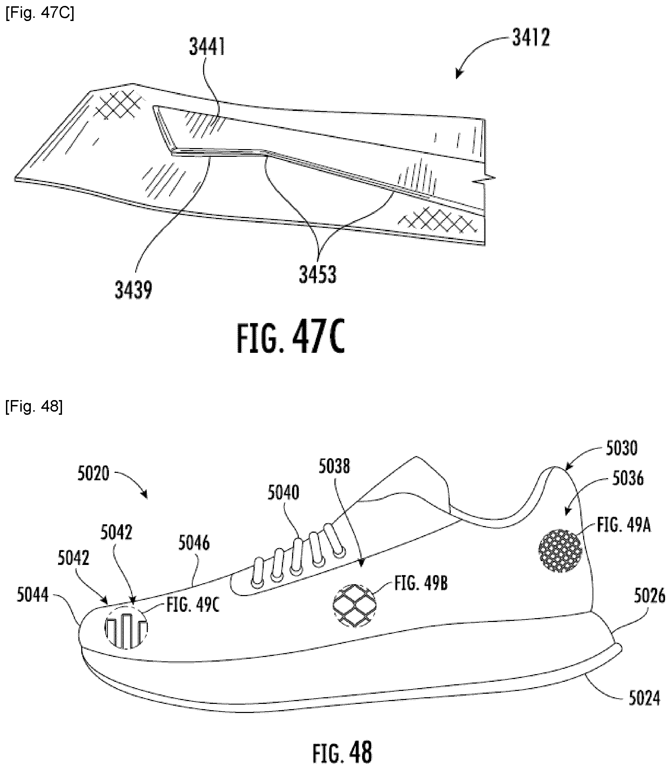

Figures 47A-47C illustrate an example of a forefoot panel for a piece of footwear, such as footwear 310, wherein such forefoot panels provide controlled zones of varying flex. Figures 46A and 46B illustrate an example forefoot panel 3412 comprising base textile 3138, polymer deposition 3439 and polymer deposition 3441. Base textile 3138 may be similar to any of the above based textiles.

Polymer deposition 3439 is similar to polymer deposition 3339 and comprises a polymer deposited as a liquid on base textile 3438. Polymer deposition 3439 is deposited in a pattern by system, such as system 20, so as to form a two or three-dimensional lattice or other selected pattern(s) on base textile 3138. In the example illustrated, polymer deposition 3439 is deposited according to a first pattern in region 3350, a second pattern in region 3351 and is omitted or not printed or deposited in region 3353. As result, deposition 3439 provides greater rigidity or inflexibility in regions 3450 and 3451.

Polymer deposition 3441 is similar to polymer deposition 3341, comprising a polymer deposited as a liquid on polymer deposition 3339 in regions 3350 and 3351 across the entirety of polymer deposition 3139. Polymer deposition 3341 spans the gap in polymer deposition 3439 in region 3453. As described above with respect to architecture 2612, in Figure 41A, a low friction temporary spacer may be positioned within the opening or gap in the layer formed by deposition 3439 during the deposition of the polymer of polymer deposition 3441, wherein the spacer is subsequently removed such that the layer formed by polymer deposition 3441 bridges over the gap formed in the polymer deposition 3439. Polymer deposition 3341 has a material composition to provide greater stiffness or less bending or flexibility in region 3350 and 3151. In the example illustrated, polymer deposition 3141 has a material composition that is stiffer or less flexible as compared to the polymer of polymer deposition 3139. Polymer deposition 3349 can be deposited in a pattern resulting in a single monolithic layer of a polymer material (a solid uninterrupted or un-perforated layer) to provide greater stiffness.

In some implementations, the single monolithic layer formed by polymer deposition 3341, 3441 or the polymer deposition 3241 may have a greater thickness in regions 3450, 3451, regions 3350, 3351, regions 3250, 3251 to provide even further enhanced stiffness in such regions. Likewise, in some implementations, the thickness of the polymer depositions 3139, 3239 and 3339 in regions 3153, 3253 and 3353, respectively, may be reduced or less than the thickness of the polymer deposition 3139, 3239 and 3339 in regions 3150, 3151, 3250, 3251 and 3350, 3351, respectively, to provide enhanced flexibility in such regions. Each of the architectures and panels shown in Figure 41-47 may have polymer depositions (3139, 3141, 3239, 3241, 3339, 3341 and 3439, 3431) formed from TPU or TPU based polymers. In such implementations, the textile 3138 may be formed from a TPU polymer or may be formed from another material having a compatible polymer films/coating or a TPU polymer film/coating to provide chemical bonding or other fusing.

Although each of the above examples is described in the context of employing deposition of a polymer which is subsequently permitted to solidify or cure (a thermoset or thermoplastic polymer), in other implementations, each of the structures including inserts or having therein passages (for forming lace guides or other structures), each of the structures that serve as spacers between textiles, each of the structures that serve as cushions, and each of the structures that serve as stiffness controlling portions of a panel, may alternatively be molded (injection molding) or otherwise formed independent of the textile and subsequently secured to the textile or textiles by fusing, adhesives or the like. For example, any of the polymer deposition described with respect to Figures 13A-27 may be molded (such as by injection molding) separately and independent from a non-textile or textile panel, and subsequently joined to a textile panel or other non-textile panel by adhesives, fusing or the like. Each of the polymer depositions described above with respect to Figures 29-40C may be molded independent from the non-textile or textile panel and subsequently joined to the non-textile or textile panel by adhesives, fusing or the like. Each of the polymer deposition described above with respect to Figure 41A-47C may be molded separately and independent from a non-textile are textile panel, and subsequently joined to the textile or other non-textile panel by adhesive, fusing or the like. In some implementations, a portion of such structures may be molded independently of the textile or non-textile panel, or in another portion of such structures is deposited as a polymer onto and in contact with both the independently molded structure and the underlying base textile or non-textile panel. Upon solidification, the deposited polymer may complete the independently molded structure and secure the completed structure to the base textile or non-textile panel or where the independently most structure is already complete, secure the independently molded structure to the textile or non-textile panel.

Figure 48 is a side view of an example footwear 5020. Footwear 5020 utilizes a patterned filament overlay having varying attributes amongst different zones to provide customized zone abrasion resistance with reduced weight. Footwear 5020 comprises outsole 5024, midsole 5026, upper 5030, and patterned filament overlay 5034. Outsole 5024 forms a bottom, ground engaging portion of footwear 5020. Midsole 5026 extends between the outsole 5024 and upper 5030. Midsole 5026 may provide cushioning for footwear 5020. In some implementations, midsole 5026 wraps about side portions of upper 5030. In some implementations, midsole 5026 is omitted, wherein outsole 5024 may wrap about side portions of upper 5030.

Upper 5030 comprises one or more panels of material coupled to outsole 5024 that collectively extends along the sides, about the heel and over the toes and top of the foot received within footwear 5020. In some implementations, upper 5030 comprises a panel or multiple panels which are perforate. Such panels may be formed from an organic or cellulose base material or may be formed from a polymer, such as a thermoset or thermoplastic polymer. In some implementations upper 5030 comprises a single panel or multiple panels of a textile. In some implementations, upper 5030 comprise a single panel or multiple panels of an extruded or molded mesh.

Upper 5030 comprise a heel zone 5036, quarter zone 5038, a lacing region 5040 and a toe zone 5042. Heel zone 5036 extends upward from sole 5024 and midsole 5026 at a rear of footwear 5020. Quarter zone 5038 extends along the medial and lateral sides of the footwear upwards from the sole 5024 or midsole 5026 towards the lacing region 5040.

Lacing region 5040 comprises portions of footwear on opposite top sides of the footwear that may be drawn together. Lacing region 5040 may include components or features as described above in connection with Figures 12A-27, such as eyelets for the passage of laces, hooks about which laces may be wrapped and/or portions of hook and loop fastener. In some implementations, lacing region 5040 may be omitted where laces or hook and loop fasteners are not provided. In some implementations, lacing region 5040 extends over a tongue of footwear 5020.

Toe zone 5042 rises from sole 5024 and/or midsole 5026 forwardly from quarter zone 5038 to the toe tip 5044. In some implementations, footwear 5020 may comprise a vamp 5046 which extends over the top of the toes and foot received within footwear 5020.

Patterned filament overlay 5034 comprises a layer of polymer material applied to or deposited upon one or more underlying panels of upper 5030. Layer 5034 is discontinuous in that layer 5034 has openings or voids. In some implementations, layer 5034 may be formed by extruding a polymer material onto the one or more underlying panels. For example, in some implementations, the polymer may be extruded onto the one or more underlying panels of upper 5030 (prior to the shaping or cutting of the panel to form the shape of the upper 5030) using an extruder, such as the extruder 26 of fabrication system 20 described above. In such implementations, the spacing or height of the nozzle 28 of extruder 26 (in the Z axis dimension) may be varied as the polymer is extruded onto the one or more underlying panels of upper 5030. In some implementations, the temperature, viscosity and/or pressure at which the polymer is extruded may be varied. The nozzles 28 and/or the print bed 24 may be moved relative to one another (in the X, Y and/or Z dimensions) to apply different layouts or patterns of polymer onto the one or more underlying panels of upper 5030.

In some implementations, the one or more underlying panels upon which the polymer is applied (extruded) may comprise a textile, grid or fabric. For example, the panel may have a woven, knit or other suitable textile construction for use with footwear or apparel and for receipt of the polymer deposition in accordance with the present technology. As result, the polymer may be applied with a sufficiently low viscosity and at a sufficient pressure so as to penetrate or impregnate the textile, grid or fabric, forming a mechanical bond with the one or more underlying panels of upper 5030 upon solidification and/or curing. In some implementations the underlying panels of upper 5030 and the polymer forming the patterned filament overlay may be of the same polymeric base material. As result, the applied polymer may further fuse to the one or more underlying layers of the upper 5030 for enhanced bonding.

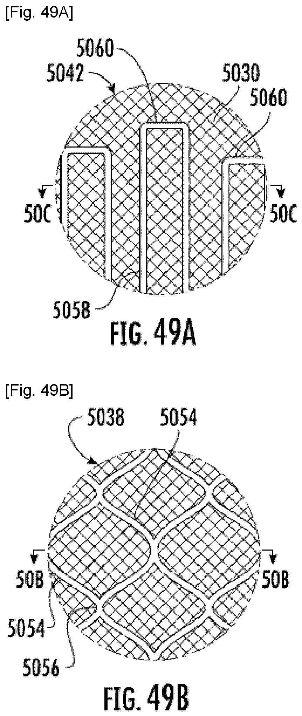

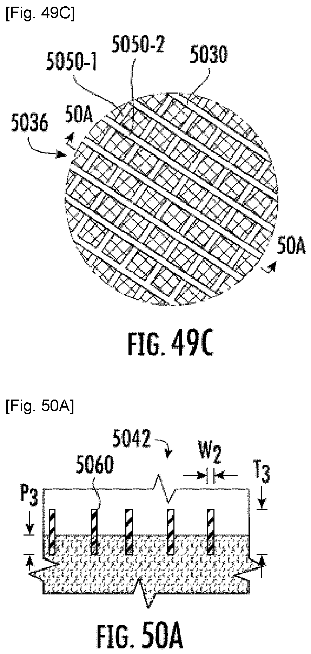

Figures 49A, 49B and 49C are enlarged or magnified views illustrating portions of different zones 5036, 5038, and 5042 of upper 5030. It should be appreciated that the patterned filament overlay 5034, with the varying attributes, extends beyond the smaller magnified regions being illustrated. Such Figures illustrate how the patterned filament overlay 5034 may have one or more varying attributes amongst zones. Further, in some embodiments, one or more of the zones 5036, 5038 and 5042 may be free of any deposition of the polymer material depending on the desired characteristics of the footwear.

In the heel zone 5036, patterned filament overlay 5030 has a crisscrossing pattern or layout formed upon an underlying panel or portion of upper 5030. The crisscrossing layout comprises linear polymeric lines 5050-1 which are deposited upon the underlying panel or portion of upper 5030 and the overtop or crisscrossing linear polymer lines 5050-2 which bridge over top of portions of lines 5050-1. In the example illustrated, lines 5050 crisscross one another at 90° angles. In other implementations, such lines 5050 may cross one another at other nonorthogonal angles.

In the quarter zone 5038, patterned filament overlay 5034 comprises wavy lines 5054 which are patterned so as to blend or merge together at junctions 5056, where such wavy lines come together. At such junctions 5056, the lines may, in some implementations, be fused to one another or may be integral with one another (where the materials are in an un-solidified or uncured state at the time that the two lines are joined at the junction 5056). In other configurations, the wavy lines may be positioned so portions are immediately adjacent to each other but not physically touching each other when the textile is in an un-flexed state.

In toe zone 5042, patterned filament overlay 5034 comprises a series of spaced lines 5058 deposited upon the underlying panel or surface of upper 5030. In the example illustrated, the multiple spaced (non-intersecting) lines 5058 are connected at their ends 5060 such that the different lines may be formed by a single deposition process without the flow of polymeric material through the nozzle having to be paused or stopped (avoiding ejection tails and providing for more efficient deposition). Although the spaced lines 5058 are illustrated as being linear and as being joined to one another at linear orthogonal ends 5060, in some implementations, the spaced lines 5058 may be zigzagged, wavy, curved, non-geometric, or the like, and may be joined by rounded turns rather than flat or orthogonal ends 5060. The spaced lines can be arranged in any selected pattern and may represent an image, writing, symbol(s), design(s), logo(s) or other arrangement. The spacing between consecutive lines may also be different from what is shown or may vary amongst different pairs of consecutive lines.

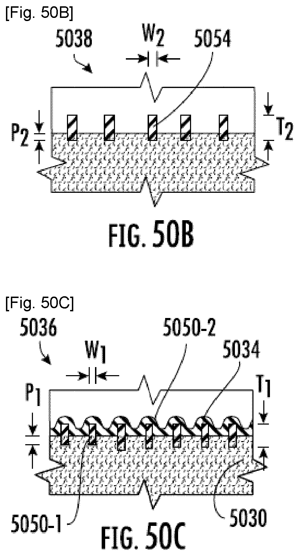

Figures 50A, 50B and 50C are sectional views of the magnified portions of the zones 5036, 5038 and 5042, respectively. Figures 50A, 50B and 50C illustrate both the thickness and penetration of the patterned filament overlay 5034 in such different zones. As shown by Figure 50C, in zone 5036, patterned filament overlay 5034 has polymer lines 5050-1 having a first thickness T1 and a first penetration depth P1. The overlapping or crisscrossing lines 5050-2 have a thickness less than the thickness T1 and either do not penetrate the underlying panel of upper 5030 or penetrate the underlying panel of upper 5030 by a selected distance. For example, in at least one implementation, the deposited polymer forming the lines 5050-1 can penetrate the underlying panel by varying degrees depending on the permeability of the fabric and by the nozzle pressure. In other implementations, lines 5050-2 may have a greater thickness and may also penetrate the underlying panel of upper 5030 in zone 5036.

As shown by Figure 50B, in zone 5038, patterned filament overlay 5034 has polymer lines 5054 having a thickness T2 and a penetration depth P2. As shown by Figure 50A, patterned filament overlay 5034 has lines 5060 having a thickness T3 and a penetration depth P3. The polymer lines in zone 5036 each have a width W1 while the lines in zones 5038 and 5042 each have a line width W2. Penetration depth P3 is greater than penetration depth P1 which is greater than penetration depth P2. The greater penetration depth P3 in zone 5042 provides enhanced securement to the underlying portions of upper 5030 in zone 5042 for a more robust construction in regions where the footwear is likely to undergo greater degrees of stress (such as when the heel of the footwear is lifted off the ground during transition from the flat-foot phase to the toe-off phase of a user's gait cycle).

Thickness T3 is greater than thickness T1 and thickness T2. The greater height may provide greater abrasion resistance. The enhanced density of the patterned filament overlay 5034 in the heel zone 5036 may further provide enhanced abrasion resistance. Likewise, the greater line width in the heel zone 5036 also provide enhanced abrasion resistance. The crisscrossing layout of layer 5034 and heel zone 5036 may also be more resistant to abrasion. Additionally, the layout of layer 5034 and heel zone 5036 can have increased stiffness and increased resistance to bending or flexing. The spaced polymer lines of layer 5034 in the toe zone 5042 provide some degree of abrasion resistance, yet add less weight per unit area of the upper as compared to heel zone 5036. The connected polymer lines of layer 5034 in quarter zone 5038 offer a higher degree of abrasion resistance as compared to layer 5034 in toe zone and a lesser degree of abrasion resistance as compared to layer 5034 and heel zone 5036. In general, the higher the degree of abrasion resistance, the greater the weight being added by particular portions of layer 5034.

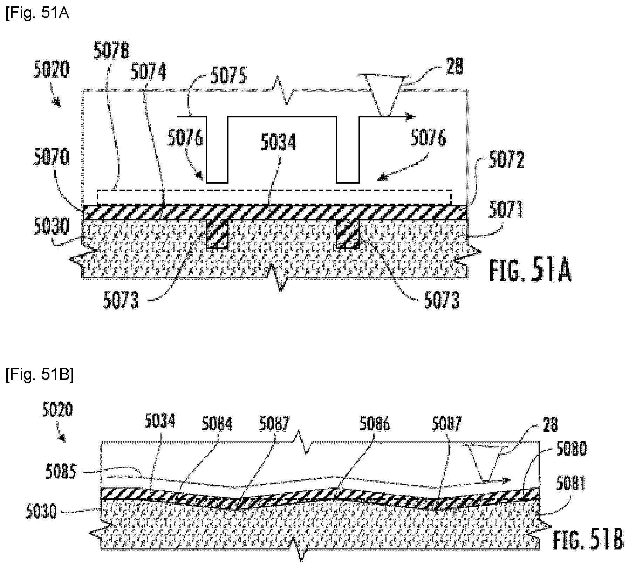

Patterned filament overlay 5034 comprises multiple lines of a polymer material which is being extruded or ejected onto a panel or multiple panels of upper 5030. In those implementations in which such panels of upper 5030 are perforate, such as where such panels are formed from a textile, grid or fabric, the extent of penetration of each polymer line may vary within a zone or from zone to zone. Such penetration is established and controlled by controlling (1) the spacing between the tip of the ejection nozzle and the underlying panel of the upper during extrusion of the polymer, (2) the pressure at which the polymer is extruded, and/or (3) the viscosity of the polymer (such as the temperature of the polymer relative to its melting point during extrusion). Figures 51A-51G illustrate various example polymer lines extruded onto perforate portions of upper 5030, wherein the polymer lines have different penetration characteristics for customized stiffness, abrasion resistance and mechanical retention properties.

Figure 51A is a sectional view illustrating portions of an example extruded polymer line 5070 that forms a portion of patterned filament overlay 5034 and that has been extruded or ejected onto the underlying panel 5071 of upper 5030, such as using the extruder 26 of fabrication system 20 described above. Line 5070 may be provided in any of the above describe zones of footwear 5020 or in other zones of upper 5030. Line 5070 comprises a surface portion 5072 and a series of spaced panel penetrating anchors 5073.

Surface portion 5072 extends along the outer surface of panel 5071, rising above the outer surface of panel 5071. In the illustrated example, surface portion 5072 does not penetrate the surface of panel 5031.

Anchors 5073 project from orifice portion 5072 and penetrate panel 5071, extending from surface portion 5072 below surface 5074 of panel 5071. Anchors 5073 may be formed by lowering the nozzle 28 into closer proximity to surface 5074 during the ejection of the polymer material, increasing the pressure at which the polymer material is being ejected and/or lowering the viscosity of the polymer material being ejected such that the ejected polymer penetrates surface 5074 at the illustrated space locations. In one implementation, the nozzle 28 is moved along the illustrated path 5075, the nozzle being temporarily lowered at locations 5076 towards surface 5074, diving or dipping towards surface 5074 during ejection of polymer material, followed by vertical lifting of nozzle 28 away from surface 5074 and translation of nozzle 28 across surface 5074 to the next location 5076.

Solidification of the polymer material, following penetration, provides spaced mechanical interlocks or anchors with respect to the perforate panel 5071. Anchors 5073 secure surface portion 5072 in place to inhibit separation of line 5070 from panel 5071. Because anchors 5073 are spaced, such securement is achieved with less material and less added weight to footwear 5020.

As shown by broken lines, in some implementations, an additional layer 5078 may be formed on top of surface portion 5072. In some implementations, the additional layer 5078 may comprise a polymer material and may be extruded by system 20. In some implementations, additional layer 5078 may be applied while the surface portion 5072 is in a liquid state, facilitating fusion or bonding of the layer 5078 to the surface portion 5072. In some implementations, the additional layer 5078 may be formed from the same base polymer material to facilitate fusing. In other implementations, the additional layer 5078 may be formed from a different material. In some implementations, the additional layer 5078 may be in the form of a perforate panel, such as a fabric or textile, wherein the additional layer 5078 and the surface portion 5072 are pressed towards one another while surface portion 5072 is in a liquid state such that the surface portion 5072 penetrates and impregnates the perforations of the additional layer 5078. In such implementations, curing or solidification of the surface portion 5072 results in a mechanical interlock with the perforated additional layer 5078. In yet other implementations, the additional layer 5078 may be adhesively bonded to the surface portion 5072 of line 5070.

Figure 51B is a sectional view illustrating portions of an example extruded polymer line 5080 that forms a portion of patterned filament overlay 5034 and that has been extruded or ejected onto the underlying panel 5081 of upper 5030, such using the extruder 26 of fabrication system 20 described above. Line 5080 may be provided in any of the above describe zones of footwear 5020 or in other zones of upper 5030. Line 5080 comprises a line of extruded polymer material resulting from the movement of the nozzle 26 along the path 5085 relative to the underlying panel 5081, wherein the nozzle 28 is gradually raised and lowered relative to the panel's outer surface 5084. Line 5080 gradually transitions between different first portions 5086 that reside completely above surface 5084 and second portions 5087 that have a majority or all of the thickness of such portions at or below surface 5084. In contrast to line 5070 which provides distinct spaced anchor points, line 5080 is anchored to panel 5081 across a larger area of surface 5084, wherein portions of surface 5084 (corresponding to portion 5087) coincide with the outermost surface of upper 5030. In contrast to line 5070, line 5080 undulates along the surface 5084.

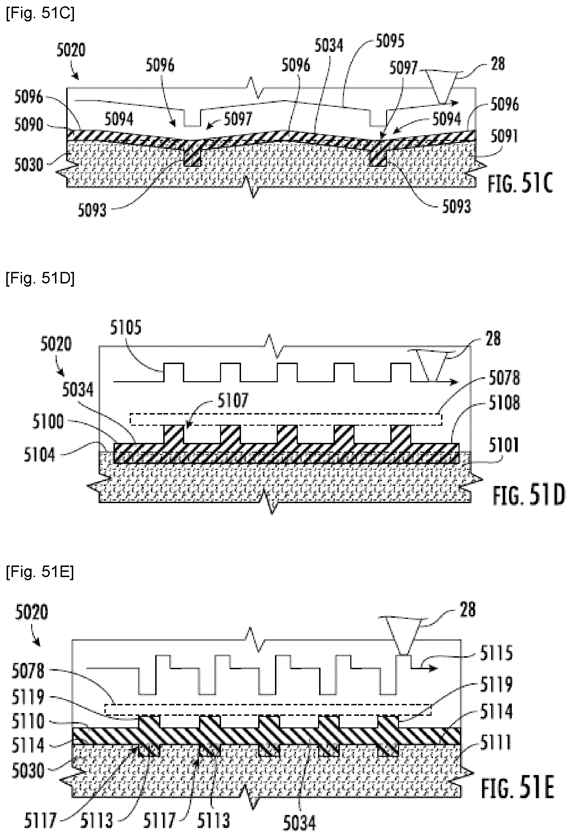

Figure 51C is a sectional view illustrating portions of an example extruded polymer line 5090 that forms a portion of patterned filament overlay 5034 and that has been extruded or ejected onto the underlying panel 5091 of upper 5030, such using the extruder 26 of fabrication system 20 described above. Line 5090 may be provided in any of the above describe zones of footwear 5020 or in other zones of upper 5030. Line 5090 comprises a line of extruded polymer material resulting from the movement of the nozzle 28 along the path 5095 relative to the underlying panel 5091, wherein the nozzle 28 is gradually raised and lowered relative to the outer surface 5094 (similar to the extrusion of line 5080) and is abruptly plunged towards surface 5094 at locations 5097 and subsequently vertically raised to form the more deeply penetrating anchors 5093 at spaced locations. Similar to line 5080, line 5090 gradually transitions between different first portions 5096 which reside completely above surface 5094 and second portions 5097, wherein a majority or all of the thickness of such portions are at or below surface 5094. Line 5090 provides gradual anchoring while at the same time provides even more secure deeper anchors 5093 at spaced locations.

Figure 51D is a sectional view illustrating portions of an example extruded polymer line 5100 that forms a portion of patterned filament overlay 5034 and that has been extruded or ejected onto the underlying panel 5101 of upper 5030, such using the extruder 26 of fabrication system 20 described above. Line 5100 may be provided in any of the above describe zones of footwear 5020 or in other zones of upper 5030. Line 5100 comprises a line of extruded polymer material resulting from the movement of the nozzle 28 along the path 5105, wherein the nozzle 28 is initially lowered such that the extruded polymer material penetrates the surface 5104 of panel 5101 (mechanically interlocking with the perforated material of panel 5101) while also projecting up partially above the surface 5104 along the entire length of line 5100, such as for abrasion resistance. At particular locations 5107, the nozzle 28 is raised during extrusion and then subsequently lowered before being translated to the next location 5107. This results in line 5100 being provided with pillars 5109 that rise further above those portions of line 5100 projecting above surface 5104. Such pillars 5109 may provide additional knobs or protuberances for abrasion resistance at spaced locations along line 5100.

As shown by broken lines, in some implementations, an additional layer 5078 may be formed on top of pillars 5109. In some implementations, the additional layer 5078 may comprise a polymer material and may be extruded by system 20. In some implementations, additional layer 5078 may be applied while the pillars 5109 are in a liquid state, facilitating fusion or bonding of the layer 5078 to the pillars 5109. In some implementations, the additional layer 5078 may be formed from the same base polymer material as line 5100 to facilitate fusing. In other implementations, the additional layer 5078 may be formed from a different material.

In some implementations, the additional layer 5078 may be in the form of a perforate panel, such as a fabric or textile, wherein the additional layer 5078 and the pillars 5109 are pressed towards one another while pillars 5109 are in a liquid state such that the pillars 5109 penetrate and impregnate the perforations of the additional layer 5078. In such implementations, curing or solidification of the polymer material of pillars 5109 results in a mechanical interlock with the perforated additional layer 5078. In yet other implementations, the additional layer 5078 may be adhesively bonded to the pillars 5109 of line 5100. In some implementations, the pillars 5109 create a space between the additional layer 5078 and line 5100. In implementations where the polymer material is flexible or elastic, pillars 5109, alone or in combination with layer 5078, may offer enhanced cushioning for those zones in which line 5100 is formed.

Figure 51E is a sectional view illustrating portions of an example extruded polymer line 5110 that forms a portion of patterned filament overlay 5034 and that has been extruded or ejected on to the underlying panel 5111 of upper 5030, such using the extruder 26 of fabrication system 20 described above. Line 5110 may be provided in any of the above describe zones of footwear 5020 or in other zones of upper 5030.

Line 5110 comprises a line of extruded polymer material resulting from the movement of the nozzle 28 along the path 5115 relative to the underlying panel 5111, wherein the nozzle 28 is translated above the outermost surface 5114 of panel 5111 such that the extruded polymer material extends along and does not penetrate the surface 5114 of panel 5111. At particular locations 5117, the nozzle 28 is initially lowered or plunged towards surface 5114 during extrusion to form an anchor 5113 and raised (without substantial translation along surface 5114) during extrusion to form a pillar 5119 substantially aligned with and vertically above the underlying anchor 5113. After both the corresponding or aligned anchor 5113 and pillar 5119 are formed, the nozzle 28 continues along the path 5115 is translated of longer across surface 5114 to the next location 5117 to form the next corresponding pairs of anchors and pillars. This process is repeated along the length of line 5110.

As with anchors 5073 and 5093, anchors 5113 provide discrete or distinct anchor points that form mechanical interlock with the underlying panel 5111 to robustly secure the remainder of line 5110. As with pillars 5109, pillars 5119 rise above the remainder of line 5110 (those portions of line 5110 between pillars 5119) may be provided with additional knobs or protuberances for abrasion resistance at spaced locations along line 5100. As with line 5100, an additional layer 5078 may be provided on top of pillars 5109 (see discussion of layer 5078 with respect to pillars 5109).

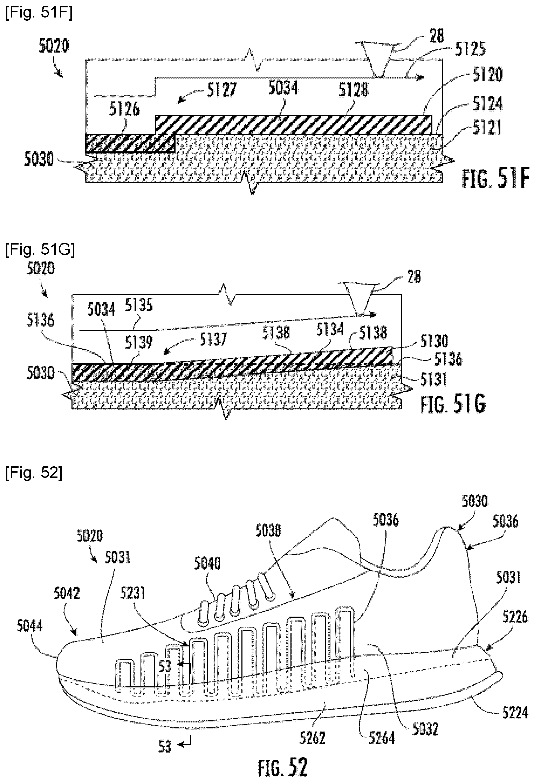

Figure 51F is a sectional view illustrating portions of an example extruded polymer line 5120 that forms a portion of patterned filament overlay 5034 and that has been extruded or ejected onto the underlying panel 5121 of upper 5030, such using the extruder 26 of fabrication system 20 described above. Line 5120 may be provided in any of the above describe zones of footwear 5020 or in other zones of upper 5030. Line 5120 comprises a line of extruded polymer material resulting from the movement of the nozzle 28 along the path 5125, wherein the nozzle 28 is translated at a height above the outermost surface 5124 of panel 5121 such that the extruded polymer material comprises a surface penetrating portion 5126 and, at location 5127, is raised to a height to form a surface covering portion 5128 that extends along the surface 5124 of panel 5121. In some implementations, the height of nozzle 28 above surface 5124 may be lower such that portions of portion 5128 penetrate below surface 5124. Line 5120 provides a stepwise change in a degree of penetration with respect to panel 5121 to provide a stepwise change (abrasion resistance and mechanical interlocking) with respect to those portions of the patterned filament overlay 5034 formed by line 5120.

Figure 51G is a sectional view illustrating portions of an example extruded polymer line 5130 that forms a portion of patterned filament overlay 5034 and that has been extruded or ejected on to the underlying panel 5131 of upper 5030, such using the extruder 26 of fabrication system 20 described above. Line 5130 may be provided in any of the above described zones of footwear 5020 or in other zones of upper 5030. Line 5130 comprises a line of extruded polymer material resulting from the movement of the nozzle 28 along the path 5135, wherein the nozzle 28 is initially translated along surface 5134 and at a height above surface 5134 during extrusion such that extruded polymer forming line 5130 forms a level or flush portion 5139 that is level and flush with surface 5134, at or below surface 5134. At a particular location 5137, nozzle 28 is gradually lifted (in a sloped manner) with respect to surface 5136 to form a ramped portion 5138 of line 5130. The ramped portion 5138 extends from a location completely below or flush with surface 5134 at one end to a location completely above and on top of surface 5134 at another end. The level or flush portion 5139 provides a flat or smooth and level surface for bonding additional layers or overlapping additional layers with respect to panel 5131. The ramp portion 5138 provides a gradual increase in the height of line 5130 above surface 5134 to provide enhanced abrasion resistance without abrupt changes that might otherwise create a stress point.

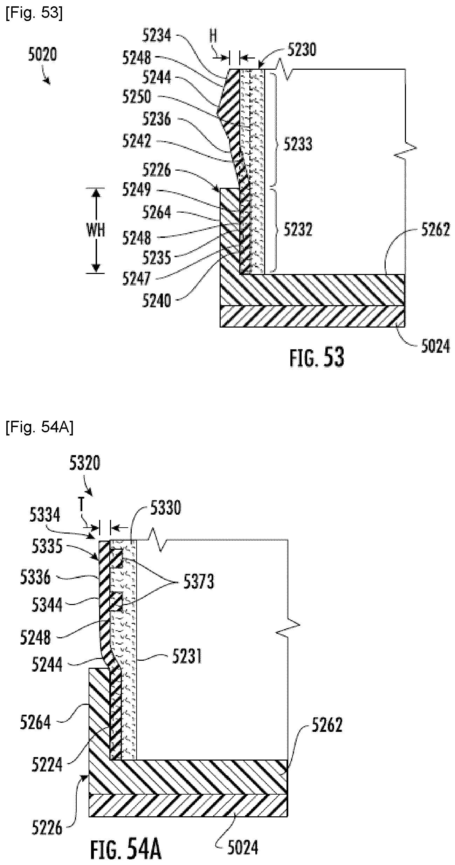

Figures 52 and 53 illustrate portions of an example footwear 5220. Figures 52 and 53 illustrate an example of how portions of a patterned filament overlay may be secured between an upwardly extending wall of an outsole or midsole and an outer surface of one or more panels forming the upper for enhanced retention of both the patterned filament overlay and the upwardly extending wall of the sole (outsole or midsole). Footwear 5220 is similar to footwear 5020 except that it is specifically illustrated as having a midsole 5226 and comprises patterned filament overlay 5234. The remaining components of footwear 5220 which correspond to components of footwear 5020 are numbered similarly.

As shown by Figure 53, upper 5030 comprises a first zone 5232 overlapped by midsole 5226 and a second zone 5233 that extend beyond the midsole 5226. Midsole 5226 comprises a base 5262 and an upwardly extending wall 5264. Base overlies outsole 5024 and is configured to underlie a person's foot received within footwear 5220. Base 5262 may be formed from a foamed polymer material.

Wall 5264 extends or projects upwardly from base 5262 along an outer medial and lateral sides of upper 5030. In the example illustrated, wall 5264 is integrally formed as part of a single unitary body with base 5262. In some implementations base 5262 is foamed while wall 5264 is not foamed. Base 5262 and wall 5264 may be formed from a polymer material such as a thermoplastic polyurethane (TPU). In some implementations, wall 5264 is a separate piece from base 5262, wherein wall 5264 is secured to base 5262 by adhesives, fusing or the like. In such implementations, wall 5264 may include a lower portion that extends horizontally above or below base 5262.

Wall 5264 projects upwardly along upper 5030, upwardly above base 5262 by a distance or wall height WH of, for example, at least 0.125 inches. In some implementations, wall 5264 has a wall height WH of at least 0.375 inches, and in some implementations, at least 0.5 inches. The height of wall 5264 provides structural support and protection for the juncture of upper 5030 and midsole 5226.

In implementations where midsole 5226 is omitted, outsole 5024 may alternatively comprise the upwardly extending wall 5264. In such implementations, the upwardly extending wall 5264 may be integrally formed as part of a single unitary body with the material of outsole 5024 or may comprise a separate wall that is affixed directly or indirectly to those portions of outsole 5024 that are configured to underlie the foot received within footwear 5220.

Patterned filament overlay 5234 comprises a layer of polymer material applied to or deposited upon one or more underlying panels of upper 5030. Layer 5234 is discontinuous in that layer 5234 has openings or voids. In some implementations, layer 5234 may be formed by extruding a fluid or polymer material onto the one or more underlying panels. For example, in some implementations, the polymer may be extruded onto the one or more underlying panels of upper 5030 (prior to the shaping or cutting of the panel to form the shape of the upper 5030) using an extruder, such as the extruder 26 of fabrication system 20 described above. In such implementations, the spacing or height of the nozzle 28 of extruder 26 (in the Z axis dimension) may be varied as the polymer is extruded onto the one or more underlying panels of upper 5030. In some implementations, the temperature, viscosity and/or pressure at which the polymer is extruded may be varied. The nozzle(s) 28 and/or the print bed 24 may be moved relative to one another (in the X, Y and/or Z dimensions) to apply different layouts or patterns of polymer onto the one or more underlying panels of upper 5030.

In the illustrated example, the layout of polymer layer 5234 is provided by a single continuous uninterrupted polymer line 5235 extruded onto the surface of the one or more panels forming upper 5030. Because layer 5234 is provided by a single continuous uninterrupted polymer line that is extruded, the formation of layer 5234 may be more efficient. The ejection of fluid polymer material through the nozzle need not be interrupted. Moreover, extrusion drools or tails resulting when excess material continues to flow out of the die or nozzle after the main extrusion process has stopped are avoided. In other implementations, rather than being formed by a single continuous uninterrupted polymer line that is extruded, polymer layer 5234 may be formed by multiple distinct or discrete extrusions or line segments connected end to end or distinct line segments having ends that are aligned but spaced apart.

In the example illustrated, patterned filament overlay 5234 has a layout comprising a series of undulating continuous square "waves", similar to those portions of layer 5034 in toe zone 5042 of footwear 5020. In the illustrated example, the sinusoidal square waves have an amplitude that varies along the longitudinal length of footwear 5020, wherein the amplitude is greatest in the quarter zone 5038 and gradually decreases in the toe zone 5042. As with patterned filament overlay 5234, patterned filament overlay 5234 provides the outer surface of upper 5030 with enhanced abrasion resistance with proportionally less incremental weight. In other implementations, polymer layer 5234 may have other layouts and/are densities than that shown. For example, layer 5234 may have either of the layouts shown in Figure 49A and 49B.

In the illustrated example, the one or more underlying panels of upper 5030 upon which the polymer is applied (extruded) comprise a textile, grid or fabric having perforations. As result, the polymer may be applied with a sufficiently low viscosity and at a sufficient pressure so as to penetrate or impregnate the textile, grid or fabric, forming a mechanical bond with the one or more underlying panels of upper 5030, upon solidification and/or curing. In some implementations the underlying panels of upper 5030 and the polymer forming the patterned filament overlay may be of the same polymeric base material. As result, the applied polymer may further fuse to the one or more underlying layers of the upper 5030 for enhanced bonding.

As shown by Figure 53, the polymer line 5235 has a varying penetration attribute and a varying thickness attribute along its length, wherein the attribute varies depending upon the location of the line. In the example illustrated, each substantially upwardly and downwardly extending segment 5236 of line 5235 has attributes that vary depending upon proximity of the particular portion of the segment to midsole 5226 (or outsole 5024) and lacing zone 5040 (Figure 52). In the illustrated example, segment 5236 comprises fully embedded portion 5240, partially embedded portion 5242 and abrasion resistance portion 5244.

Fully embedded portion 5240 projects into a surface of and is mechanically interlocked to at least one of the midsole 5226 and the upper 5030 in the zone 5233 of upper 5030. In the example illustrated, the fully embedded portion 5240 is fully embedded into and impregnates the textile material of zone 5231 of upper 5030 such that the outer surface 5247 of the fully embedded portion 5240 is flush or level with the outer surface 5248 of the underlying panel of upper 5030. Both the outer surface 5248 of upper 5030 in zone 5233 and the outer surface 5247 of the fully embedded portion 5240 of polymer layer 5234 are directly adjacent to or abutting (less any intervening adhesive) the inner surface 5249 of wall 5264.

Because the fully embedded portion 5240 of polymer layer 5234 does not rise or project outwardly beyond the outer surface 5248 of upper 5030 in zone 5233, layer 5234 does not further space the outer surface 5248 of upper 5030 in zone 5231 from the inner surface 5247 of wall 5264. As result, the inner surface 5247 of wall 5264 may either be directly fused (welded) to one or both of the material of layer 5234 or that of upper 5030 in zone 5233 or may be directly bonded to one or both of layer 5234 or upper 5030 in zone 5233 by an intermediate adhesive, providing a robust and reliable junction or connection between outer wall 5264 and zone 5233 of upper 5030 while also anchoring portions of layer 5234 using outer wall 5264. Such anchoring may be especially beneficial where high degrees of stress and strain occur as different portions of the footwear are flexed during walking or running.

Partially embedded portion 5242 comprises that portion of segment 5236 of line 5235 that is partially inside of or below the outer surface 5248 of upper 5030 in zone 5233 and that is partially outside or beyond the outer surface 5248 of upper 5030 in zone 5233. In the illustrated example, partially embedded portion 5242 gradually transitions from the fully embedded portion 5240 to the abrasion resistance portion 5244. This gradual transition is similar to the transition shown in Figure 51G. Because the transition is gradual and ramped, rather than abrupt or step-like, similar to what is shown in Figure 51F, stresses experienced at the junction of line 5235 and upper 5030 along line 5235 during flexing of footwear 5220 during use are also gradual. Accordingly, potential stress concentrations at sharp corners can be alleviated. The gradual distribution of stress of during flexing of footwear 5220 along line 5235 may reduce stresses that may cause a potential separation of line 5235 and of layer 5234 from upper 5030 where the end of wall 5264 and the exposed zone 5233 of upper 5030 meet. In some implementations, it may be desirable for the transition to be abrupt, similar to what is shown in Figure 51F, such as in low-stress locations of the footwear.

Abrasion resistance portion 5244 extends from partially embedded portion 5242 upwardly towards lacing zone 5040 (shown in Figure 52). Abrasion resistance portion 5244 has little or no penetration or impregnation of the outer surface 5248 of upper 5030. Abrasion resistance portion 5244 projects beyond or rises above outer surface 5248 of upper 5030 in zone 5233. In the example illustrated, the height H of abrasion resistance portion 5244 projecting beyond or above outer surface 5248 ("height" meaning the distance above surface 5248) changes along the length of at least some of lines 5235. In the example illustrated, the height H gradually increases from partially embedded portion 5242 to a thickness peak 5250 and then gradually decreases as it approaches lacing zone 5040. The increased thickness beyond outer surface 5248 of upper 5030 at peak 5250 provides enhanced abrasion resistance. Although the peak 5250 is pointed, in other implementations, peak 5250 may have a length, providing a thickness plateau for a larger amount of maximum abrasion resistance along portion 5244. The reduced thickness of abrasion resistance portion 5244 as it approaches lacing zone 5040 provides enhanced flexibility of upper 5030 in regions more proximate to lacing zone 5040.

In other implementations, abrasion resistance portion 5244 may have a uniform unchanging height H beyond outer surface 5248 of upper 5030 or may have a thickness that varies in other manners (ramping upwardly in one direction, ramping downwardly in one direction, changing in a stepwise manner, or undulating). As shown by broken lines, rather than extending along outer surface 5248 with little or no penetration of outer surface 5248, in some implementations, the polymer material may be extruded at a greater pressure during the deposition process, such that the penetration of the textile material of upper 5030 is maintained to some extent as the die or nozzle is being moved (and/or the bed being moved). In some implementations, the degree of penetration by the line 5235 may vary along the length of portion 5244.

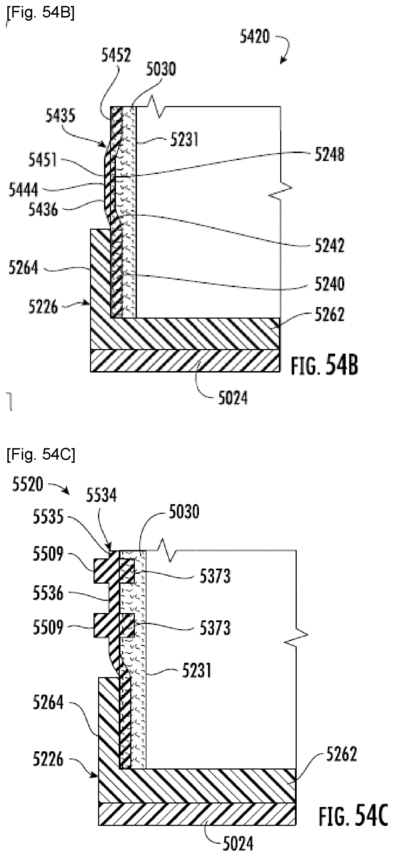

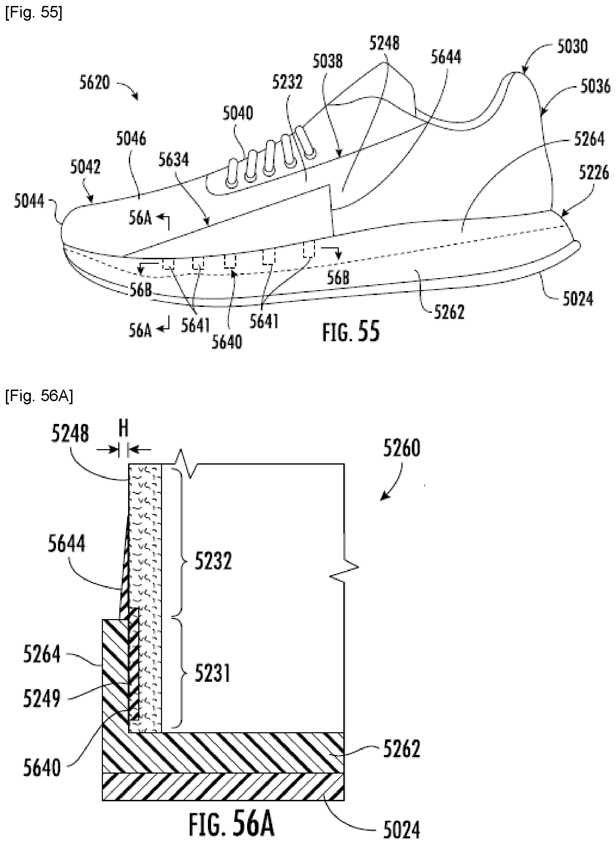

Figures 54A, 54B and 54C illustrate alternatives for the extruded polymer lines 5235 of patterned filament overlay 5234. Figure 55A illustrates a portion of a footwear 5320 which is similar to footwear 5220 except that footwear 5320 comprises patterned filament overlay 5334 in place of patterned filament overlay 5234. Patterned filament overlay 5334 comprises polymer lines 5335 which have a layout similar to that of line 5235 except that lines 5335 have vertical segments 5336. Each of segments 5336 is similar to corresponding segments 5236 except that segments 5336 each comprise abrasion resistance portion 5344 in place of portion 5244. Those remaining components of segment 5335 which correspond to components of segment 5235 are numbered similarly.

Abrasion resistance portion 5344 extends upwardly (in a direction away from outsole 5024) from partially embedded portion 5242 across the outer surface 5248. Abrasion resistance portion 5344 is substantially level, having an outer surface that is substantially parallel to the underlying outer surface 5248 of upper 5030. Said another way, abrasion resistance portion 5344 has a uniform thickness T above outer surface 5248 as it extends upwardly. In other implementations, abrasion resistance portion 5344 may have a nonuniform thickness T, similar to abrasion resistance portion 5244 described above.

Abrasion resistance portion 5344 further comprises anchors 5373. Anchors 5373 are similar to anchors 5073 described above. and penetrate upper 5030, extending from surface 5248 and penetrating into a portion of panel 5031. Anchors 5373 may be formed during the polymer deposition process discussed above by lowering the nozzle 28 into closer proximity to surface 48 during the ejection of the polymer material, increasing the pressure at which the polymer material is being ejected and/or lowering the viscosity of the polymer material being ejected such that the ejected polymer penetrates surface 5248 at the illustrated spaced locations.

Solidification of the polymer material, following penetration, provides spaced mechanical interlocks or anchors with respect to the perforate upper 5030. Anchors 5373 secure abrasion resistance portion 5344 in place to inhibit separation of line 5335 from upper 5030. Because anchors 5373 are spaced, such securement is achieved with less material and less added weight to footwear 5220.

Figure 54B illustrates portions of an example footwear 5420 which is similar to footwear 5220 except that footwear 5420 comprises patterned filament overlay 5434 in place of patterned filament overlay 5234. Patterned filament overlay 5434 comprises polymer lines 5435 which have a layout similar to that of line 5235 except that lines 5435 have vertical segments 5436. Each of segments 5436 is similar to corresponding segments 5236 except that segments 5436 each comprise abrasion resistance portion 5444 in place of abrasion resistance portion 5244. Those remaining components which correspond to components of segment 5235 are numbered similarly.

Abrasion resistance portion 5444 extends upwardly (in a direction away from outsole 5024) from partially embedded portion 5242 across the outer surface 5248. Abrasion resistance portion 5444 comprises a first portion 5451 that is substantially level and that partially penetrates outer surface 5248 and partly projects above or beyond outer surface 5248. Second portion 5452 extends upwardly from the first portion 5451 and penetrates upper 5030 to a greater extent as compared to first portion 5451. In the example illustrated, second portion 5452 penetrates outer surface 5248 such that portion 5452 is substantially flush with the outer surface 5248 of upper 5030. This construction results in the first portion 5451 may surrounded on both of its ends with portions of line 5435 that penetrate upper 5030 to retain the first portion 5451 in place. Although portions 5451 and 5452 are illustrated as having the same uniform thickness with different extents of penetration, in other implementations, portions 5451 and 5452 may have differing relative thicknesses.

Figure 54C illustrates portions of an example footwear 5520 which is similar to footwear 5220 except that footwear 5520 comprises patterned filament overlay 5534 in place of patterned filament overlay 5234. Patterned filament overlay 5534 comprises polymer lines 5535 which have a layout similar to that of lines 5235 except that lines 5535 have vertical segments 5536. Each of segments 5536 is similar to segments 5336 described above except that segments 5536 additionally comprise pillars 5519. Those remaining components which correspond to components of segment 5235 are numbered similarly.

Pillars 5519 are similar to pillars 5119 described above. Pillars 5519 may be formed in a fashion similar to the way in which pillars 5119 are formed as described above with respect to Figure 51E. Similar to pillars 5119 (or pillars 5109), pillars 5519 may offer enhanced abrasion resistance.

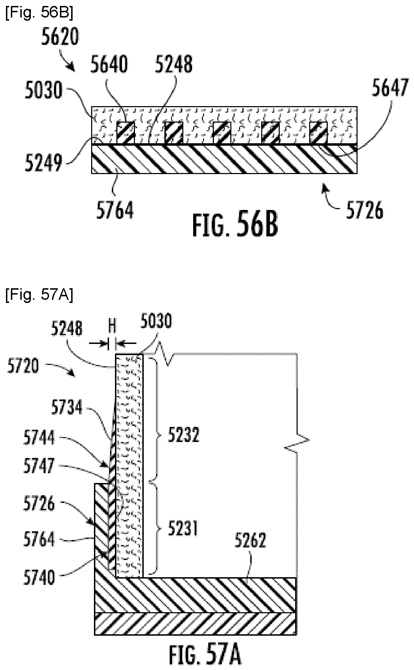

Figures 55, 56A and 56B illustrates portions of an example footwear 5620. Such figures illustrate an example of how portions of a polymer layer may be secured between an upwardly extending wall of a outsole or midsole and an outer surface of one or more panels forming the upper for enhanced retention of both the polymer layer and the upwardly extending wall of the sole (outsole or midsole). Figure 56A further illustrates how portions polymer layer projecting or rising above the outsole or midsole may be continuous, solid or uninterrupted (in contrast to the above-described patterned filament overlay).

Footwear 5620 is similar to footwear 5220 described above except that footwear 5620 comprises polymer layer 5634 in place of patterned filament overlay 5234. Those remaining components of footwear 5620 which correspond to components of footwear 5220 are numbered similarly.

Polymer layer 5634 extends over one or more underlying panels of upper 5030 to offer, for example, enhanced abrasion resistance, structural stability, flex control or the like. Polymer layer 5634 is provided by a single continuous uninterrupted extrusion extending over the surface of the one or more panels forming upper 5030. Because layer 5634 is provided by a single continuous uninterrupted extrusion, the formation of layer 5634 may be more efficient. The ejection of fluid polymer material through the nozzle need not be interrupted. Moreover, extrusion drools or tails resulting when excess material continues to flow out of the die or nozzle after the main extrusion process has stopped are avoided. In other implementations, rather than being formed by a single continuous uninterrupted polymer extrusion, polymer layer 5634 may be formed by multiple distinct or discrete extrusions connected end to end our partially overlapping one another.

In the example illustrated, polymer layer 5634 has a layout comprising a fully embedded portion 5640 and an exposed abrasion resistance portion 5644. As shown by Figures 56A and 56B, fully embedded portion 5640 comprises a series of longitudinally inward spaced tabs, fingers or protuberances 5641 extending downward from above a top edge of wall 5264 of midsole 5226 towards outsole 5024, being sandwiched between wall 5264 of midsole 5226 and the one or more panels of upper 5030.

In the illustrated example, the one or more underlying panels of upper 5030 upon which the polymer is applied (extruded) comprise a textile, grid or fabric having perforations. As result, the polymer, forming inward protuberances 5641, may be applied with a sufficiently low viscosity and at a sufficient pressure so as to penetrate or impregnate the textile, grid or fabric, forming a mechanical bond with the one or more underlying panels of upper 5030, upon solidification and/or curing. In some implementations the underlying panels of upper 5030 and the polymer forming polymer layer may be of the same polymeric base material. As result, the applied polymer may further fuse to the one or more underlying layers of the upper 5030 for enhanced bonding.

In the example illustrated, each of the inward protuberances 5641 of the fully embedded portion 5640 is fully embedded into and impregnates the textile material of zone 5231 of upper 5030 such that the outer surface 5647 of the fully embedded portion 5640 is flush or level with the outer surface 5248 of the underlying panel of upper 5030. Both the outer surface 5248 of upper 5030 in zone 5231 and the outer surface 5647 of the fully embedded portion 5640 of layer 5234 are directly adjacent to or abutting (less any intervening adhesive) the inner surface 5249 of wall 5264.

Because the fully embedded portion 5640 of layer 5634 does not rise or project outwardly beyond the outer surface 5248 of upper 5030 in zone 5231, layer 5234 does not further space the outer surface 5248 of upper 5030 from the inner surface 5649 of wall 5264. As result, the inner surface of wall 5264 may either be directly fused (welded) to one or both of the material of layer 5634 or that of upper 5030 or may be directly bonded to one or both of layer 5634 or upper 5030 by an intermediate adhesive, providing a robust and reliable junction or connection between outer wall 5264 and upper 5030 while also anchoring portions of layer 5634 using outer wall 5264. Such anchoring may be especially beneficial in areas of the footwear 5620 that may be exposed to high degrees of stress and strain as different portions of the footwear are flexed during walking or running.

Abrasion resistance portion 5644 extends from fully embedded portion 5240 upwardly towards lacing zone 5040 (shown in Figure 55). Abrasion resistance portion 5244 has little or no penetration or impregnation of the outer surface 5248 of upper 5030. Abrasion resistance portion 5644 projects beyond or rises above outer surface 5248 of upper 5030 in zone 5233. As shown by Figure 56A, the height H of abrasion resistance portion 5644 projecting beyond or above outer surface 5248 ("height" meaning the distance above surface 5248) gradually decreases as it approaches lacing zone 5040. The increased thickness along wall 5264 provides enhanced abrasion resistance. The reduced thickness of abrasion resistance portion 5644 as it approaches lacing zone 5040 provides enhanced flexibility of upper 5030 in regions more proximate to lacing zone 5040.

In other implementations, abrasion resistance portion 5644 may have a uniform unchanging height H beyond outer surface 5248 of upper 5030 or may have a thickness that varies in other manners (ramping upwardly in one direction, ramping downwardly in one direction, changing in a stepwise manner, or undulating).

Although abrasion resistance portion 5644 comprises a continuous uninterrupted layer or panel formed by the polymer extrusion, in some implementations, portion 5644 may alternatively be extruded in a pattern so as to have openings or so as to be discontinuous. In some implementations, abrasion resistance portion 5644 may be covered by an overlying film, panel or sheet which is fused to portion 5644 (while portion 5644 is in a molten state) or bonded to portion 5644.

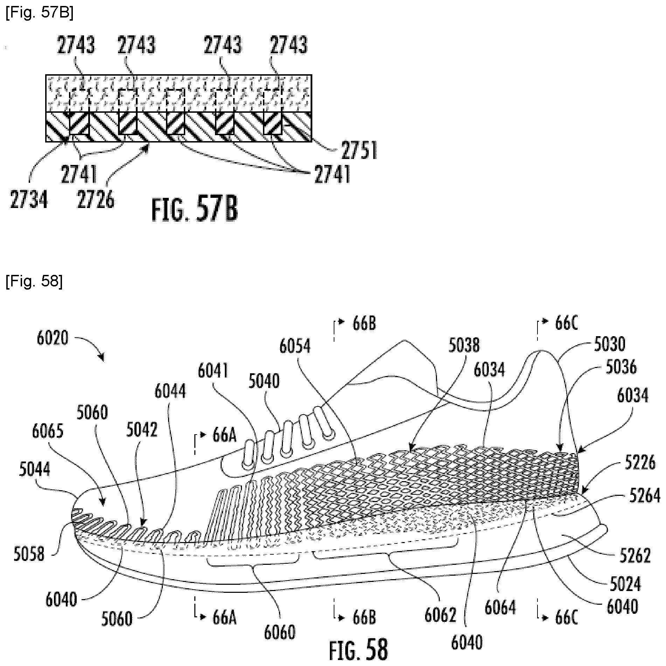

Figures 57A and 57B are sectional views illustrating portions of an example footwear 5720. Footwear 5720 is similar to footwear 5620 described above except that footwear 5720 comprises midsole 5726 and polymer layer 5734 in place of midsole 5226 and polymer layer 5634, respectively. Those remaining components of footwear 5720 which correspond to components of footwear 5620 are numbered similarly and/or are shown in Figure 55.

Midsole 5726 is similar to midsole 5226 except that midsole 5726 comprises an outer wall 5764 having one or more recesses or detents 5751 projecting into outer wall 5764 and facing upper 5030. Each of such detents extends from a top edge of wall 5764 downward towards base 5262. In some implementations, detents 5751 may be molded as part of outer wall 5764. In some implementations, detents 5751 may be formed in wall 5764 by a material removal process.

Polymer layer 5734 extends over one or more underlying panels of upper 503 to offer benefits, including enhanced abrasion resistance. Polymer layer 5634 is provided by a single continuous uninterrupted extrusion extending over the surface of the one or more panels forming upper 5030. Because layer 5634 is provided by a single continuous uninterrupted extrusion, the formation of layer 5634 may be more efficient. The ejection of fluid polymer material through the nozzle as described above need not be interrupted. Moreover, extrusion drools or tails that can result when excess material continues to flow out of the die or nozzle after the main extrusion process has stopped are avoided. In other implementations, rather than being formed by a single continuous uninterrupted polymer extrusion, polymer layer 5634 may be formed by multiple distinct or discrete extrusions connected end to end our partially overlapping one another.

In the example illustrated, polymer layer 5634 has a layout comprising a fully embedded portion 5740 and an abrasion resistance portion 5744. As shown by Figures 57A and 57B, fully embedded portion 5640 comprises a series of longitudinally spaced tabs, fingers or protuberances 5741 extending downward from above a top edge of wall 5764 of midsole 5726 towards outsole 5024, projecting or extending into and being received by corresponding detents 5751, between wall 5264 of midsole 5226 and the one or more panels of upper 5030.

In the illustrated example, the one or more underlying panels of upper 5030 upon which the polymer is applied (extruded) comprise a textile, grid or fabric having perforations. As result, as indicated by broken lines 5743, in some implementations, the polymer, forming protuberances 5741, may be applied with a sufficiently low viscosity and at a sufficient pressure during the deposition process discussed above, so as to also penetrate or impregnate the textile, grid or fabric, forming a mechanical bond with the one or more underlying panels of upper 5030, upon solidification and/or curing. In such implementations, the fully embedded portions 5740 project into and beyond the adjacent surfaces of both outer wall 5764 and upper 5030 to mechanically interlock with both midsole 5726 and upper 5030. In some implementations the underlying panels of upper 5030 and the polymer forming polymer layer may be of the same polymeric base material. As result, the applied polymer may further fuse to the one or more underlying layers of the upper 5030 for enhanced bonding.

In some implementations, the polymer forming protuberances 5741 may not be extruded at a pressure or may be extruded with the nozzle at a sufficient height such that the polymer does not penetrate the one or more panels of upper 5030. In some implementations or panels of upper 5030 may not be perforate, a textile, a grid or other structure that might otherwise facilitate or permit penetration by the polymer. In such implementations, the polymer resides on the top or outer surface of the one or more panels of upper 5030 while residing within the detents 5751 provide a mechanical interlock between layer 5734 and midsole 5726. In some implementations, polymer layer 5634 is not extruded or ejected, but comprises a preformed solid panel having protuberances 5741, wherein the panel is first fused or bonded to upper 5030, and the midsole 5726 having the preformed detents 5751 is positioned over layer 5734 with the detents 5751 receiving the protuberances 5741. In yet other implementations, the preformed solid panel forming layer 5734 is first fused or bonded to upper 5030, wherein the midsole 5726 is molded over and about upper 5030.

In the example illustrated, each of the protuberances 5741 of the fully embedded portion 5740 is fully embedded into the outer wall 5764 of midsole 5726 so as to be flush or level with the outer surface 5248 of the underlying panel of upper 5030. Because the fully embedded portion 5740 of layer 5734 does not rise or project outwardly beyond the outer surface 5747 of outer wall 5764, layer 5234 does not further space the outer surface 5747 apart from the outer surface of upper 5030. As result, the inner surface of wall 5764 may either be directly fused (welded) to upper 5030 or may be directly bonded to upper 5030 by an intermediate adhesive. Because both the outer surface 5248 of upper 5030 in zone 5232 and the outer surface 5747 of the fully embedded portion 5740 of layer 5734 are directly adjacent to or abutting (less any intervening adhesive) the inner surface 5749 of wall 5764, a larger surface area between the mutually contacting faces achieved to provide a robust bond.

Abrasion resistance portion 5744 is similar to abrasion resistance portion 5644 described above. Abrasion resistance portion 5744 extends from fully embedded portion 5740 upwardly towards lacing zone 5040 (shown in Figure 55). Abrasion resistance portion 5744 has little or no penetration or impregnation of the outer surface 5248 of upper 5030. Abrasion resistance portion 5644 projects beyond or rises above outer surface 5248 of upper 5030 in zone 5233. As shown by Figure 57A, the height H of abrasion resistance portion 5644 projecting beyond or above outer surface 5248 ("height" meaning the distance above surface 5248) gradually decreases as it approaches lacing zone 5040. The increased thickness along wall 5264 provides enhanced performance characteristics, such as abrasion resistance, structural stability, flex control or the like. The reduced thickness of abrasion resistance portion 5644 as it approaches lacing zone 5040 provides enhanced flexibility of upper 5030 in regions more proximate to lacing zone 5040.

In other implementations, abrasion resistance portion 5744 may have a uniform unchanging height H beyond outer surface 5248 of upper 5030 or may have a thickness that varies in other manners (ramping upwardly in one direction, ramping downwardly in one direction, changing in a stepwise manner, or undulating).

In some implementations, where upper 5030 is perforate, a textile, grid or other structure capable of being penetrated, the abrasion resistance portion 5744 may additionally penetrate the outer surface of upper 5030. Although abrasion resistance portion 5744 comprises a continuous uninterrupted layer or panel formed by the polymer extrusion, in some implementations, portion 5644 may alternatively be extruded in a pattern so as to have openings or so as to be discontinuous. In some implementations, abrasion resistance portion 5744 may be covered by an overlying film, panel or sheet which is fused to portion 5644 (while portion 5744 is in a molten state) or bonded to portion 5744.

Figures 58-66 illustrate portions of an example footwear 6020. Figures 58-66 illustrate an alternative patterned filament overlay construction. Footwear 6020 is similar to footwear 5220 except that footwear 6020 comprises patterned filament overlay 6034 in place of patterned filament overlay 5234. Those remaining components of footwear 6020 which correspond to components of footwear 5220 are numbered similarly.

Patterned filament overlay 6034 continuously extends across and over portions of each of zones 5036, 5038 and 5042 of upper 5030. Patterned filament overlay 6034 comprises a layer of polymer material applied to or deposited upon one or more underlying panels of upper 5030. Layer 6034 is discontinuous in that layer 6034 has openings or voids. In some implementations, layer 6034 may be formed by extruding a fluid or polymer material onto the one or more underlying panels. For example, in some implementations, the polymer may be extruded onto the one or more underlying panels of upper 5030 (prior to the shaping or cutting of the panel to form the shape of the upper 5030) using an extruder, such as the extruder 26 of fabrication system 20 described above. In such implementations, the spacing or height of the nozzle 28 of extruder 26 (in the Z axis dimension) relative to the upper 5030 may be varied as the polymer is extruded onto the one or more underlying panels of upper 5030 during the deposition process. In some implementations, the temperature, viscosity and/or pressure at which the polymer is extruded may be varied. The nozzles 28 and/or the print bed 24 may be moved relative to one another (in the X, Y and/or Z dimensions) to apply different layouts or patterns of polymer onto the one or more underlying panels of upper 5030.

In the illustrated example, the one or more underlying panels upon which the polymer is applied (extruded) may comprise a textile, grid or fabric having perforations. As result, the polymer may be applied with a sufficiently low viscosity and at a sufficient pressure so as to penetrate or impregnate the textile, grid or fabric, forming a mechanical bond with the one or more underlying panels of upper 5030, upon solidification and/or curing. In some implementations the underlying panels of upper 5030 and the polymer forming the patterned filament overlay may be of the same polymeric base material. As result, the applied polymer may further fuse to the one or more underlying layers of the upper 5030 for enhanced bonding.

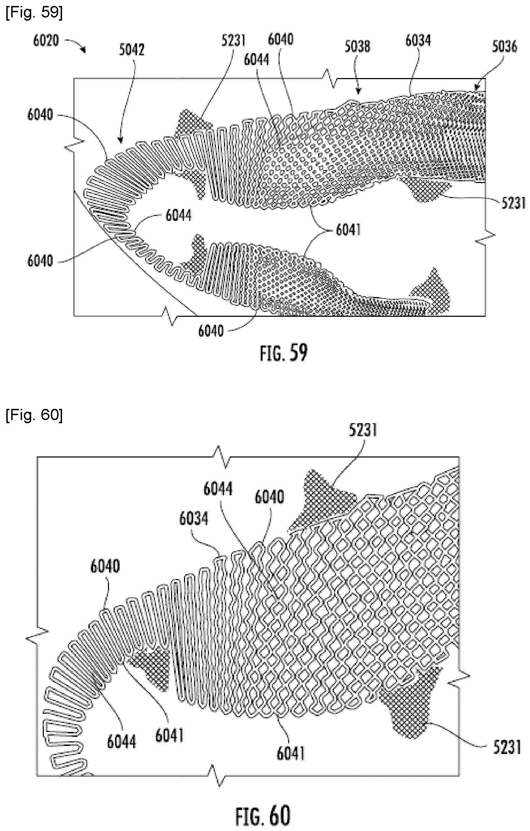

Figures 59-62 illustrate a single panel 5231 (portions of which are shown in detail) upon which patterned filament overlay 6034 has been extruded by the nozzle 28 of extruder 26 during the deposition process described above. Figures 59-62 illustrate the panel 5231 with the patterned filament overlay 6304 prior to being cut and reshaped for the forming of upper 5030. As shown by Figures 59-62, patterned filament overlay 6034 may have at least one varying attribute amongst different zones of the upper 5030. The attributes of the patterned filament overlay 6034 may be varied amongst different zones so as to accommodate different performance requirements of different zones as well as different stress and abrasion levels associated with different zones. The at least one varying attribute may comprise one or more attributes including physical attributes (e.g., layout, thickness, density, penetration and layering) and performance attributes (e.g., abrasion resistance, flexibility, structural support, etc.).

In toe zone 5042, patterned filament overlay 6034 is similar to those portions of patterned filament overlay 5034 in toe zone 5042 of footwear 5020. Layer 6034 comprises a layout formed by a series of spaced lines 5058 deposited upon the underlying panel or surface of upper 5030. In the example illustrated, the multiple spaced (non-intersecting) lines 5058 are connected at their ends 5060 such that the different lines may be formed by a single deposition process without the flow of polymeric material through the nozzle having to be paused or stopped (avoiding ejection tails and providing for more efficient deposition). Although the spaced lines 5058 are illustrated as being linear and as being joined to one another at linear orthogonal ends 5060, in some implementations, the spaced lines 5058 may be zigzagged, wavy or the like, may be joined by rounded turns rather than flat or orthogonal ends 5060. The spacing between consecutive lines may also be different from what is shown or may vary amongst different pairs of consecutive lines.

Patterned filament overlay 6034 comprises two distinct layouts 6060 and 6062 in quarter zone 5038. Layouts 6060 is similar to the layout found in toe zone 5042 except that the individual "waves" have greater amplitudes, extending further upwards into close proximity to lacing region 5040.

Layout 6062 extends between layout 6060 and those portions of layer 6034 in the heel zone 5036. Layouts 6062 has a pattern similar to that of the patterned filament overlay 5034 in quarter zone 5038 of footwear 5020. In particular, patterned filament overlay 6034 comprises wavy lines 6054 which are patterned so as to blend or merge together at junctions 6056, where such wavy lines come together. At such junctions 6056, the lines may, in some implementations, be fused to one another or may be integral with one another (where the materials are in an un-solidified or uncured state at the time that the two lines are joined at the junction 6056).

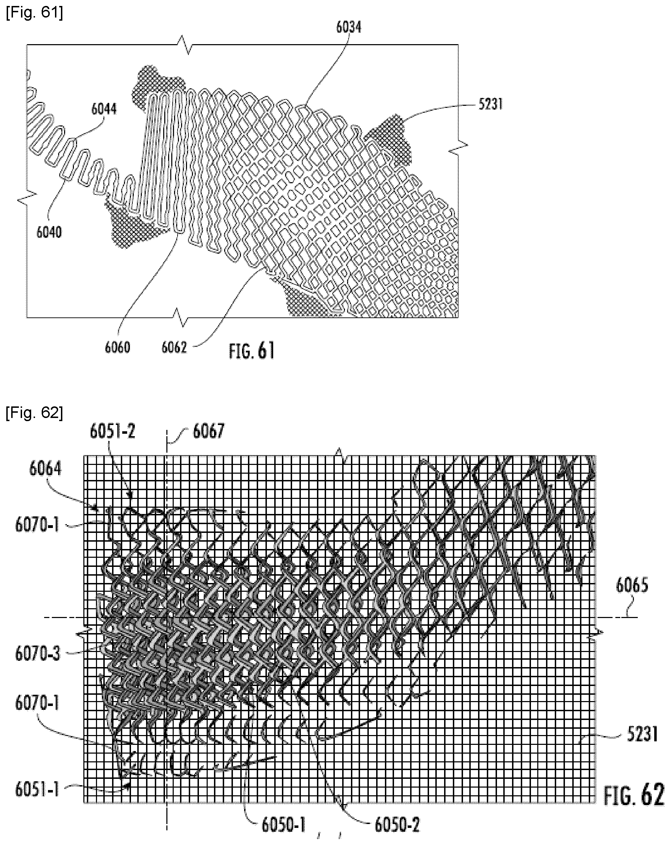

Patterned filament overlay 6034 comprises a layout 6064 in heel zone 5036. Although layout 6064 comprises crisscrossing segments or lines (somewhat similar to those of the patterned filament overlay 6034 and heel zone 5036 of footwear 5020), such crisscrossing is achieved with a series of zigzagging lines. Figure 62 illustrates a portion of the panel 5231 and a portion of patterned filament overlay 6034 ejected or extruded onto panel 5231 prior to the panel 5231 being cut and shaped to form the upper 5030.

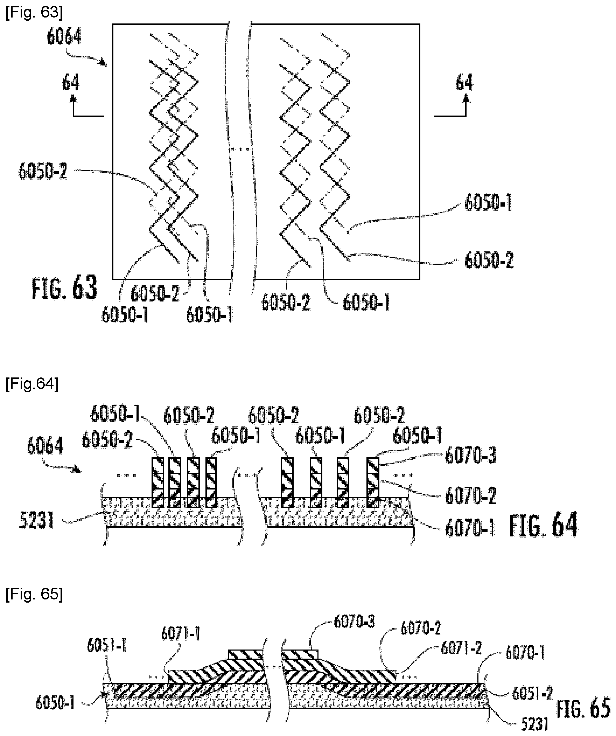

Figure 63 is an enlarged view schematically illustrating portions of the layout 6064 shown in Figure 62. Layout 6064 comprises a series of vertical zigzag extruded or ejected polymer lines 6050-1 and 6050-2 (collectively referred to as lines 6050). Lines 6050-1 are initially deposited directly upon panel 5231. Lines 6050-2 are horizontally and vertically offset (out of phase) from line 6050-1 such that lines 6050-2 cross lines 6050-1. In implementations where the polymer material is somewhat elastic, the zigzag nature of line 6050-1 and 6050-2 may, in some implementations, facilitate enhanced stretch of panel 5231 in the vertical direction without compromising the integrity of such lines.

As further shown by Figures 63 and 64, layout 6064 has a density that varies along axis 6065 (shown in Figure 62). The number of pairs of line 6050-1, 6050-2 increases per unit area along axis 6065 as the heel of footwear 6020 is approached. Said another way, consecutive zigzag lines 6050-1 and consecutive zigzag lines 6050-2 closer to the heel are more closely spaced than the consecutives zigzag line 6050-1 and consecutive zigzag lines 6050-2 closer to the toe 5044, respectively. This greater density within heel zone 5036 towards the heel end of footwear 5020 provides greater abrasion resistance at the rear of the footwear or heel of the footwear.

As shown by Figures 64 and 65 patterned filament overlay 6034 also has a layering that varies. Each of zigzag lines 6050-1 and 6050-2 is formed from one or more individually deposited zigzag layers of polymer material, wherein the layers are vertically stacked along a centerline of the zigzag line 6050-1, 6050-2 or are slightly offset so as to extend side-by-side along the centerline of the zigzag line 6050-1, 6050-2. In some implementations, the polymer material of each layer is ejected or extruded from the nozzle at a temperature sufficient to melt the underlying layer such that the stacked layers fused to one another. In some implementations, the polymer layer of each layer is ejected on top of a previously deposited layer while the previously deposited layer is still in a liquid or molten state prior to solidification, cooling or curing. In the example illustrated, the number of layers along the length of each zigzag line 6050-1, 6050-2 may vary such that the height of a particular zigzag line 6050-1, 6050-2 may vary along its vertical length (in the vertical direction of axis 6067).

Figure 65 illustrates one example of how a particular zigzag line 6050-1 or 6050 has a varying number of layers along its vertical length. Figure 65 is a sectional view of an individual line 6050-1 along this zigzag centerline of line 6050-1 in that a vertical direction. As shown by Figure 65, in the illustrated example, a base layer 6070-1 underlies an entire length of line 6050-1. Base layer 6070-1 may be in direct contact with the surface of panel 5231. Base layer 6070-1 may penetrate or embed within and below the surface of panel 5231. As shown in Figure 65 and as described above, base layer 6070-1 may have a varying thickness along its length and may have a varying degree of penetration along its length. In the illustrated example, a lower end of base layer 6070-1, proximate to the outer wall 5264 of midsole 5226 is completely embedded at or below the surface of panel 5231 of upper 5030 to facilitate more secure bonding of outer wall 5264 of midsole 5226. Likewise, the upper end of base layer 5070-1, proximate to lacing region 5040 is completely embedded at or below the surface of panel 5231 for more secure retention to upper 5030. Central portions of layer 6070-1 project above or beyond the surface of panel 5231 to provide central portions of line 6050-1 with a greater height for providing enhanced abrasion resistance.

Although base layer 6070-1 is illustrated as having a uniform thickness, in some implementations, base layer 6070-1 may have a nonuniform thickness so as to form anchors. For example, base layer 6070-1 may have any of the configurations shown and described above with respect to Figures 51A, 51B or 51C.

Base layer 6070-1 of line 6050-2 may have a similar construction as base layer 6070-1 of line 6050-1 except that base layer 6070-1 of lines 6050-2 rises above 5231 in those locations where line 6050-2 is bridging over or crisscrossing over underlying portions of line 6050-1.

As further shown by Figure 65, central regions of lines 6050 each comprise a second layer 6070-2 vertically stacked upon and layered above or slightly horizontally offset from base layer 6070-1. Second layer 6070-2 may extend across a majority of layer 6070-1, terminating at ends spaced from the longitudinal ends of layer 6070-1 and the ends of the line 6050-1 or 6050-2. In the illustrated example, layer 6070-2 has an end 6071-1 spaced from the lower and 6051-1 (the end that is sandwiched between upper 5030 and midsole 5226) by distance of, for example, at least 0.125 inches and in some implementations, at least 0.250 inches to facilitate secure bonding sufficient to accommodate stresses. End 6071-2 may be spaced from the longitudinal end 6051-2 of layer 6070-1 by at least 0.125 inches.

In the illustrated example, middle regions of lines 6050 each comprise a third layer 6070-3 vertically stacked upon (in direct contact with) and layered above the underlying layer 6070-2. As with the polymer material of layer 6070-2, the polymer of layer 6070-3 may be ejected at a temperature so as to melt the polymer deal of the underlying layer or while the polymer material of the underlying layer is in a liquid or molten state to facilitate joining of the two layers. Layer 6070-3 provides each of line 6050 with an enhanced height for enhanced abrasion resistance between the longitudinal ends 6071-1 and 6071-2 of the underlying layer 6070-2. Although illustrated as being centered between ends 6071, layer 6073-3 may have varying lengths and may be situated between ends 6071 at any location where enhanced abrasion resistance, as an example, is to be achieved.

In some implementations, the different layers 6070 are formed from a single polymer material, facilitating a continuous uninterrupted ejection of each of the layers, avoiding extrusion tails. In some implementations, the different layers 6070 may be formed from different polymer compositions or material having different properties upon solidification or curing. For example, layer 6070-1 may be formed from image polymer material that, upon solidification, has a higher degree of elasticity as compared to layer 6070-2 or layer 6070-3, facilitating flexing or bending of the panel 5231 of upper 5030 while one or both of layer 6070-2 or layer 67-3 may be formed from a polymer material that has a greater rigidity or greater abrasion resistance as compared to layer 6070-1.

In implementations, rather than having a uniform thickness, one or more of layers 6070 may have a nonuniform thickness. For example, any of such layers 6070 may have a thickness that tapers to a reduced thickness at one or both of its longitudinal ends. Although each of lines 6050 is illustrated as being composed of three stacked layers 6070, in other implementations, lines 6050 may be composed of a single layer, two layers or greater than three stacked or offset layers.

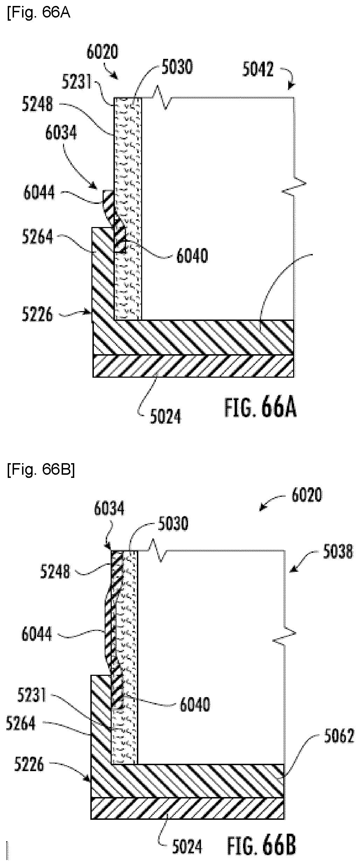

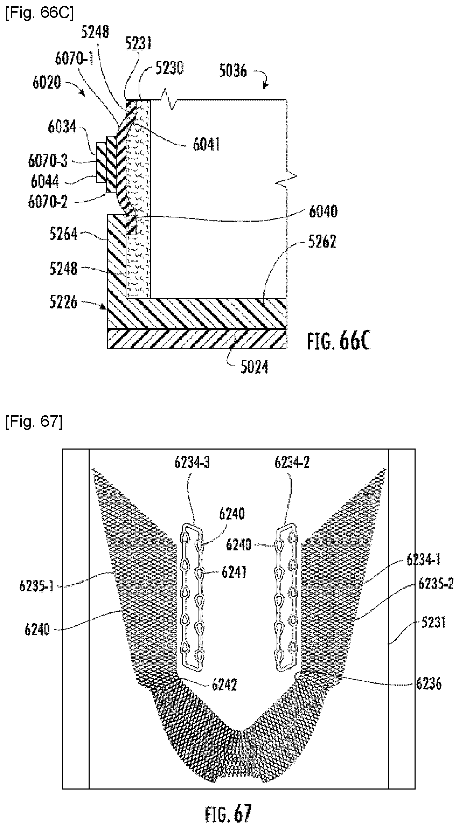

Figure 66A, 66B and 66C are sectional illustrating how different portions of the patterned filament overlay 6034 may have different penetration depths with respect to the outer surface of panel 5231 of upper 5030. Each of such figures schematically illustrates the penetration depth of patterned filament overlay 6034. As shown by Figure 58 and Figures 66A, 66B and 66C, in each of zones 5042, 5038 and 5036, patterned filament overlay 6034 comprises a fully embedded portion 6040 sandwiched between panel 5231 of upper 5030 and outer wall 5264 of midsole 5226. The fully embedded portion 6040 is shown by broken lines in Figure 58. As with fully embedded portion 5240 described above, fully embedded portions 6040 penetrate panel 5231 such that such portions 6040 are flush or below the outer surface of panel 5231, facilitating bonding of a larger surface area of outer wall 5264 directly to the outermost surface of panel 5231.

As further shown by Figure 58 and Figures 66B and 66C, each of layout 6060, 6062 and portions of layout 6064 have an upper end anchoring region 6041 that penetrates panel 5231 so as to extend below the outer surface 5248 of panel 5231. In Figure 58, the enhanced degree of penetration is reflected by the lighter or thinner line widths. In some implementations, the penetration of such that layer 6034 is flush with or recessed below the outer surface 5248 of panel 5231. The enhanced degree of penetration provides an operator and anchor for providing enhanced securement of layer 6034.

As further shown by Figure 58 and Figures 66A, 66B and 66C, layer 6034 comprises an abrasion resistance portion 6044 rising above surface 5248 of panel 5231. With layout 6060, 6062 and 6064, the abrasion resistance portion 6044 extends between fully embedded portion 6240 and anchoring region 6041. The enhanced height layer 6034 in such regions provide enhanced abrasion resistance. As discussed above, in the heel zone 5036, the abrasion resistance portion 6044 is formed from a stack of multiple layers 6074 to provide such portions with a greater height and an enhanced degree of abrasion resistance.

Figure 67 illustrates a single panel 5231 (portions of which are shown in detail) upon which patterned filament overlays 6234-1, 6234-2, 6234-3 (collectively referred to as overlay 6234) have been extruded by the nozzle 28 of extruder 26 during the deposition process described above. Figure 67 illustrates the panel 5231 with the patterned filament overlays 6234 prior to being cut and reshaped for the forming of upper 5030. As shown by Figure 67, patterned filament overlays 6234 may have at least one varying attribute amongst different zones of the upper 5030. The attributes of the patterned filament overlays 6234 may be varied amongst different zones so as to accommodate different performance requirements of different zones as well as different stress and abrasion levels associated with different zones. The at least one varying attribute may comprise one or more attributes, include physical attributes (e.g., layout, thickness, density, penetration and layering) and performance attributes (e.g., abrasion resistance, flexibility, structural support, etc.).

Patterned filament overlay 6234 is formed through the extrusion or deposition of individual filaments or lines of fluid polymer in a continuous fashion onto panel 5231 to form one continuous line having the pattern shown. Patterned filament overlay 6234-1 is similar to patterned filament overlay 60 34 except that overlay 6234-1 is not sandwiched between panel 5231 and portions of midsole 5264. Rather, overlay 6034-and is configured to extend to and about the upper edge of midsole 5264. In other implementations, overlay 6234 may alternatively have a more embedded portion 6040 (described above) for being sandwiched between panel 5231 and the midsole 5264.

Patterned filament overlay 6234-1 has a substantial U-shape , having wings 6235-1, 6235-2 extending on opposite sides of an interior 6236 such that overlay 6234-1 extends around and on opposite sides of the lacing regions of the piece of footwear. The U-shape of patterned filament overlay 6234-1 has outer perimeter regions 6240 which are thicker and which project above panel 5231 by a greater distance to provide enhanced abrasion resistance. Conversely, inner regions 6242 of the U-shape pattern more deeply penetrate panel 5231, especially in regions proximate to the lacing regions of the piece of footwear, in regions adjacent to and along overlays 6234-2 and 6234-3. The greater degree of penetration or impregnation of the polymer in regions 6242 may provide enhanced securement or better anchoring of the upper edge portions of overlay 6234-1 to the panel 5231 forming the upper of the piece of footwear. The enhanced anchoring provides a more robust upper in the lacing regions where the upper may undergo greater levels of stress due to the act of lacing of the piece of footwear.

Patterned filament: overlays 6234-2 and 6234-3 are substantially identical to one another. Overlays 6234-2 and 6234-3 serve as lacing reinforcements and are located within the interior 6236 of overlay 6234-1, adjacent to the opposite interior edges of the two wings 6235 of overlay 6234-1. Each of overlays 6234-2 and 6234-3 comprises a continuous elongated oval, in the shape of a racetrack, with individual spaced rings 6240 along its length, each of the ring 6240 having an interior 6241, wherein openings may be formed in panel 5231 at locations corresponding to the interior 6241, the openings serving as passages through which laces of the piece of footwear may extend. As result, overlay 6234-2 and 6234-3 serve as lacing guide reinforcements. In the example illustrated, pairs of rings 6240 on opposite sides of the racetrack oval cooperate to form reinforcements for opposite sides of an individual eyelets. The overall pattern shown in Figure 67 reduces manufacturing time complexity, informing reinforcements for both the opposite sides of the upper as well as the lacing guides of the piece of footwear.

In other implementations, overlays 6234-2 and 6234-3 may alternatively comprise a single line of polymer material having a single row of rings 6240 that reinforce eyelet openings on one side of such eyelet openings. In some implementations, overlay 6234-2 and 6234-3 may be omitted. In other implementations, overlay 6234-1, 6234-2 and 6234-3 may have other configurations.

Although the present disclosure has been described with reference to example implementations, workers skilled in the art will recognize that changes may be made in form and detail without departing from the scope of the claimed subject matter. For example, although different example implementations may have been described as including features providing benefits, it is contemplated that the described features may be interchanged with one another or alternatively be combined with one another in the described example implementations or in other alternative implementations. Because the technology of the present disclosure is relatively complex, not all changes in the technology are foreseeable. The present disclosure described with reference to the example implementations and set forth in the following claims is manifestly intended to be as broad as possible. For example, unless specifically otherwise noted, the claims reciting a single particular element also encompass a plurality of such particular elements. The terms "first", "second", "third" and so on in the claims merely distinguish different elements and, unless otherwise stated, are not to be specifically associated with a particular order or particular numbering of elements in the disclosure.

## Claims

1. A footwear (210, 310, 5020, 5220, 5420, 5520, 5620, 5720, 6020) comprising:
- a sole (316, 5024, 5026, 5226, 5726);
- an upper (5030), coupled to the sole (316, 5024, 5026, 5226, 5726);
**characterized in that**
the footwear comprises a patterned filament overlay (5034, 5234, 5334, 5534, 6034, 6234) supported by the upper (5030), the patterned filament overlay (5034, 5234, 5334, 5534, 6034, 6234) having at least one varying attribute amongst different zones (5036, 5038, 5040, 5042) of the upper (5030).

2. The footwear (210, 310, 5020, 5220, 5420, 5520, 5620, 5720, 6020) of claim 1, wherein the at least one varying attribute is selected from a group of attributes consisting of: layout (6060, 6062, 6064); thickness; density, penetration and layering.

3. The footwear (210, 310, 5020, 5220, 5420, 5520, 5620, 5720, 6020) of claim 1, wherein the at least one varying attribute comprises layout (6060, 6062, 6064), wherein the upper (5030) comprises a heel zone (5036) and a side zone (5038, 5040, 5042), the patterned filament overlay (5034, 5234, 5334, 5534, 6034, 6234) having a first layout (6060) in the heel zone (5036) and a second layout (6062) in the side zone (5038, 5040, 5042).

4. The footwear (210, 310, 5020, 5220, 5420, 5520, 5620, 5720, 6020) of claim 3, wherein the first layout (6060) comprises intersecting polymer lines and wherein the second layout (6062) comprises non-intersecting polymer lines.

5. The footwear (210, 310, 5020, 5220, 5420, 5520, 5620, 5720, 6020) of claim 1, wherein the at least one varying attribute comprises thickness, wherein the upper (5030) comprises a heel zone (5036) and a side zone (5038, 5040, 5042), the patterned filament overlay (5034, 5234, 5334, 5534, 6034, 6234) having a first thickness in the heel zone (5036) and a second thickness, less than the first thickness, in the side zone (5038, 5040, 5042).

6. The footwear (210, 310, 5020, 5220, 5420, 5520, 5620, 5720, 6020) of claim 1, wherein the at least one varying attribute comprises density, wherein the upper (5030) comprises a heel zone (5036) and a side zone (5038, 5040, 5042), the patterned filament overlay (5034, 5234, 5334, 5534, 6034, 6234) having a first density in the heel zone (5036) and a second density, less than the first density, in the side zone (5038, 5040, 5042).

7. The footwear (210, 310, 5020, 5220, 5420, 5520, 5620, 5720, 6020) of claim 1, wherein the upper (5030) comprises a panel (38, 3112, 3212, 3312, 3412, 5071, 5081, 5091, 5101, 5111, 5121, 5131, 5231) having an outer surface, the upper (5030) having a first zone (5232) where the patterned filament overlay (5034, 5234, 5334, 5534, 6034, 6234) penetrates the outer surface (5084) of the panel (38, 3112, 3212, 3312, 3412, 5071, 5081, 5091, 5101, 5111, 5121, 5131, 5231) by a first depth and a second zone (5233) where the patterned filament overlay (5034, 5234, 5334, 5534, 6034, 6234) penetrates the outer surface of the panel (38, 3112, 3212, 3312, 3412, 5071, 5081, 5091, 5101, 5111, 5121, 5131, 5231) by a second depth less than the first depth.

8. The footwear (210, 310, 5020, 5220, 5420, 5520, 5620, 5720, 6020) of claim 7, wherein the panel (38, 3112, 3212, 3312, 3412, 5071, 5081, 5091, 5101, 5111, 5121, 5131, 5231), comprises a textile.

9. The footwear (210, 310, 5020, 5220, 5420, 5520, 5620, 5720, 6020) of claim 7, and the panel (38, 3112, 3212, 3312, 3412, 5071, 5081, 5091, 5101, 5111, 5121, 5131, 5231) comprises an extruded or molded mesh.

10. The footwear (210, 310, 5020, 5220, 5420, 5520, 5620, 5720, 6020) of claim 7 wherein the sole (316, 5024, 5026, 5226, 5726) overlaps the first zone (5232) and does not overlap the second zone (5233).

11. The footwear (210, 310, 5020, 5220, 5420, 5520, 5620, 5720, 6020) of claim 10, wherein the patterned filament overlay (5034, 5234, 5334, 5534, 6034, 6234) penetrates the outer surface of the panel (38, 3112, 3212, 3312, 3412, 5071, 5081, 5091, 5101, 5111, 5121, 5131, 5231) by a depth that gradually decreases as the patterned filament overlay (5034, 5234, 5334, 5534, 6034, 6234) extends away from the sole (316, 5024, 5026, 5226, 5726).

12. The footwear (210, 310, 5020, 5220, 5420, 5520, 5620, 5720, 6020) of claim 1, wherein the upper (5030) comprises a panel (38, 3112, 3212, 3312, 3412, 5071, 5081, 5091, 5101, 5111, 5121, 5131, 5231) having an outer surface, the upper (5030) having a first zone (5232) where the patterned filament overlay (5034, 5234, 5334, 5534, 6034, 6234) projects above the outer surface in the first zone (5232) by first distance and projects above the outer surface in a second zone (5233) by second distance greater than the first distance.

13. The footwear (210, 310, 5020, 5220, 5420, 5520, 5620, 5720, 6020) of claim 12, wherein the sole (316, 5024, 5026, 5226, 5726) overlaps a first zone (5232) and does not overlap the second zone (5233) and wherein the first distance is less than or equal to zero.

14. The footwear (210, 310, 5020, 5220, 5420, 5520, 5620, 5720, 6020) of claim 1, where the patterned filament overlay (5034, 5234, 5334, 5534, 6034, 6234) comprises an extrusion.

15. The footwear (210, 310, 5020, 5220, 5420, 5520, 5620, 5720, 6020) of claim 1, wherein the upper comprises a perforate panel (38, 3112, 3212, 3312, 3412, 5071, 5081, 5091, 5101, 5111, 5121, 5131, 5231) formed from a thermoplastic polymer and wherein the patterned filament overlay (5034, 5234, 5334, 5534, 6034, 6234) penetrates the perforate panel (38, 3112, 3212, 3312, 3412, 5071, 5081, 5091, 5101, 5111, 5121, 5131, 5231) and is formed from the thermoplastic polymer or another thermoplastic polymer.
